# EUROPÄISCHE PATENTSCHRIFT

(11) **EP 4 248 284 B1**
(45) Veröffentlichungstag und Bekanntmachung des Hinweises auf die Patenterteilung: **01.10.2025**
(21) Anmeldenummer: 21819084.1
(22) Anmeldetag: 19.11.2021
(51) Int. Cl.: G05B 19/042, B60W 30/00, G05B 13/02, G06N 3/04, G06Q 50/04

(54) **VERFAHREN UND SYSTEM ZUM VERARBEITEN VON EINGABEWERTEN**
METHOD AND SYSTEM FOR PROCESSING INPUT VALUES
PROCÉDÉ ET SYSTÈME POUR TRAITER DES VALEURS D'ENTRÉE

(30) Priorität: 19.11.2020 DE 102020130604
(43) Veröffentlichungstag der Anmeldung: 27.09.2023
(73) Patentinhaber: Fraunhofer-Gesellschaft zur Förderung der angewandten Forschung e.V., 80686 München (DE); Universität des Saarlandes, 66123 Saarbrücken (DE)
(72) Erfinder: ZIMMERMANN, Heiko, 66280 Sulzbach (DE); FUHR, Günter, 13187 Berlin (DE); FUHR, Antonie, Berlin 10178 (DE)
(74) Vertreter: Dehns Germany Partnerschaft mbB
(86) Internationale Anmeldenummer: PCT/EP2021/082350
(87) Internationale Veröffentlichungsnummer: WO 2022/106645

(56) Entgegenhaltungen:
- WO-A1-2018/220566
- GB-A- 2 336 227
- US-B1- 9 015 093

## Beschreibung

Die vorliegende Erfindung betrifft ein Gesamtsystem das eine Arbeitsebene und eine Bewertungsebene, die künstlich lernende Systeme sind, aufweist, insbesondere ein darin ausgeführtes Verfahren zum Verarbeiten von Eingabewerten in einer Steuerung einer Maschine.

### Stand der Technik

Künstliche Intelligenz spielt mittlerweile in unzähligen Anwendungsbereichen eine zunehmende Rolle. Darunter wird zunächst jede Automatisierung intelligenten Verhaltens und maschinelles Lernen verstanden. Jedoch sind derartige Systeme üblicherweise für Spezialaufgaben vorgesehen und trainiert. Diese Form künstlicher Intelligenz (KI, oder auch AI, artificial intelligence) wird häufig als "schwache KI" bezeichnet und beruht im Wesentlichen auf der Anwendung von Berechnungen und Algorithmen zur Simulation intelligenten Verhaltens in einem fest bestimmten Bereich. Beispiele dafür sind Systeme, die in der Lage sind, bestimmte Muster zu erkennen, wie etwa Sicherheitssysteme in Fahrzeugen, oder die bestimmte Regeln erlernen und umsetzen können, wie etwa beim Schachspielen. Gleichzeitig sind diese Systeme in anderen Bereichen im Wesentlichen nutzlos und müssen für andere Anwendungen vollständig neu trainiert oder gar mit völlig anderen Ansätzen ausgebildet werden.

Zur praktischen Umsetzung derartiger künstlicher lernender Einheiten werden unter anderem neuronale Netze eingesetzt. Diese Netze bilden in ihrem Grundsatz die Funktionsweise biologischer Neuronen auf abstrakter Ebene nach. Dabei sind mehrere künstliche Neuronen oder Knoten vorhanden, die miteinander verbunden sind und Signale empfangen, verarbeiten und an andere Knoten übertragen können. Für jeden Knoten sind dann beispielsweise Funktionen, Gewichtungen und Schwellwerte festgelegt, die bestimmen, ob und in welcher Stärke ein Signal an einen Knoten weitergegeben wird.

Gewöhnlich werden die Knoten in Ebenen bzw. Schichten betrachtet, so dass jedes neuronale Netz zumindest eine Ausgabeschicht aufweist. Davor können weitere Schichten als sogenannte verborgene Schichten vorliegen, so dass ein mehrschichtiges Netz gebildet wird. Auch die Eingabewerte, auch als Features bezeichnet, können als Schicht betrachtet werden. Die Verbindungen zwischen den Knoten der verschiedenen Schichten werden als Kanten bezeichnet, wobei diese üblicherweise mit einer festen Verarbeitungsrichtung belegt sind. Je nach Netztopologie kann festgelegt sein, welcher Knoten einer Schicht mit welchem Knoten der folgenden Schicht verknüpft ist. Dabei können alle Knoten verbunden sein, aber beispielsweise durch eine erlernte Gewichtung mit dem Wert 0 ein Signal nicht über einen bestimmten Knoten weiter verarbeitet werden.

Die Verarbeitung von Signalen im neuronalen Netz kann durch verschiedene Funktionen beschrieben werden. Im Folgenden wird dieses Prinzip an einem einzelnen Neuron bzw. Knoten eines neuronalen Netzes beschrieben. Aus den mehreren verschiedenen Eingabewerten, die einen Knoten erreichen, wird durch eine Propagierungsfunktion (auch Eingabefunktion) eine Netzeingabe (Netzinput) gebildet. Häufig umfasst diese Propagierungsfunktion eine einfache gewichtete Summe, wobei für jeden Eingabewert eine zugehörige Gewichtung vorgegeben ist. Grundsätzlich sind aber auch andere Propagierungsfunktionen möglich. Dabei können die Gewichtungen als Gewichtsmatrix für das Netz vorgegeben sein.

Auf die so gebildete Netzeingabe eines Knotens wird eine Aktivierungsfunktion angewendet, die abhängig von einem Schwellwert sein kann. Diese Funktion stellt den Zusammenhang zwischen dem Netzinput und dem Aktivitätslevel eines Neurons dar. Es sind verschiedene Aktivierungsfunktionen bekannt, beispielsweise einfache binäre Schwellwertfunktionen, deren Ausgabe damit unterhalb des Schwellwerts Null ist und oberhalb des Schwellwerts die Identität; Sigmoidfunktionen; oder auch stückweise lineare Funktionen mit einer vorgegebenen Steigung. Diese Funktionen werden beim Design eines neuronalen Netzes festgelegt. Das Ergebnis der Aktivierungsfunktion bildet den Aktivierungszustand. Optional kann auch noch eine zusätzliche Outputfunktion oder Ausgabefunktion vorgegeben sein, die auf die Ausgabe der Aktivierungsfunktion angewendet wird und den endgültigen Ausgabewert des Knotens festlegt. Häufig wird hier aber einfach das Ergebnis der Aktivierungsfunktion direkt als Ausgabewert weitergegeben, d.h. als Ausgabefunktion wird die Identität verwendet. Je nach verwendeter Nomenklatur können die Aktivierungsfunktion und die Ausgabefunktion auch als Transferfunktion zusammengefasst werden.

Die Ausgabewerte jedes Knotens werden dann an die nächste Schicht des neuronalen Netzes als Eingabewerte für die jeweiligen Knoten der Schicht weitergegeben, wo die entsprechenden Schritte zur Verarbeitung mit den jeweiligen Funktionen und Gewichten des Knotens wiederholt werden. Je nach Topologie des Netzes können auch rückgerichtete Kanten zu vorherigen Schichten oder zurück in die ausgebende Schicht vorliegen, so dass ein rekurrentes Netz vorliegt.

Die Gewichtungen, mit denen die Eingabewerte jeweils gewichtet werden, können dagegen vom Netz verändert werden und so die Ausgabewerte und Funktionsweise des gesamten Netzes anpassen, was als das "Lernen" eines neuronalen Netzes betrachtet wird.

Dazu wird üblicherweise eine Fehlerrückführung (Backpropagation) im Netz genutzt, d.h. ein Vergleich der Ausgabewerte mit Erwartungswerten und eine Nutzung des Vergleichs zur Anpassung der Eingabewerte mit dem Ziel der Fehlerminimierung. Durch Fehlerrückführung können dann verschiedene Parameter des Netzes entsprechend angepasst werden, beispielsweise die Schrittweite (Lernrate) oder die Gewichte der Eingabewerte an den Knoten. Ebenso können auch die Eingabewerte neu bewertet werden.

Die Netze können dann in einem Trainingsmodus trainiert werden. Entscheidend für die Einsatzmöglichkeiten eines neuronalen Netzes sind auch die verwendeten Lernstrategien. Dabei werden insbesondere die folgenden Varianten unterschieden:
Beim Überwachten Lernen (engl.: supervised learning) wird ein Eingangsmuster bzw. ein Trainingsdatensatz vorgegeben und die Ausgabe des Netzes mit dem erwarteten Wert verglichen.

Das Unüberwachte Lernen (engl.: unsupervised learning) überlässt das Finden der Zusammenhänge oder Regeln dem System, so dass also nur die zu lernenden Muster selbst vorgegeben werden. Eine Zwischenvariante ist das Teilüberwachte Lernen, bei dem auch Datensätze ohne vorgegebene Einordnungen verwendet werden können.

Beim Verstärkenden Lernen (engl.: reinforced learning) oder Q-Lernen wird ein Agent erzeugt, der Belohnungen und Bestrafungen für Aktionen erhalten kann, und der anhand dessen versucht, erhaltene Belohnungen zu maximieren und so sein Verhalten anzupassen.

Eine wesentliche Anwendung von neuronalen Netzen umfasst die Klassifikation von Eingabedaten bzw. Inputs in bestimmte Kategorien oder Klassen, also das Erkennen von Zusammenhängen und Zuordnungen. Dabei können die Klassen auf Basis bekannter Daten trainiert werden und zumindest teilweise vorgegeben sein, oder von einem Netz selbständig erarbeitet bzw. erlernt werden.

Die grundsätzliche Funktionsweise und weitere spezifische Details solcher neuronaler Netze sind im Fach bekannt, beispielsweise aus R. Schwaiger, J. Steinwender, Neuronale Netze programmieren mit Python, Rheinwerk Computing, Bonn 2019. US 9015093 B1 betrifft ein Verfahren zur intelligenten Steuerung mittels hierarchisch geschichteter neuronaler Netze.

Ein universell einsetzbares AI-System, das also nicht auf nur eine Spezialaufgabe trainiert ist, würde zu hochdimensionalen Räumen führen und damit exponentiell ansteigende Trainings- und Test-Datensätze benötigen. Echtzeitreaktionen werden damit schnell unmöglich. Es wird daher generell versucht, die Dimensionalität und Komplexität solcher Systeme zu reduzieren. Dabei werden unterschiedliche Lösungsansätze verfolgt. Beispielsweise kann durch Verknüpfen von Datensätzen, Reduzierung der Freiheitsgrade und/oder durch die Einspeisung von bekanntem Wissen in ein System die Komplexität verringert werden. Als anderer Ansatz können korrelierte Daten bzw. voneinander abhängige Datensätze zumindest teilweise getrennt werden, beispielsweise durch Methoden wie die Hauptkomponentenanalyse (Principal Component Analysis). Durch Anwendung von Filtermethoden auf die Merkmale können Daten eliminiert werden, die beim Training eines Netzes nicht oder negativ auffallen, z.B. durch Anwendung von statistischen Tests wie dem Chi-Quadrat-Test oder anderen. Schließlich kann auch die Auswahl der Trainingsdaten selbst als Optimierungsproblem in einem AI-Netz erfolgen. Dabei werden die Trainingsdaten so kombiniert, dass sie möglichst schnell und gut ein neues Netzwerk trainieren können.

Weiterführende Ansätze umfassen unter anderem sogenannte "Convolutional Neural Networks", die in mindestens einer Schicht eines mehrschichtigen vollständig verbundenen Netzes anstelle einfacher Matrixtransformationen Faltungen anwenden. Dafür ist beispielsweise die sogenannte "Deep-Dream"-Methode insbesondere im Bereich der Bilderkennung bekannt, bei der in einem trainierten Netz die Gewichte optimal belassen werden, aber stattdessen die Eingangswerte (z.B. ein Eingangsbild) als Rückkopplungsschleife abhängig von Ausgabewert modifiziert werden. Damit wird beispielsweise das eingeblendet, was das System zu identifizieren glaubt. Der Name bezieht sich darauf, dass dabei traumartige Bilder entstehen. Auf diese Weise können interne Prozesse des neuronalen Netzes und ihre Richtung nachverfolgt werden.

Dabei ist ersichtlich, dass diese Methoden immer noch große Unterschiede zur menschlichen Intelligenz aufweisen. Zwar können die Datenbanken, Textdateien, Bilder und Audiodateien grundsätzlich damit verglichen werden, wie auch im Gehirn Fakten, Sprache, Sprachlogik, Geräusche, Bilder und Ereignisabläufe abgespeichert und verarbeitet werden; jedoch unterscheidet sich die menschliche Intelligenz beispielsweise wesentlich dadurch, dass sie all diese Daten im Zusammenhang mit Gefühlen und unbewussten "weichen" Kategorisierungen verknüpft.

### Offenbarung der Erfindung

Erfindungsgemäß werden ein Verfahren, das in einer Steuerung einer Maschine ausgeführt wird, zum Verarbeiten von Eingabewerten in einem Gesamtsystem, das eine Arbeitsebene und eine Bewertungsebene, die künstlich lernende Systeme sind, aufweist, und ein entsprechendes System mit den Merkmalen der unabhängigen Patentansprüche vorgeschlagen. Vorteilhafte Ausgestaltungen sind Gegenstand der Unteransprüche sowie der nachfolgenden Beschreibung.

Das in einer Steuerung einer Maschine ausgeführte Verfahren (bzw. Verfahren in einer Steuerung einer Maschine) zum Verarbeiten von Eingabewerten, die durch einen oder mehrere Sensoren erfasste Sensordaten (bzw. erfasste Werte bzw. Messwerte) umfassen, in einem Gesamtsystem, das eine Arbeitsebene und eine Bewertungsebene, die künstlich lernende Systeme sind, aufweist, umfasst
a) Eingeben erster Eingabewerte an die Arbeitsebene und Bestimmen erster Ausgabewerte aus den ersten Eingabewerten durch die Arbeitsebene, entsprechend einer ersten Klassifizierung;
b) Bilden von ersten Situationsdaten basierend auf den ersten Ausgabewerten;
c) Eingeben der ersten Situationsdaten an die Bewertungsebene und Bestimmen erster Bewertungen durch die Bewertungsebene, die anzeigen, ob oder zu welchem Grad die ersten Situationsdaten vorgegebene erste Bedingungen erfüllen;
d) Beeinflussen des Bestimmens der ersten Ausgabewerte in der Arbeitsebene basierend auf den ersten Bewertungen;
   wobei die Schritte a) - d) wiederholt durchgeführt werden;
e) Eingeben zweiter Eingabewerte an die Arbeitsebene und Bestimmen zweiter Ausgabewerte aus den zweiten Eingabewerten durch die Arbeitsebene, entsprechend einer zweiten Klassifizierung, wobei das Bestimmen der zweiten Ausgabewerte durch die ersten Ausgabewerte beeinflusst wird;
f) Bilden von zweiten Situationsdaten basierend auf den zweiten Ausgabewerten;
g) Eingeben der zweiten Situationsdaten an die Bewertungsebene und Bestimmen zweiter Bewertungen durch die Bewertungsebene, die anzeigen, ob oder zu welchem Grad die zweiten Situationsdaten vorgegebene zweite Bedingungen erfüllen, wobei das Bestimmen der zweiten Bewertungen durch die ersten Bewertungen beeinflusst wird;
h) Beeinflussen des Bestimmens der zweiten Ausgabewerte in der Arbeitsebene basierend auf den zweiten Bewertungen;
wobei die Schritte e) - h) wiederholt durchgeführt werden;
wobei die ersten und/oder die zweiten Ausgabewerte als Gesamtausgabewerte des Gesamtsystems verwendet werden, wobei die Gesamtausgabewerte als Steuerungsparameter und/oder Zustandsparameter der Maschine verwendet werden.

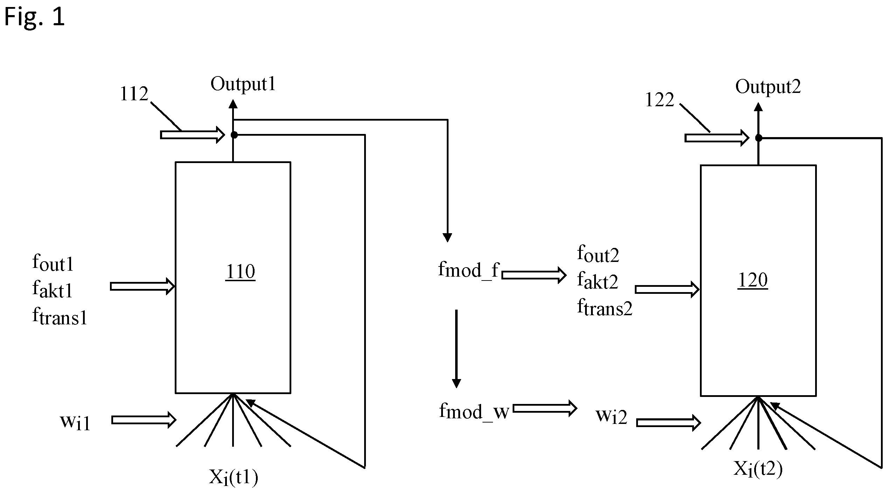

Insbesondere können "künstlich lernende Systeme" im Sinne dieser Anmeldung zwei (oder mehr) künstlich lernende Einheiten umfassen, die miteinander gekoppelt sind, vgl. die Beschreibung der Figuren 1 bis 6. Eine "künstlich lernende Einheit" kann als Einheit betrachtet werden, die einen auf maschinellem Lernen basierenden Algorithmus implementiert, z.B. ein künstliches neuronales Netz. Ein auf maschinellem Lernen basierender Algorithmus kann mittels Trainingsdaten trainiert werden, ein Modell zu bilden, um basierend auf Eingabewerten Vorhersagen oder Entscheidungen zu treffen, die in Form von Ausgabewerten ausgegeben werden. Die künstlich lernenden Einheiten der Arbeitsebene und Bewertungsebene können entsprechend jeweils trainiert sein, die ersten/zweiten Ausgabewerte aus den ersten/zweiten Eingabewerten bzw. die ersten/zweiten Bewertungen aus den ersten/zweiten Situationsdaten zu gewinnen. Die Kopplung der künstlich lernenden Einheiten innerhalb eines künstlich lernenden Systems ist insbesondere so ausgeführt, dass die erste Einheit bzw. deren Ausgabewerte die zweite Einheit bzw. deren Verarbeitung von Eingabewerten beeinflusst, aber die zweite Einheit die erste Einheit nicht beeinflusst.

Künstlich lernende Systeme bzw. Einheiten können als Computerprogramme implementiert sein, die in Recheneinheiten (z.B. Prozessoren, Computer, Serversystemen, oder auch Beschleunigerkarten) ausgeführt werden. Die künstlich lernenden Systeme bzw. Einheiten können auch zumindest teilweise als Hardware realisiert sein, etwa als FPGA (engl.: Field Programmable Gate Array). Es ist insbesondere auch möglich, die künstlich lernenden Systeme durch zusammengeschaltete künstlich lernende Einheiten zu realisieren, die auch in verschiedenen Recheneinheiten ausgeführt werden können.

Bei der Maschine kann es sich beispielsweise um eine industrielle Maschine, eine industrielle Anlage (System zusammenwirkender Maschinen), eine mobile Arbeitsmaschine, und/oder ein Fahrzeug, insbesondere eine autonomes oder teilautonomes Fahrzeug, handeln. Die Steuerung kann eine oder mehrere Steuereinheiten bzw. Recheneinheiten umfassen (z.B. in einem oder mehreren Steuergeräten der Maschine). Insbesondere kann vorgesehen sein, dass die Arbeitsebene und die Bewertungsebene in verschiedenen, voneinander getrennten Recheneinheiten (z.B. verschiedenen Steuergeräten) implementiert sind. Jede Steuereinheit bzw. Recheneinheiten kann einen oder mehrere Prozessoren, flüchtigen Speicher, nichtflüchtigen Speicher, Kommunikationsschnittstellen (zur Datenkommunikation mit Sensoren, mit Maschinenkomponenten, mit anderen Steuereinheiten, oder mit externen Geräten) und/oder Ähnliches umfassen. Auch Hardware-Beschleuniger-Elemente (KI-Beschleuniger, zur Beschleunigung von Rechenschritten der künstlich lernenden Systeme bzw. der künstlich lernenden Einheiten) können in den Steuereinheiten vorgesehen sein. Im nichtflüchtigen Speicher können insbesondere Programme, mit denen das Verfahren implementiert wird, und/oder Daten, die bei der Implementierung des Verfahrens anfallen, gespeichert sein bzw. werden.

Es können einerseits Sensoren (vorzugsweise an der Maschine montiert) vorgesehen sein, die Eigenschaften bzw. Größen der Maschine bzw. von Komponenten der Maschine bestimmen bzw. messen, z.B. Drucksensoren (etwa um den Druck einer Hydraulikflüssigkeit zu bestimmen), Strom- und oder Spannungssensoren (etwa an elektrisch betätigten Aktuatoren oder elektrischen Motoren/Generatoren), Temperatursensoren, Geschwindigkeitssensoren, Drehzahlsensoren, Lichtsensoren, Positionssensoren, Sensoren, die die Stellung von Aktuatoren bestimmen, oder Ähnliches. Andererseits können zusätzlich oder alternativ Sensoren (vorzugsweise an der Maschine) vorgesehen sein, die Eigenschaften bzw. Größen bestimmen bzw. messen, die die Umgebung der Maschine betreffen, z.B. Kameras, Radar-, Lidar- oder Infrarotsensoren, Mikrophone oder Ähnliches. Neben Sensordaten können die Eingabewerte noch weitere Daten bzw. Werte umfassen, z.B. Benutzereingaben, von anderen Geräten übermittelte Daten, Anforderung oder Vorgaben, frühere Werte der Steuerungsparameter bzw. Zustandsparameter, oder Ähnliches.

Der Begriff "Steuerparameter" soll Parameter bzw. Größen bezeichnen, mit denen die Maschine gesteuert wird, z.B. Parameter/Größen basierend auf denen Komponenten der Maschine angesteuert werden. Der Begriff "Zustandsparameter" bezieht sich auf Parameter, die einen Zustand der Maschine anzeigen, z.B. welcher von einer Vielzahl von möglichen Betriebszuständen vorliegt, ob ein Gefahrenzustand vorliegt, oder ob die Maschine korrekt funktioniert oder ob ein Fehlerzustand vorliegt.

Das Beeinflussen des Bestimmens der ersten bzw. zweiten Ausgabewerte (Schritt d) bzw. h)) durch die ersten bzw. zweiten Bewertungen bezieht sich auf die jeweilig nächste Wiederholung des Bestimmens erster bzw. zweiter Ausgabewerte aus den ersten bzw. zweiten Eingabewerten, d.h. auf die nächste Wiederholung der Schritte a)-d) bzw. e)-h). Bei der ersten Wiederholung erfolgt insbesondere noch keine Beeinflussung des Bestimmens der ersten bzw. zweiten Ausgabewerte. Dies kann beispielsweise realisiert werden, indem eine Initialisierung durch neutrale erste bzw. zweite Bewertungen erfolgt.

Die Eingabewerte können während der Wiederholungen der Schritte a)-d) bzw. e)-h) konstant bleiben können oder veränderlich sein können, wobei auch die gleichzeitige Verwendung von beidem möglich ist. Etwa können Sensordaten (Messwerte), die mit einer relativ hohen Rate bestimmt werden, während der Wiederholungen zumindest leicht ändern, z.B. eines Stromstärken-, Spannungs-, Temperatur- oder Geschwindigkeitssensors. Bei großen Änderungen, z.B. größer als vorgegebene Schwellen, kann vom Vorliegen einer neuen Situation ausgegangen werden (wenn eine neue Situation vorliegt, können zunächst die ersten Ausgabewerte als Gesamtausgabewerte verwendet werden und anschließend, z.B. nach einer gewissen Zeit oder wenn eine andere Bedingung erfüllt ist, können die zweiten Ausgabewerte als Gesamtausgabewerte verwendet werden). Andere Sensordaten können wiederum konstant bleiben, z.B. einer Kamera, wobei aufgenommene Bilder ausgewertet werden, die mit einer relativ niedrigen Rate (etwa 30, 60 oder < 100 Hz) erfasst werden. In diesem Fall kann eine (erste/zweite) Zeitspanne, die für die Wiederholungen maximal zur Verfügung steht, entsprechend dieser niedrigen Rate gewählt werden. Werden beispielsweise Bilder mit einer Frequenz von 30 Hz erfasst, was einem Zeitabstand zwischen zwei aufeinanderfolgenden Bildern von ca. 33 ms entspricht, kann die Zeitspanne kleiner als 33 ms gewählt werden, z.B. 30 ms, so dass in jeder Zeitspanne ein neu erfasstes Bild ausgewertet wird. Werden gleichzeitig mit höherer Frequenz erfasste Daten als Eingabewerte verwendet, so können sich diese während dieser Zeitspanne (z.B. 30 ms) ändern. Hierbei wird davon ausgegangen, dass diese Änderung relativ gering ist, so dass keine grundlegend neue Situation entsteht.

Die Eingabewerte können insbesondere auch zeitabhängig sein, beispielsweise könnten die Eingabewerte Zeitreihen abgetasteter Signale sein. Es ist also möglich, dass die Eingabewerte, die an die zweite Arbeitseinheit eingegeben werden, sich aufgrund einer solchen Zeitabhängigkeit von den (früher) an die erste Arbeitseinheit eingegebenen Eingabewerte (in ihrem aktuellen) unterscheiden, oder, dass im weiteren Ablauf des Verfahrens, wenn die Eingabewerte von einer Arbeitseinheit wiederholt verwendet werden, diese eine Arbeitseinheit unterschiedliche aktuelle Eingabewerte verarbeitet. Der Einfachheit halber wird jedoch immer auf "Eingabewerte" Bezug genommen, ohne eine eventuelle Zeitabhängigkeit explizit zu erwähnen.

Die ersten und/oder zweiten Bedingungen können rein technischer Natur sein. Wird z.B. das Verfahren in einer Maschinensteuerung verwendet und stellen die Gesamtausgabewerte Steuerungsparameter, etwa für einen Motor, dar, könnte eine Bedingung darin bestehen, dass die Steuerungsparameter innerhalb technisch vorgegebener Bereiche liegen müssen, etwa unterhalb einer maximalen Drehzahl des angesteuerten Motors.

Insbesondere können die Bedingungen zumindest teilweise auch nichttechnischer Natur sein. Dies kann moralisch-ethische Gesichtspunkte oder wirtschaftliche Gesichtspunkte betreffen.

Moralisch-ethische Gesichtspunkte sind beispielsweise für ein autonomes Fahrzeug, in dem ein künstlich lernendes System als Steuerungssystem verwendet wird, relevant. Stellt dieses Steuerungssystem etwa fest, z.B. anhand von Kameraaufnahmen oder Lidar-Aufnahmen, die vom autonomen Fahrzeug erfasst und vom Steuerungssystem ausgewertet werden, dass eine Kollision mit einem anderen Fahrzeug selbst bei Vollbremsung ohne Lenkkorrektur nicht mehr vermieden werden kann, wird es verschiedene mögliche Lenkkorrekturen bestimmen, mit denen die Kollision vermieden werden kann. Eine mögliche Lenkkorrektur könnte z.B. zur Gefährdung eines Fußgängers führen, während eine andere mögliche Lenkkorrektur zu einer Kollision mit einer Mauer führen könnte. Eine der ersten Bedingungen könnte sein, dass Menschenleben nicht direkt gefährdet werden sollen, aufgrund dieser Bedingung kann die Lenkbewegung, die zur Gefährdung des Fußgängers führt, ausgeschlossen bzw. relativ zu den anderen Lösungen unterdrückt werden. Eine solche grundlegende Bewertung kann sich im Zusammenspiel der ersten Ausgabewerte mit den ersten Bewertungen ergeben. Auch bei den beiden in diesem Beispiel verbleibenden Möglichkeiten (keine Lenkkorrektur und Kollision mit dem anderen Fahrzeug, Lenkkorrektur und Kollision mit der Mauer) können moralisch-ethische Gesichtspunkte eine Rolle spielen, da z.B. vermieden werden sollte andere Fahrzeuge und deren Insassen zu gefährden. Dies wäre in diesem Beispiel eine mögliche zweite Bedingung, die z.B. für die genauere Analyse, auf der die zweiten Ausgabewerte basiert, besteht. In diesem Beispiel stellt die erste Bedingung eine absolute Erwägung dar, während die zweite Bedingung eine relative Erwägung darstellt.

Solche moralisch-ethischen oder wirtschaftlichen Erwägungen können auf geeignete Weise als Bedingungen kodifiziert werden, z.B. als Kontrakte, die bestimmte Abwägungen in Form von automatisch ablaufenden Programmen durchführen. In diesem Sinne stellen die Bedingungen gewissermaßen Moralkontrakte dar.

Bei den Bedingungen handelt es sich um "normative Kodizes", also anzustrebende, aber nicht in jedem Fall erreichbare Regeln.

Die Bedingungen sind also keine absoluten Bedingungen, die in jedem Fall einzuhalten sind. Entsprechend ist die Gesamtausgabe durch die Arbeitsebene bestimmt, wobei durch die Beeinflussung der Arbeitsebene durch die Bewertungsebene für jeweilige Eingabewerte die Gesamtausgabe so bestimmt werden, dass die Bedingungen bestmöglich eingehalten werden.

Die Erfindung ermöglicht es also, Gesichtspunkte, die nicht unmittelbar technischer Natur sind, in technischen Systemen, die durch ein erfindungsgemäßes Verfahren zur Verarbeitung von Eingabewerten gesteuert oder überwacht werden, zu berücksichtigen.

Ein Beispiel für wirtschaftliche Gesichtspunkte ist die Verwendung des Systems in einer Maschinensteuerung in einer Produktionsanlage, einerseits möglichst schnell möglichst viel Produkte produziert werden sollen (also hohe Einnahmen generiert werden sollen), was aber andererseits zu höherem Verschleiß führt. Im Prinzip ist dies also eine Mischung aus wirtschaftlichen und technischen Erwägungen.

Die Schritte a) - d) werden wiederholt durchgeführt, bevorzugt bis eine vorgegebene erste Zeitspanne abgelaufen ist und/oder sich die ersten Ausgabewerte zwischen aufeinanderfolgenden Wiederholungen innerhalb vorgegebener erster Toleranzen nicht mehr ändern und/oder die ersten Bewertungen anzeigen, dass die ersten Bedingungen zumindest zu einem gewissen Grad erfüllt sind, wobei bevorzugt die ersten Ausgabewerte als Gesamtausgabewerte verwendet werden, wenn diese wiederholte Durchführung abgeschlossen ist.

Die Schritte e) - h) werden wiederholt durchgeführt, bevorzugt bis eine vorgegebene zweite Zeitspanne abgelaufen ist und/oder sich die zweiten Ausgabewerte zwischen aufeinanderfolgenden Wiederholungen innerhalb vorgegebener zweiter Toleranzen nicht mehr ändern und/oder die zweiten Bewertungen anzeigen, dass die zweiten Bedingungen zumindest zu einem gewissen Grad erfüllt sind; wobei bevorzugt die zweiten Ausgabewerte als Gesamtausgabewerte verwendet werden, wenn diese wiederholte Durchführung abgeschlossen ist.

Vorzugsweise umfasst das Verfahren ein Speichern, in einem Gesamtabfolgespeicher, von Gesamtabfolgen von Gesamtsätzen, die jeweils einander entsprechende Eingabewerte und/oder erste Ausgabewerte und/oder erste Situationsdaten und/oder erste Bewertungen und/oder zweite Ausgabewerte und/oder zweite Situationsdaten und/oder zweite Bewertungen umfassen; wobei bevorzugt die Gesamtsätze und/oder die in den Gesamtsätzen umfassten Werte bzw. Daten mit jeweiligen Zeitinformationen und oder einer Nummerierung versehen werden.

Bevorzugt umfasst das Verfahren ein Ergänzen der ersten und/oder zweiten Bedingungen, so dass für erste bzw. zweite Situationsdaten, für die die ersten bzw. zweiten Bedingungen vor der Ergänzung nicht erfüllt sind, die ergänzten ersten bzw. zweiten Bedingungen erfüllt oder zumindest zu einem gewissen Grad erfüllt sind; wobei bevorzugt nur die zweiten Bedingungen geändert werden und die ersten Bedingungen unverändert bleiben.

Bevorzugt, wenn die Wiederholung der Schritte e) - h) abgebrochen wird, weil die zweite Zeitspanne abgelaufen ist oder, weiter bevorzugt, weil sich die zweiten Ausgabewerte innerhalb der zweiten Toleranzen nicht mehr ändern, werden die zweiten Bedingungen ergänzt, so dass die bei Abbruch vorliegenden Situationsdaten die ergänzten zweiten Bedingungen erfüllen. Bevorzugt erfolgt das Ergänzen der ersten und/oder zweiten Bedingungen basierend auf gespeicherten Gesamtabfolgen, für die die ersten bzw. zweiten Bedingungen nicht (oder nicht zu einem gewissen Grad) erfüllt werden konnten.

Bevorzugt umfasst das Gesamtsystem eine Projektionsebene, wobei das Bilden der ersten und/oder der zweiten Situationsdaten durch die Projektionsebene erfolgt.

Bevorzugt gilt, dass die zweite Klassifizierung wenigstens eine Klasse der ersten Klassifizierung in mehrere Unterklassen klassifiziert und/oder dass für wenigstens eine der ersten Bedingungen diese eine erste Bedingung durch mehrere der zweiten Bedingungen impliziert ist.

Bevorzugt sind die ersten Bedingungen in Form von Regeln gegeben und die zweiten Bedingungen in Form von Regel-Klassifizierungen gegeben; wobei jeder Regel eine Regel-Klassifizierung zugeordnet ist, die eine Untergliederung, insbesondere in mehrere Ebenen, der jeweiligen Regel darstellt; wobei bevorzugt Speicher vorgesehen sind, in denen die Regeln und die Regel-Klassifizierungen gespeichert werden; wobei weiter bevorzugt die Regel-Klassifizierungen in Ebenen untergliedert sind, die mittels einer Blockchain verknüpft sind, wobei die Regeln und/oder Regel-Klassifizierungen jeweils in Form eines Smart-Contracts implementiert sind und/oder wobei, gegebenenfalls beim Ergänzen der zweiten Bedingungen eine weitere Ebene der Untergliederung hinzugefügt wird.

Die Arbeitsebene ist bevorzugt so ausgebildet, dass das Bestimmen der ersten Ausgabewerte in Schritt a) einen kürzeren Zeitraum und das Bestimmen der zweiten Ausgabewerte in Schritt e) einen längeren Zeitraum benötigt; und/oder wobei die Bewertungsebene so ausgebildet ist, dass das Bestimmen der ersten Bewertungen in Schritt c) einen kürzeren Zeitraum und das Bestimmen der zweiten Bewertungen in Schritt g) einen längeren Zeitraum benötigt; wobei in beiden Fällen jeweils bevorzugt der längere Zeitraum um mindestens einen Faktor 2, insbesondere um mindestens einen Faktor 5, länger ist als der kürzere Zeitraum.

Vorzugsweise sind die ersten und zweiten Eingabewerte als zeitkontinuierliche Eingangssignale oder als zeitdiskrete Zeitreihen gegeben, wobei weiter bevorzugt die ersten und die zweiten Eingabewerte ganz oder teilweise identisch sind.

Die Arbeitsebene umfasst bevorzugt eine erste und eine zweite künstlich lernende Arbeitseinheit; wobei die erste künstlich lernende Arbeitseinheit eingerichtet ist, die ersten Eingabewerte zu empfangen und die ersten Ausgabewerte zu bestimmen; wobei die zweite künstlich lernende Arbeitseinheit eingerichtet ist, die zweiten Eingabewerte zu empfangen und die zweiten Ausgabewerte zu bestimmen; und wobei in der Arbeitsebene eine oder mehrere erste Modulationsfunktionen auf Grundlage der ersten Ausgabewerte und/oder daraus abgeleiteter Werte gebildet werden, wobei die gebildeten einen oder mehreren ersten Modulationsfunktionen auf einen oder mehrere Parameter der zweiten künstlich lernenden Arbeitseinheit angewendet werden, wobei die ein oder mehreren Parameter die Verarbeitung von Eingabewerten und das Gewinnen von Ausgabewerten in der zweiten künstlich lernenden Arbeitseinheit beeinflussen.

Situationsdaten können im einfachsten Fall beispielsweise die jeweiligen Ausgabewerte selbst sein. Es können erste bzw. zweite Situationsdaten in Abhängigkeit der innerhalb der aus der ersten und der zweiten Arbeitseinheit gebildeten Arbeitsebene vorliegenden Dominanz gebildet werden. D.h. dominiert die erste Arbeitseinheit, werden erste Situationsdaten auf Grundlage zumindest der ersten Ausgabewerte der ersten Arbeitseinheit gebildet (z.B. die Ausgabewerte der ersten Arbeitseinheit und/oder daraus abgeleitete Werte als Situationsdaten verwendet); dominiert andererseits die zweite Arbeitseinheit, werden zweite Situationsdaten auf Grundlage zumindest der zweite Arbeitseinheit gebildet (z.B. die Ausgabewerte der zweite Arbeitseinheit und/oder daraus abgeleitete Werte als Situationsdaten verwendet).

Bevorzugt gilt, dass die ersten Bewertungen und/oder daraus abgeleitete Werte als Bewertungs-Eingabewerte der ersten künstlich lernenden Arbeitseinheit verwendet werden; und/oder dass ein oder mehrere zweite Modulationsfunktionen auf Grundlage der ersten Bewertungen und/oder daraus abgeleiteter Werte gebildet werden, wobei die gebildeten einen oder mehreren zweiten Modulationsfunktionen auf einen oder mehrere Parameter der ersten künstlich lernenden Arbeitseinheit angewendet werden, wobei die ein oder mehreren Parameter die Verarbeitung von Eingabewerten und das Gewinnen von Ausgabewerten in der ersten künstlich lernenden Arbeitseinheit beeinflussen; und/oder dass die zweiten Bewertungen und/oder daraus abgeleitete Werte als Bewertungs-Eingabewerte der zweiten künstlich lernenden Arbeitseinheit verwendet werden.

Die Bewertungs-Eingabewerte stellen einen Teil der Eingabewerte dar und sind zusätzliche Eingabewerte zu den zu analysierenden Eingabewerten, so dass die ersten Ausgabewerte entsprechend geändert werden können. Vor dem ersten Ausführen von Schritt a) und wenn sich die Eingabewerte wesentlich ändern, was ein Hinweis darauf ist, dass neue Situation vorliegt, können die ersten Bewertungen so initialisiert werden, dass diese anzeigen, dass alle erste Bedingungen erfüllt sind.

Die Bewertungsebene umfasst bevorzugt eine erste und eine zweite künstlich lernende Bewertungseinheit; wobei die erste künstlich lernende Bewertungseinheit eingerichtet ist, die ersten Situationsdaten zu empfangen und die ersten Bewertungen zu bestimmen; wobei die zweite künstlich lernende Bewertungseinheit eingerichtet ist, die zweiten Situationsdaten zu empfangen und die zweiten Bewertungen zu bestimmen; und wobei in der Bewertungsebene eine oder mehrere dritte Modulationsfunktionen auf Grundlage der ersten Bewertungen und/oder daraus abgeleiteter Werte gebildet werden, wobei die gebildeten einen oder mehreren zweiten Modulationsfunktionen auf einen oder mehrere Parameter der zweiten künstlich lernenden Bewertungseinheit angewendet werden, wobei die ein oder mehreren Parameter die Verarbeitung von Eingabewerten und das Gewinnen von Ausgabewerten in der zweiten künstlich lernenden Bewertungseinheit beeinflussen.

Das Verfahren umfasst bevorzugt ein Speichern, in einem ersten Abfolgespeicher, einer ersten Bewertungsabfolge von ersten Bewertungssätzen, die Eingabewerte der ersten Bewertungseinheit und zugehörige erste Bewertungen umfassen, wobei die ersten Bewertungssätze insbesondere mit jeweiligen Zeitinformationen und/oder einer Nummerierung versehen werden; und/oder ein Speichern, in einem zweiten Abfolgespeicher, einer zweiten Bewertungsabfolge von zweiten Bewertungssätzen, die Eingabewerte der zweiten Bewertungseinheit und zugehörige zweite Bewertungen umfassen, wobei die zweiten Bewertungssätze insbesondere mit jeweiligen Zeitinformationen und/oder einer Nummerierung versehen werden; wobei weiter bevorzugt das Bestimmen der ersten und/oder der zweiten Bewertungen unter Berücksichtigung der gespeicherten ersten bzw. zweiten Bewertungsabfolgen erfolgt.

Das Speichern der ersten/zweiten Bewertungsabfolgen ermöglicht es, die "Entscheidungen" der Bewertungseinheiten nachzuvollziehen und gegebenenfalls, etwa falls diese nicht wie gewünscht funktionieren, ein weiteres Training unter Verwendung der Bewertungsabfolgen durchzuführen.

Vorzugsweise erfolgt das Speichern in kryptographisch abgesicherter Form; wobei bevorzugt jeweils eine Blockchain verwendet wird, wobei Blöcke der jeweiligen Blockchain wenigstens einen der ersten Bewertungssätze, der zweiten Bewertungssätze bzw. der Gesamtsätze enthalten.

Bevorzugt umfasst das Verfahren: ein Empfangen Ausgabewerten eines anderen Systems; ein Bilden von ersten und/oder zweiten Situationsdaten aus den empfangenen Ausgabewerten; ein Bestimmen von ersten und/oder zweiten Bewertungen durch die Bewertungsebene basierend auf den aus den empfangenen Ausgabewerten gebildeten ersten bzw. zweiten Situationsdaten; ein Feststellen, dass das andere System kompatibel ist, wenn die bestimmten ersten und/oder zweiten Bewertungen anzeigen, dass die ersten bzw. zweiten Bedingungen erfüllt sind.

Systeme, deren Bewertungseinheiten im Allgemeinen verschiedene Bedingungen prüfen, werden hier als "kompatibel" bezeichnet, wenn sich die Systeme in ihren Bewertungen nicht widersprechen, d.h. dass Eingangswerte(Situationsdaten) der Bewertungseinheiten, die eines der Systeme als im Einklang mit seinen Bedingungen stehend klassifiziert vom anderen System nicht als unzulässig im Sinne seiner (anderen) Bedingungen klassifiziert wird, wobei gegebenenfalls Toleranzen berücksichtigt werden, insbesondere im Falle gradueller Bewertungen.

Ein erfindungsgemäßes System umfasst eine Arbeitsebene und eine Bewertungsebene und ist dazu eingerichtet, ein erfindungsgemäßes Verfahren durchzuführen; wobei die Arbeitsebene eingerichtet ist, die Eingabewerte zu empfangen und wobei bevorzugt die Bewertungsebene nicht in der Lage ist, die Eingabewerte zu empfangen.

Die Arbeitsebene und die Bewertungsebene sind bevorzugt in jeweils wenigstens einer Recheneinheit (als Hardware und/oder Computerprogramm) implementiert, wobei weiter bevorzugt die wenigstens eine Recheneinheit, in der die Arbeitsebene implementiert ist, verschieden, insbesondere getrennt, von der wenigstens einen Recheneinheit ist, in der die Bewertungsebene implementiert ist. Umfasst die jeweilige wenigstens eine Recheneinheit, in der die Arbeitsebene bzw. die Bewertungsebene implementiert ist, mehrere Recheneinheiten, kann auch von einem jeweiligen Rechensystem gesprochen werden. Die jeweiligen wenigstens eine Recheneinheiten (bzw. Rechensysteme) sind über entsprechende (drahtgebundene und/oder drahtlose) Schnittstellen zum Datenaustausch miteinander verbunden. Arbeitsebene und Bewertungsebene können beispielsweise in verschiedenen Steuergeräten (Recheneinheiten bzw. Rechensystem) implementiert sein. Auch verschiedene Mobilfunkgeräte sind denkbar. Ebenso ist möglich, dass die Arbeitsebene durch ein in der Maschine fest installiertes Steuergerät (Recheneinheit/Rechensystem) implementiert wird und die Bewertungsebene in einer mobilen Recheneinheit (z.B. Mobilfunkgerät) implementiert ist.

Das System umfasst bevorzugt eine Projektionsebene und/oder einen Gesamtabfolgespeicher.

Vorzugsweise umfasst im System die Arbeitsebene eine erste und eine zweite künstlich lernende Arbeitseinheit die Bewertungsebene eine erste und eine zweite künstlich lernende Bewertungseinheit; wobei die künstlich lernenden Arbeitseinheiten und/oder Bewertungseinheiten bevorzugt jeweils ein neuronales Netz mit einer Vielzahl von Knoten umfassen, wobei weiter bevorzugt der ein oder mehrere Parameter jeweils mindestens eines der folgenden ist: eine Gewichtung für einen Knoten des neuronalen Netzes, eine Aktivierungsfunktion eines Knotens, eine Ausgabefunktion eines Knotens, eine Propagierungsfunktion eines Knotens.

Vorzugsweise ist jedem von der ersten Arbeitseinheit, der zweiten Arbeitseinheit, der ersten Bewertungseinheit und der zweiten Bewertungseinheit ein Klassifikationsspeicher zugeordnet, wobei die erste Arbeitseinheit, die zweite Arbeitseinheit, die erste Bewertungseinheit und die zweite Bewertungseinheit dazu eingerichtet sind, bei der Erzeugung der Ausgabewerte bzw. Bewertungen eine Einordnung der Eingabewerte bzw. Situationsdaten in ein oder mehrere Klassen vorzunehmen, welche in dem jeweiligen Klassifikationsspeicher gespeichert sind, wobei die Klassen jeweils in einer oder mehreren abhängigen Ebenen strukturiert sind; und wobei bevorzugt eine Anzahl der Klassen und/oder der Ebenen in einem Klassifikationsspeicher der ersten Arbeitseinheit und/oder der ersten Bewertungseinheit geringer ist als eine Anzahl der Klassen und/oder der Ebenen in einem Klassifikationsspeicher der zweiten Arbeitseinheit, wobei weiter bevorzugt eine Anzahl der Klassen und/oder der Ebenen in einem Klassifikationsspeicher der zweiten Bewertungseinheit größer ist als die Anzahl der Klassen und/oder der Ebenen in dem Klassifikationsspeicher der ersten Bewertungseinheit.

Bevorzugt sind in dem System die erste und die zweite künstlich lernende Arbeitseinheit als Hardware und/oder Computerprogramm in einer ersten bzw. zweiten Recheneinheit implementiert und/oder werden darin ausgeführt, wobei die erste und die zweite Recheneinheit miteinander durch eine erste Schnittstelle verbunden sind; wobei gegebenenfalls die erste Schnittstelle eingerichtet ist, die eine oder mehreren ersten Modulationsfunktionen zu bilden. Unabhängig davon sind bevorzugt in dem System die erste und die zweite künstlich lernende Bewertungseinheit als Hardware und/oder Computerprogramm in einer dritten bzw. vierten Recheneinheit implementiert sind und/oder werden darin ausgeführt, wobei die dritte und die vierte Recheneinheit miteinander durch eine dritte Schnittstelle verbunden sind; wobei gegebenenfalls die dritte Schnittstelle eingerichtet ist, die eine oder mehreren dritten Modulationsfunktionen zu bilden. Vorzugsweise sind die dritte Recheneinheit und die erste Recheneinheit miteinander durch eine zweite Schnittstelle verbunden; wobei gegebenenfalls die zweite Schnittstelle eingerichtet ist, die eine oder mehreren zweiten Modulationsfunktionen zu bilden. Die erste, zweite, dritte und/oder vierte Recheneinheit können ganz oder teilweise voneinander verschieden (voneinander getrennt) sein. Die oben genannte wenigstens eine Recheneinheit, in der die Arbeitsebene implementiert ist, umfasst insbesondere die erste und die zweite Recheneinheit, d.h. die erste und die zweite Recheneinheit können als Rechensystem angesehen werden, in dem die Arbeitsebene implementiert ist. Ebenso umfasst die oben genannte wenigstens eine Recheneinheit, in der die Bewertungsebene implementiert ist, insbesondere die dritte und die vierte Recheneinheit, d.h. die. dritte und die vierte Recheneinheit können als Rechensystem angesehen werden, in dem die Bewertungsebene implementiert ist. Hierbei ist auch denkbar, dass die erste eine von der zweiten Recheneinheit verschiedene (getrennte) Recheneinheit ist und/oder dass die dritte eine von der vierten Recheneinheit verschiedene (getrennte) Recheneinheit ist.

Bevorzugt ist wenigstens einer, bevorzugt allen Recheneinheiten ein Speicher zugeordnet, der mit der jeweiligen Recheneinheit verbunden ist oder in dieser umfasst ist; wobei weiter bevorzugt der der ersten Recheneinheit zugeordnete Speicher eingerichtet ist, die erste Klassifizierung zu speichern, und/oder der der zweiten Recheneinheit zugeordnete Speicher eingerichtet ist, die zweite Klassifizierung zu speichern, und/oder der der dritten Recheneinheit zugeordnete Speicher eingerichtet ist, die ersten Bedingungen zu speichern, und/oder der der vierten Recheneinheit zugeordnete Speicher eingerichtet ist, die vierten Bedingungen zu speichern.

Das System kann bevorzugt weiter umfassen: mindestens ein Ausgabemodul zum Ausgeben der ersten/und oder zweiten Ausgabewerte an einen Benutzer, wobei das Ausgabemodul mindestens eines der folgenden umfasst: einen Bildschirm, einen Touchscreen, einen Lautsprecher, ein Projektionsmodul.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

### Figurenbeschreibung

Figur 1 zeigt eine Kombination aus zwei miteinander gekoppelten künstlich lernenden Einheiten;
Figur 2 zeigt schematisch verschiedene beispielhafte Modulationsfunktionen;
Figur 3 veranschaulicht die Anwendung eines Dropout-Verfahrens in zwei gekoppelten neuronalen Netzen;
Figur 4 zeigt ein System wie in Figur 1 mit einem zusätzlichen Timer;
Figur 5 stellt schematisch ein System wie in Figur 1 mit den zugeordneten Klassifikationsspeichern dar;
Figur 6 zeigt ein alternatives System mit drei gekoppelten künstlich lernenden Einheiten,
Figur 7 zeigt ein beispielhaftes Gesamtsystem gemäß der Erfindung mit einer Arbeitsebene, einer Bewertungsebene und einer Projektionsebene; und
Figur 8 zeigt ein beispielhaftes Gesamtsystem gemäß der Erfindung mit zwei künstlich lernenden Arbeitseinheiten, zwei künstlich lernenden Bewertungseinheiten und einer Projektionsebene.

### Detaillierte Beschreibung von Ausführungsformen

Figuren 1 bis 6 sowie deren nachfolgende Beschreibung betreffen sowohl die künstlich lernenden Arbeitseinheiten als auch die künstliche lernenden Bewertungseinheiten. In der Beschreibung der Figuren 1 bis 6 wird daher der Begriff "künstlich lernenden Einheit" verwendet, der sowohl für "künstlich lernende Arbeitseinheit" als auch für "künstlich lernende Bewertungseinheit" stehen kann. Künstlich lernende Einheiten, die wie im Zusammenhang mit den Figuren 1 bis 6 beschrieben gekoppelt sind, werden als "künstlich lernendes System" bezeichnet.

Figur 1 zeigt eine beispielhafte Ausführungsform mit zwei verknüpften künstlich lernenden Einheiten 110, 120, die im Folgenden genauer beschrieben wird. Zusammen bilden die künstlich lernenden Einheiten 110, 120 ein künstlich lernendes System. Die künstlich lernenden Einheiten sind in den folgenden Erläuterungen beispielhaft als neuronale Netze ausgebildet, die insbesondere rückgekoppelt sind, z.B. indem die Ausgabewerte, wie durch Pfeile 112, 122 angedeutet, als Eingabe für das jeweilige Netz verwendet werden.

Dabei ist eine erste künstlich lernende Einheit, hier in Form eines ersten neuronalen Netzes 110, vorgesehen, das im Wesentlichen dazu dienen kann, die Eingangssignale Xᵢ zu kategorisieren bzw. klassifizieren und mit dem Ergebnis dieser Kategorisierung bzw. Klassifizierung eine zweite künstlich lernende Einheit 120, hier ein zweites neuronales Netz, zu beeinflussen. Dabei werden die Ergebnisse des ersten neuronalen Netzes bevorzugt nicht als Eingangswerte für das zweite neuronale Netz genutzt, sondern zur Beeinflussung von vorhandenen Gewichtungen, Schrittweiten und Funktionen des Netzes. Insbesondere können diese Parameter des zweiten neuronalen Netzes so beeinflusst werden, dass sie nicht vollständig neu festgelegt werden, sondern die ursprünglichen Parameter des zweiten Netzes 120 auf Grundlage der Ausgangssignale des ersten neuronalen Netzes 110 moduliert bzw. überlagert werden. Dies bedeutet, dass die beiden neuronalen Netze ansonsten bevorzugt eigenständig arbeiten, z.B. ihre Grundwerte selbst trainieren, und dabei aber durch eine Überlagerung gekoppelt sein können. Dabei können die beiden neuronalen Netze im Wesentlichen ähnlich zueinander gestaltet sein, aber beispielsweise mit deutlich unterschiedlichen Komplexitätsgraden, wie etwa der Anzahl der vorhandenen Schichten und Klassifizierungen. Weiter kann jedes der neuronalen Netze seinen eigenen Speicher umfassen.

In einer möglichen Ausführungsform kann dabei das erste neuronale Netz 110 als kategorisierendes Netz genutzt werden, das dazu dient, die Eingabewerte grob und schnell zu kategorisieren, während dann auf dieser Grundlage des Kategorisierungsergebnisses durch Modulation von Parametern des zweiten Netzes dieses entsprechend beeinflusst wird. Zu diesem Zweck kann als erstes neuronales Netz ein Netz mit vergleichsweise wenigen Ebenen vorgesehen sein, das einen Speicher mit wenigen Klassen K₁, K₂, ...Kₙ aufweist, die bevorzugt stark abstrahiert sind, um eine grobe Einordnung zu erreichen. Beispielsweise könnte dieses erste neuronale Netz auf 10, 50, 100 oder 500 Klassen beschränkt sein, wobei diese Zahlen selbstverständlich nur als grobe Beispiele zu verstehen sind. Dabei kann das Training des ersten neuronalen Netzes insbesondere einzeln und unabhängig von weiteren gekoppelten neuronalen Netzen erfolgen. Zusätzlich oder alternativ kann aber auch eine Trainingsphase in einem gekoppelten Zustand mit einem oder mehreren gekoppelten neuronalen Netzen genutzt werden.

Das erste neuronale Netz soll damit innerhalb einer kurzen Zeit eine verwertbare Ausgabe liefern, mit der das zweite neuronale Netz sinnvoll beeinflusst werden kann. Aus den Ausgabewerten Output1 des ersten neuronalen Netzes 110 können Gewichte und Funktionen erzeugt werden, die den selbsterzeugten Gewichten und Funktionen des zweiten neuronalen Netzes 120 überlagert werden können. Dies bedeutet, dass das zweite neuronale Netz zunächst eigenständig funktioniert und die Ausgabewerte des ersten Netzes bzw. die daraus gewonnenen Parameter nicht vollständig übernimmt. Auch das zweite neuronale Netz 120 kann zunächst eigenständig auf übliche Weise trainiert werden und dadurch selbstgenerierte Gewichte aufweisen.

Dabei kann das zweite neuronale Netz deutlich komplexer als das erste neuronale Netz gestaltet sein und insbesondere mehr Ebenen und/oder Speicherklassen aufweisen. Der Grad, um den die Komplexität des zweiten Netzes gegenüber dem ersten Netz erhöht ist, kann dabei je nach Anwendungsfall unterschiedlich festgelegt sein. Die Eingabewerte bzw. Inputdaten für das zweite neuronale Netz sind dabei bevorzugt dieselben Eingabewerte wie für das erste neuronale Netz, so dass nun mit denselben Daten eine komplexere Analyse vorgenommen werden kann. Alternativ können aber zumindest teilweise auch Ausgabewerte des ersten neuronalen Netzes als Eingabewerte des zweiten Netzes verwendet werden. Insbesondere bei einer deutlich unterschiedlichen Komplexität des zweiten Netzes könnte beispielsweise ein zweites Netz vorgesehen sein, dem sowohl die ursprünglichen Eingabewerte, die auch für das erste Netz als Eingabewerte dienten, als Eingabewerte zugeführt werden, als auch zusätzlich die Ausgabewerte des ersten Netzes als Eingabewerte des zweiten Netzes verwendet werden.

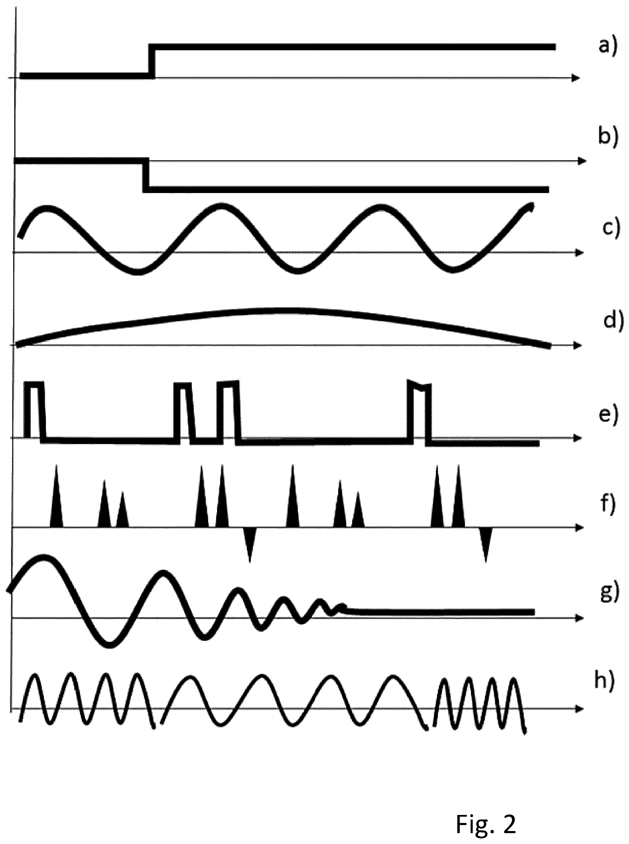

Figur 2 zeigt beispielhaft verschiedene Modulationsfunktionen f_{mod}, mit denen ein oder mehrere Parameter des zweiten neuronalen Netzes überlagert werden können. Dabei kann die Überlagerung bzw. Modulation grundsätzlich auf beliebige Weise stattfinden. Wenn eine Modulationsfunktion f_{mod_w} auf die Gewichtungen wᵢ₂ der Knoten angewendet wird, kann beispielsweise vorgesehen sein, dass die Gewichtungsmatrix des zweiten Netzes 120 als Argument der Modulationsfunktion eingesetzt wird, oder es können eindimensionale (auch unterschiedliche) Funktionen für jeden einzelnen der Gewichtungswerte wᵢ₂ vorgesehen sein. Wenn eine Modulationsfunktion f_{mod_f_}auf eine der beschreibenden Funktionen des zweiten neuronalen Netzes angewendet wird, also auf eine Transferfunktion fₜᵣₐₙₛ₂, eine Aktivierungsfunktion fₐₖₜ₂, eine Propagierungsfunktion oder eine Ausgabefunktion fₒᵤₜ₂ des Netzes 120, kann dies durch eine Verknüpfung der beiden Funktionen geschehen, wobei auch hier eine Modulationsfunktion f_{mod_f} entweder auf nur einen Teil oder alle relevanten beschreibenden Funktionen angewendet werden kann (z.B. auf alle Aktivierungsfunktionen fₐₖₜ₂ des zweiten neuronalen Netzes 120). Ebenso können Parameter der Funktionen des zweiten neuronalen Netzes durch Modulationsfunktionen variiert werden. Es können Modulationen gleichwertig an allen Knoten eines Netzes oder alternativ auch nur auf einen Teil der Knoten angewendet werden, oder für jeden Knoten anders moduliert werden. Ebenso kann beispielsweise für jede Schicht eines Netzes getrennt oder auf andere Weise gestaffelt moduliert werden.

Insbesondere können die Modulationsfunktionen f_{mod} auch zeitabhängige Funktionen sein, so dass die Gewichtungen wᵢ₂ oder Funktionen des zweiten neuronalen Netzes zeitabhängig geändert werden. Es sind aber ebenso statische Modulationsfunktionen zur Modulation des zweiten neuronalen Netzes denkbar. Dabei wird die Modulation auf die Parameter des zweiten Netzes 120 angewendet, die bereits ursprünglich für dieses zweite Netz definiert sind (wie etwa die Propagierungsfunktionen oder die Aktivierungsfunktionen), oder die in der Trainingsphase selbständig gewonnen wurden, wie etwa die angepassten selbstgenerierten Gewichte.

Als Beispiele dafür sind in Figur 2 acht verschiedene zeitabhängige Modulationsfunktionen dargestellt, wobei die Modulationsfunktion durch Multiplikation eines ursprünglichen Parameters mit Werten, wie sie in Figur 2 illustriert sind, gegeben ist. Beispiel a) zeigt eine einfache binäre Stufenfunktion, bei der bis zu einer vorgegebenen Zeit der Wert null und anschließend ein Wert größer null vorgegeben ist. Dabei kann der zweite Wert grundsätzlich 1 sein, könnte aber auch einen anderen Wert aufweisen, so dass die ursprünglichen Parameter zusätzlich mit einem Faktor beaufschlagt werden. Auf diese Weise wird z.B. eine Gewichtung zeitabhängig ein- und abgeschaltet oder zeitabhängig verstärkt. Beispiel b) zeigt eine ähnliche Situation, in der eine Stufenfunktion mit einem zweiten Wert kleiner als Null vorgegeben ist. Ebenso sind alternativ zu den Varianten aus Beispiel a) und b) Stufenfunktionen denkbar, die zwei oder mehr verschiedene Werte ungleich 0 umfassen, so dass der Pegel entsprechend zeitabhängig angehoben oder abgesenkt wird.

Beispiel c) zeigt eine periodische Modulationsfunktion, die ebenfalls auf jeden beliebigen Parameter des zweiten Netzes angewendet werden kann und auf diese Weise zeitabhängig periodisch bestimmte Elemente verstärken oder abschwächen wird. Dabei könnten beispielsweise auch für unterschiedliche Knoten und/oder unterschiedliche Schichten jeweils verschiedene Amplituden und/oder Perioden für eine derartige Funktion gewählt werden. Jede beliebige periodische Funktion kann an dieser Stelle verwendet werden, etwa eine Sinus-Funktion oder auch nichtstetige Funktionen. Je nach Art der Verkettung der Funktionen mit den selbstgenerierten Funktionen des zweiten Netzes können nur positive oder auch negative Funktionswerte gewählt werden.

In Beispiel d) ist eine langsame kontinuierliche vorübergehende Anhebung und Absenkung des Pegels gezeigt. Beispiel e) dagegen beschreibt kurzzeitige, annähernd rechteckförmige hohe Pegel bei ansonsten niedrigem Funktionswert, der optional auch null sein kann. Ähnlich sind in Beispiel f) unregelmäßig verteilte und sehr kurze Spitzen oder Spikes zu sehen, die also für einen sehr kurzen Zeitraum eine Pegelerhöhung bzw. -änderung bewirken. Dabei weisen die Spitzen hier unterschiedliche Amplituden auf und können sowohl nach positive als auch negative Werte (relativ zum Grundwert) annehmen. Für die Varianten aus den Beispielen e) und f) können sowohl regelmäßige, periodische als auch zeitlich völlig unregelmäßige (z.B. stochastisch ermittelte) Verteilungen der Spitzen bzw. Verstärkungen vorliegen. Dabei können kurze Pegelerhöhungen beispielsweise etwa innerhalb der Zeit eines Entscheidungszyklus des zweiten neuronalen Netzes liegen, während länger ausgeprägte Pegelveränderungen sich über mehrere Entscheidungszyklen erstrecken können.

Beispiel g) in Figur 2 zeigt weiter eine gedämpfte Schwingung, die ebenfalls beliebig mit verschiedenen Dämpfungen und Amplituden ausgestaltet sein könnte. Schließlich ist in Beispiel h) eine zeitliche Abfolge aus unterschiedlichen Schwingungen um den Grundwert gezeigt, wobei sich hier insbesondere die Periodenlängen der Schwingungen unterscheiden, während die Amplitude gleich bleibt. Diese Kombination unterschiedlicher Schwingungen kann auch als additive Überlagerung, d.h. Schwebung, ausgebildet sein.

Generell sind beliebige Modulationsfunktionen denkbar und die gezeigten Funktionen aus Figur 2 nur als Beispiel zu verstehen. Insbesondere sind beispielsweise beliebige Kombinationen der aufgeführten Beispielfunktionen möglich. Es versteht sich auch, dass die gezeigte Grundlinie in allen Beispielen je nach gewünschtem Effekt der Modulationsfunktion bei 0 oder bei einem anderen Grundwert verlaufen kann. Bei einer reinen Verkettung der Modulationsfunktion mit der jeweiligen modulierten Funktion kann mit einem Grundwert von 0 und entsprechenden Erhöhungen des Funktionswerts dafür gesorgt werden, dass der jeweilige Knoten nur zeitabhängig zur Verarbeitung beiträgt und zu anderen Zeiten abgeschaltet ist. Mit einem Grundwert von 1 kann dagegen erreicht werden, dass z.B. mit dem Beispiel aus Figur 2a) eine Modulationsfunktion, die auf die Gewichtungen angewendet wird, zunächst als Grundwert die selbstgenerierten Gewichte des modulierten Netzes wiedergibt und dann, ab dem abgestuften höheren Wert, entsprechend verstärkte Gewichte aufweist. Entsprechend wirkt eine derartige Funktion auch auf die Modulierung der Funktionen, wie etwa der Aktivierungsfunktion.

Wie bereits beschrieben, kann eine Modulationsfunktion auf Grundlage der Ausgabewerte einer ersten künstlich lernenden Einheit gebildet werden, also im vorliegenden Beispiel auf Grundlage des ersten neuronalen Netzes. Der Zusammenhang zwischen den Ausgabewerten und der daraus gebildeten Modulationsfunktion kann beliebig gestaltet werden. Beispielsweise kann dieser Zusammenhang mindestens zum Teil in einer gemeinsamen Trainingsphase des gekoppelten Netzes erzeugt werden. In anderen Ausführungsformen kann vorgegeben sein, wie die Abhängigkeit zwischen den Modulationsfunktionen und den Ausgabewerten des ersten Netzes gestaltet ist, beispielsweise könnte eine Modulationsfunktion als eine der in Figur gezeigten Funktionen gegeben sein, wobei die Höhe der Pegelausschläge durch einen Ausgabewert bestimmt wird. Optional könnte auch entschieden werden, dass bei bestimmten Ausgabewerten zunächst keine Modulation des zweiten Netzes erfolgt.

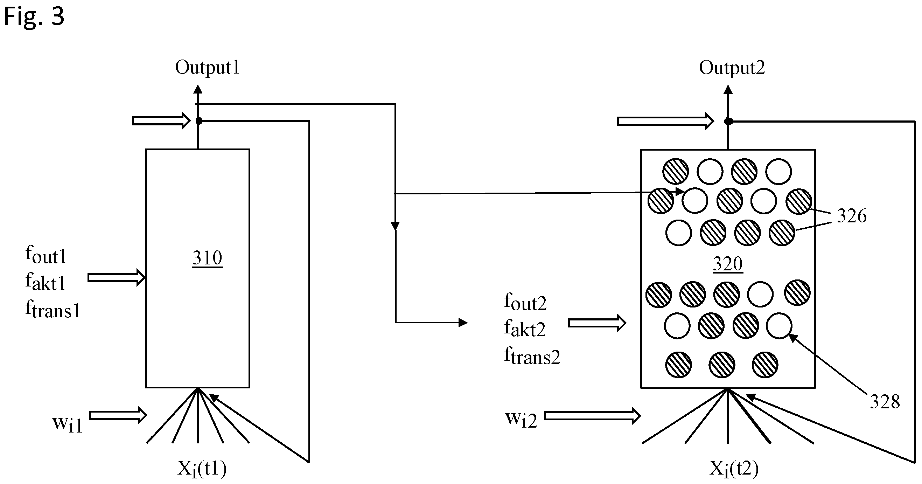

Alternativ oder zusätzlich zu der Anwendung von Modulationsfunktionen auf die Gewichte und Funktionen eines zweiten neuronalen Netzes kann auch ein gekoppeltes Dropout-Verfahren angewendet werden, das in Figur 3 dargestellt ist. Dabei handelt es sich herkömmlich um ein Trainingsverfahren für ein neuronales Netz, bei dem in jedem Trainingszyklus nur ein Teil der vorhandenen Neuronen in den verborgenen Schichten und der Eingangsschicht genutzt werden und die übrigen nicht verwendet werden ("drop out"). Zu diesem Zweck wird üblicherweise im Stand der Technik eine Dropout-Rate auf Grundlage der rückgeführten Fehler des Netzes festgelegt, die bestimmt, wie groß der Anteil der abgeschalteten Neuronen am gesamten Netz ist. Ebenso könnten anstelle von Neuronen ein Teil der Kanten bzw. Verbindungen zwischen Neuronen abgeschaltet werden.

Eine derartige teilweise Abschaltung von Neuronen und/oder Kanten kann nun in beispielhaften Ausführungsformen ebenfalls in einem zweiten neuronalen Netz eingesetzt werden, wobei nun die Dropout-Parameter nicht auf Grundlage der Fehlerrückführung des Netzes selbst, sondern wie bei der zeitabhängigen Modulation in Abhängigkeit von den Ausgabewerten eines ersten neuronalen Netzes eingesetzt werden. Dabei kann beispielsweise auf Grundlage der Ausgabewerte Output1 des ersten neuronalen Netzes 310 eine Dropout-Rate für das zweite neuronale Netz festgelegt werden, die dann auf das zweite Netz angewendet wird. Die Figur zeigt erneut zwei gekoppelte Netze 310, 320 wie in Figur 1, wobei nun die Neuronen bzw. Knoten 326, 328 des zweiten Netzes 320 schematisch als Kreise angedeutet sind. Dabei sind die verbindenden Kanten nicht gezeigt, und die Anordnung der dargestellten Neuronen soll keinen zwingenden Bezug zu ihrer tatsächlichen Topologie haben. Über die Dropout-Rate wird nun ein Teil der vorhandenen Neuronen deaktiviert und damit nicht verwendet. Die aktiven Neuronen 326 des zweiten Netzes sind in der Figur schraffiert dargestellt, während die nicht ausgefüllten Neuronen die nicht aktiven Dropout-Neuronen 328 darstellen sollen.

Auf allgemeine Weise kann das hier beschriebene gekoppelte Dropout auch als Modulationsfunktion f_{mod} verstanden werden, indem als Modulationsfunktion für das Gewicht oder z.B. die Ausgabefunktion jedes einzelnen Knotens entweder 0 oder 1 eingesetzt wird. Dabei kann auf Grundlage der Ausgabewerte des ersten Netzes bestimmt werden, welche der Neuronen 326, 328 abgeschaltet werden, oder es kann nur die Rate vorgegeben werden und über stochastische Funktionen bestimmt werden, welches Neuron abgeschaltet wird. Auch die Dropout-Rate kann dabei wiederum auf Grundlage der Ausgabewerte Output1 des ersten Netzes 310 festgelegt werden. Dabei kann eine Dropout-Modulationsfunktion optional auch eine zeitabhängige Abschaltung bewirken, was z.B. einer Verkettung einer Dropout-Funktion mit einer wie in Figur 2 gezeigten Modulationsfunktion entsprechen würde. Ebenso kann auch eine Folge von Musterabschaltungen eingesetzt werden, die sich in einem vorherigen Training bewährt haben, so dass beispielsweise zyklische Mustervariationen zur Abschaltung in dem zweiten neuronalen Netz 320 eingesetzt werden.

Generell kann das Dropout dafür sorgen, dass die Arbeitsgeschwindigkeit eines neuronalen Netzes erhöht wird. Außerdem wird vermieden, dass sich benachbarte Neuronen in ihrem Verhalten zu sehr annähern. Das gekoppelte Dropout wie vorstehend beschrieben kann sowohl in einer gemeinsamen Trainingsphase eingesetzt werden, in der die beiden Netze gekoppelt sind, als auch in einem bereits trainierten Netz eingesetzt werden.

Um sicherzustellen, dass die gekoppelten neuronalen Netze sich sinnvoll ergänzen, kann festgelegt werden, welches der neuronalen Netze zu jedem Zeitpunkt das Gesamtsystem dominiert. Als dominierendes Netz bzw. Dominanz kann dabei das Netz bezeichnet werden, dessen Ausgabewerte die Ausgabe des Gesamtsystems bestimmen. Im Folgenden wird davon ausgegangen, dass immer nur genau ein Netz in einer Gruppe aus zwei oder mehr gekoppelten Netzen dominiert und damit die Ausgabe des dominierenden Netzes gleich der Ausgabe des Gesamtsystems ist. Andere Ausführungsformen sind jedoch auch grundsätzlich denkbar, so dass beispielsweise Vorschriften festgelegt sind, die bei mehr als einem dominierenden Netz eine Verarbeitung der Ausgabewerte der dominierenden Netze zu einem endgültigen Gesamtausgabewert beschreiben.

In beispielhaften Ausführungsformen kann zu diesem Zweck ein Timer bzw. Zeitglied implementiert werden, welches für eines oder mehrere der gekoppelten neuronalen Netze eine Zeitvorgabe festlegt. Dabei soll diese Zeitvorgabe bevorzugt als Maximalwert bzw. zeitliche Obergrenze verstanden werden, nach der ein Ausgabewert des jeweiligen Netzes vorliegen muss, so dass auch bereits früher eine Ausgabe vorliegen kann. Spätestens nach Ablauf der für ein bestimmtes Netz vorgegebenen Zeit wird dann ein Ausgabewert dieses Netzes ausgewertet. Der Timer kann auf Basis von festgelegten Zeitvorgaben damit die Dominanz zwischen den gekoppelten Netzen steuern und/oder verändern.

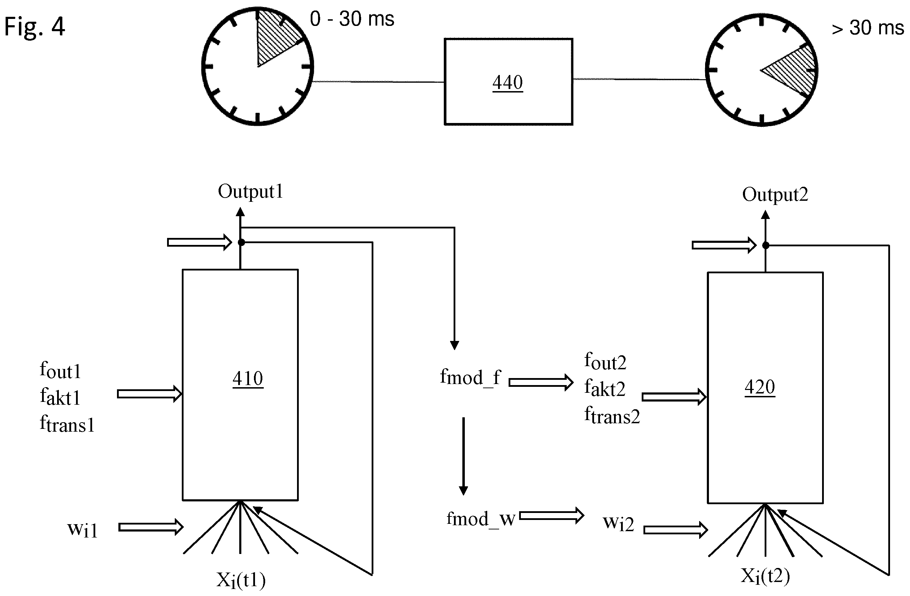

Eine beispielhafte Ausführungsform dieser Art ist in der Figur 4 dargestellt. Dabei kann die Ausbildung und Kopplung der beiden neuronalen Netze 410, 420 dem bereits in Figur 1 beschriebenen Beispiel entsprechen. Der Timer 440 sorgt nun dafür, dass die Ausgabe des ersten neuronalen Netzes 410 spätestens nach einer vorgegebenen Zeit, die durch einen vorgegebenen Zeitparameterwert festgelegt ist, ausgewertet wird. Die benötigte Zeit kann beispielsweise ab Einspeisung der Eingangswerte Xᵢ in das jeweilige Netz gemessen werden. Die Wahl der vorgegebenen Zeitparameter für ein Netz kann dabei insbesondere abhängig von der Komplexität eines Netzes durchgeführt werden, so dass in der vorgegebenen Zeit auch tatsächlich verwertbare Ergebnisse zu erwarten sind. In einem Beispiel wie dem zuvor beschriebenen, bei dem das erste neuronale Netz 410 bevorzugt durch ein Netz mit wenigen verborgenen Schichten und einer geringen Anzahl von Klassifizierungen gebildet wird, kann damit auch eine entsprechend kurze Zeit für dieses erste Netz gewählt werden. Ebenso können bei der Wahl der Zeitparameter für ein Netz weitere Überlegungen einbezogen werden, etwa die vorhandene Hardware, welche die Rechenzeit der Netze entscheidend beeinflusst, und/oder auch das von den gekoppelten Netzen betrachtete Einsatzgebiet. Weiter können die vorgegebenen Zeitparameter variabel sein und beispielsweise in Abhängigkeit von Ergebnissen von mindestens einem der gekoppelten neuronalen Netze abgeändert oder neu festgelegt werden. Es versteht sich, dass eine derartige Zeitvorgabe zumindest die Zeitspanne umfassen sollte, die als Mindestzeit für das einmalige Durchlaufen des jeweiligen Netzes 410, 420 erforderlich ist. In Figur 4 ist als Beispiel eine Zeitspanne von 30ms für das erste Netz festgelegt, so dass bei einem Verfahrensdurchlauf dieses Netz in der Zeit von 0ms bis 30ms ab Beginn des Verfahrens dominiert. Es kann aber natürlich auch ein geeigneter anderer Wert für diese Zeitspanne gewählt werden.

Während der durch den Zeitparameter für das erste Netz 410 vorgegebenen Zeitspanne (hier 30ms) wird das erste neuronale Netz die Eingabewerte Xᵢ auf übliche Weise verarbeiten. Nach Ablauf der vorgegebenen Zeit können aus der Ausgabe Output1 des ersten neuronalen Netzes 410 Funktionen erzeugt werden, die zur Überlagerung bzw. Modulation der eigenen Gewichte und Funktionen des zweiten neuronalen Netzes dienen. Außerdem können die Ausgabewerte des ersten neuronalen Netzes auch alternativ oder zusätzlich zur Verwendung für die Beeinflussung des zweiten Netzes 420 eigenständig verarbeitet werden und beispielsweise als schnelle Ausgabe des Gesamtsystems genutzt werden.

Sobald die Modulationsfunktionen f_{mod_f}, f_{mod_w} auf das zweite neuronale Netz 420 angewendet wurden, kann der Timer 440 eine erneute Zeitmessung starten und dabei nun einen zweiten, für das zweite neuronale Netz 420 vorgegebenen Zeitparameter anwenden.

Dabei kann das zweite neuronale Netz 420 optional auch bereits vor der Modulation durch die gewonnenen Modulationsfunktionen f_{mod_f}, f_{mod_w} selbständig die Eingabewerte Xᵢ verwerten, so dass beispielsweise die Eingabewerte bereits vor Start der zweiten vorgegebenen Zeitspanne auch an das zweite neuronale Netz 420 gegeben werden können und dort entsprechend verarbeitet werden können. Nach Ablauf der ersten Zeitspanne wird dann die Überlagerung der Parameterwerte und Funktionen des zweiten neuronalen Netzes vorgenommen, indem die entsprechenden Modulationsfunktionen f_{mod_f}, f_{mod_w} angewendet werden. Dabei können ein oder mehrere Modulationsfunktionen für unterschiedliche Teile des zweiten neuronalen Netzes 420 gebildet werden, beispielsweise für die Gewichtungen, Ausgabefunktionen, Propagierungsfunktionen und/oder Aktivierungsfunktionen des zweiten neuronalen Netzes. Bei einem zweiten neuronalen Netz 420, das deutlich komplexer als das erste neuronale Netz 410 ausgebildet ist, beispielsweise durch deutlich mehr Schichten und Knoten und/oder durch eine höhere Anzahl von Speicherklassen, wird das zweite neuronale Netz einen im Vergleich höheren Rechenaufwand und damit auch mehr Zeit benötigen, so dass in diesem Fall die zweite Zeitspanne entsprechend länger gewählt werden kann.

Dabei kann optional jedes der Netze 410, 420 kontinuierlich weiter die Eingabewerte verarbeiten und auswerten, auch während ein anderes Netz aufgrund der laufenden Zeitspannen als dominierendes Netz im Gesamtsystem festgelegt ist. Insbesondere kann in dem gezeigten Beispiel aus zwei gekoppelten Netzen das erste Netz kontinuierlich die Eingabewerte auswerten, auch während die Dominanz beim zweiten Netz liegt und die Ausgabewerte des Gesamtsystems daher nach Ablauf der zweiten Zeitspanne und nach einer durch das zweite Netz gefundenen Lösung den Ausgabewerten des zweiten Netzes entsprechen. Auf diese Weise kann ein schnell kategorisierendes Netz wie das hier beschriebene erste Netz 410, das durchgängig die vorhandenen Eingabewerte auswertet, auch kurzfristige Eingriffe vornehmen, soweit die gefundenen Ausgabewerte Eingang in die Gesamtausgabe finden. Solche Ausführungsformen werden nachstehend noch genauer beschrieben.

Als Ergebnis einer derartigen Zeitsteuerung durch vorgegebene Zeitspannen in einem Timer kann das Gesamtsystem früh Entscheidungen treffen und beispielsweise schon handlungsfähig sein, ohne dass die endgültige Auswertung und detaillierte Analyse durch das zweite neuronale Netz schon abgeschlossen sein muss. Als Beispiel kann eine Situation in einem autonomen Fahrsystem betrachtet werden, die von einem derartigen System mit mindestens zwei gekoppelten Netzen bewertet werden soll. Durch die erste Einheit bzw. das erste neuronale Netz kann eine frühe Kategorisierung "Gefahr" erreicht werden, die noch keine weitergehende Einschätzung über die Art der Gefahr beinhaltet, aber bereits zu einer sofortigen Reaktion wie etwa einer Verlangsamung der Geschwindigkeit des Fahrzeugs und der Aktivierung der Brems- und Sensorsysteme führen kann. Gleichzeitig führt das zweite neuronale Netz auf Grundlage der Kategorisierung, nämlich unter Einfluss der Modulation durch die Ausgabewerte des ersten Netzes, eine tiefergehende Analyse der Situation durch, die dann zu weiteren Reaktionen oder Veränderungen des Gesamtsystems auf Grundlage der Ausgabewerte des zweiten Netzes führen kann.

Es ist auch denkbar, nicht für jedes der gekoppelten Netze eine Zeitbegrenzung vorzugeben, sondern nur für eines der Netze (bzw. bei Koppelung von mehr als zwei Netzen auch für nur eine Teilmenge der gekoppelten Netze). Beispielsweise könnte in dem oben genannten Beispiel ein Timer für das erste, schnell kategorisierende neuronale Netz eingesetzt werden, während das zweite Netz keine feste Zeitvorgabe erhält, oder umgekehrt. Eine derartige Ausführungsform kann auch mit weiteren Verfahren zur Bestimmung des momentan dominanten Netzes kombiniert werden, die nachstehend noch genauer beschrieben werden.

In allen Ausführungsformen mit eingesetztem Timer kann vorgesehen sein, dass als Ausgabe des Gesamtsystems jeweils die Ausgabewerte desjenigen neuronalen Netzes verwendet werden, welches momentan einen aktiven Timer aufweist. Aufgrund der Zeit, die ein Netz bis zum Erreichen einer ersten Lösung für vorgegebene Eingabewerte benötigt, ergibt sich dabei eine gewisse Latenzzeit, innerhalb derer noch die vorherigen Ausgabewerte (des ersten oder zweiten Netzes) als Gesamtausgabewerte vorliegen.

Falls nur für einen Teil der gekoppelten Netze Zeitvorgaben festgelegt sind, z.B. nur für ein erstes Netz ein Timer wirkt, kann beispielsweise definiert sein, dass die Ausgabe des Gesamtsystems im allgemeinen immer der Ausgabe des zweiten Netzes entspricht und nur dann durch die Ausgabe des ersten Netzes ersetzt wird, wenn für das erste Netz eine Timer aktiv ist, d.h. eine vorgegebene Zeitspanne aktiv läuft und noch nicht abgelaufen ist.

In einem System mit mehr als zwei Netzen kann durch Angleichung der vorgegebenen Zeitspannen und Wechsel des Timers auch eine sinnvolle Synchronisation der Netze untereinander ermöglicht werden, insbesondere wenn mehrere Netze mit unterschiedlichen Aufgaben gleichzeitig zu einem Ergebnis kommen sollen, das wiederum Einfluss auf ein oder mehrere andere Netze haben soll. Ebenso kann durch Anpassung der vorgegebenen Zeitspannen und Abläufe eine Synchronisation auch unter mehreren getrennten Gesamtsystemen, die jeweils mehrere gekoppelte Netze umfassen, erreicht werden. Dabei können die Systeme beispielsweise durch einen Zeitabgleich synchronisiert werden und dann selbständig, aber synchron gemäß der jeweiligen Timer-Vorgaben, ablaufen.

Zusätzlich oder alternativ zur Änderung des jeweils dominierenden neuronalen Netzes im Gesamtsystem auf Grundlage eines Timers kann auch jedes der neuronalen Netze selbst auf kooperative Weise Entscheidungen zur Übergabe der Dominanz treffen. Dies kann beispielsweise bedeuten, dass ein erstes neuronales Netz eines Gesamtsystems die Eingabewerte verarbeitet und zu einer bestimmten ersten Lösung bzw. bestimmten Ausgabewerten kommt, z.B. eine Einteilung der Eingabewerte ein eine bestimmte Klasse entsprechend einer während einer Trainingsphase trainierten Klassifizierung erreicht und mit Erreichen dieser Einteilung die Dominanz an ein zweites neuronales Netz des Gesamtsystems übergibt.

Wie auch bei der Schwerpunktveränderung mit Hilfe des Timers kann hier festgelegt sein, dass die Ausgabewerte des Gesamtnetzes jeweils den Ausgabewerten des aktuell dominierenden Netzes entsprechen.

Zu diesem Zweck können beispielsweise Veränderungen in den Eingangswerten bewertet werden. Solange die Eingangswerte im Wesentlichen unverändert bleiben, kann auch die Dominanzverteilung unter den gekoppelten Netzen im Wesentlichen unverändert bleiben, und/oder ausschließlich auf Grundlage eines Timers bestimmt werden. Falls jedoch die Eingangswerte sich plötzlich verändern, kann eine vorgegebene Dominanz festgelegt sein, welche das sonstige Dominanzverhalten der gekoppelten Netze überschreibt. So kann beispielsweise für plötzlich veränderte Eingangswerte bestimmt werden, dass die Dominanz in jedem Fall zunächst wieder auf die das erste neuronale Netz übergeht. Damit wird auch ein optional vorhandener Timer für dieses erste neuronale Netz erneut gestartet und der Ablauf wie zuvor bereits beschrieben durchgeführt. Eine deutliche Änderung der Eingangswerte könnte beispielsweise auftreten, wenn Sensorwerte eine neue Umgebung erfassen oder wenn ein zuvor bewerteter Prozess abgeschlossen wurde und nun ein neuer Prozess angestoßen werden soll.

Dabei können Schwellwerte in Form einer Signifikanzschwelle vorgegeben sein, anhand derer bestimmt werden kann, ob eine Änderung der Eingabewerte als wesentlich betrachtet werden soll und zu einer Änderung der Dominanz führen soll. Es können auch für unterschiedliche Eingabewerte bzw. für jeden Eingabewert einzelne Signifikanzschwellen vorgegeben sein, oder es kann ein allgemeiner Wert, z.B. in Form einer prozentualen Abweichung, als Grundlage für die Bewertung einer Veränderung der Eingabewerte vorgesehen sein. Ebenso könnten anstelle von festen Signifikanzschwellen zeitlich oder adaptiv und situationsabhängig veränderbare Schwellen vorliegen, oder es kann sich dabei um Funktionen, Matrizen oder Muster handeln, anhand derer die Signifikanz der Veränderung bewertet werden kann.

Alternativ oder zusätzlich kann die Veränderung der Dominanz unter den gekoppelten Netzen abhängig von den gefundenen Ausgabewerten jedes Netzes bzw. neuronalen Netzes gemacht werden. Je nach Ausführungsform kann beispielsweise das erste neuronale Netz die Eingabewerte und/oder deren Veränderung bewerten. Dabei können für die Klassen, die für das erste neuronale Netz zur Klassifizierung vorliegen, jeweils Signifikanzschwellen vorgegeben sein, so dass bei einem Ergebnis des ersten neuronalen Netzes, das für die Eingabedaten einen signifikanten Wechsel der gefundenen Klasse ergibt, sofort eine Übergabe der Dominanz an das erste neuronale Netz stattfindet, so dass eine schnelle Neubewertung der Situation und gegebenenfalls eine Reaktion stattfinden kann. Auf diese Weise kann auch verhindert werden, dass trotz signifikant veränderter Eingabesituation, die durch das erste, schnell kategorisierende Netz erkannt wurde, unnötig lange weiter ohne Berücksichtigung der Veränderung vom zweiten neuronalen Netz in die Tiefe analysiert wird.

In allen vorstehenden Beispielen können die Ausgabewerte des Gesamtsystems auf beliebige Weise weiterverwendet werden, beispielsweise als direkte oder indirekte Steuersignale für Aktoren, als Daten, die für zukünftige Verwendung abgespeichert werden, oder als Signal, das an Ausgabeeinheiten weitergegeben wird. In allen Fällen können die Ausgabewerte auch zunächst weiter durch zusätzliche Funktionen und Bewertungen weiterverarbeitet werden und/oder mit weiteren Daten und Werten kombiniert werden.

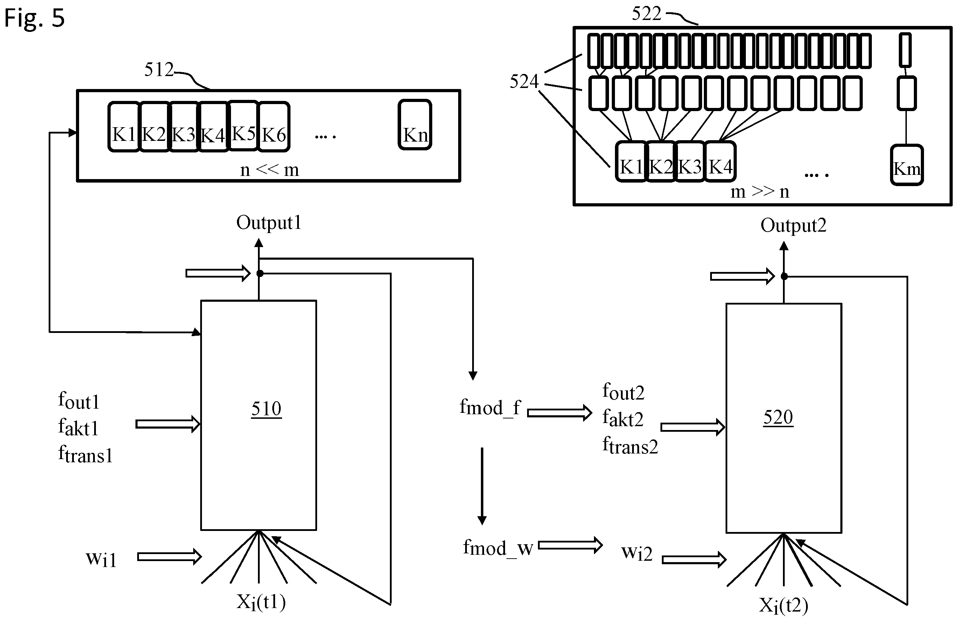

Figur 5 zeigt erneut das einfache Ausführungsbeispiel wie in Figur 1 mit zwei unidirektional gekoppelten Netzen 510, 520, wobei nun für jedes der Netze ein Klassifikationsspeicher 512, 522 schematisch gezeigt ist. Die Art der verwendeten Klassifikationen Ki ist hier zunächst zweitrangig und wird nachstehend noch genauer beschrieben. Dabei können sich insbesondere die Dimension und der Aufbau der beiden Klassifikationsspeicher des ersten 512 und zweiten Netzes 522 deutlich unterscheiden, so dass zwei neuronale Netze mit unterschiedlichen Geschwindigkeiten und Schwerpunkten gebildet werden. Damit kann beispielsweise wie bereits kurz beschrieben ein Zusammenspiel aus einem schnellen, grob kategorisierenden und einem langsameren, aber detaillierter analysierenden Netz zu einem gekoppelten Gesamtsystem erreicht werden.

Im vorliegenden Beispiel wird ein erstes neuronales Netz 510 mit relativ wenigen Klassifikationen K1, K2, ...., Kn ausgebildet, die beispielsweise auch nur einer flachen Hierarchie folgen können, so dass nur in einer Dimension kategorisiert wird. Bevorzugt kann ein derartiges erstes Netz 510 auch in seiner Topologie vergleichsweise einfach ausgebildet sein, also mit einer nicht zu großen Anzahl n von Neuronen und verborgenen Schichten. Grundsätzlich kann die Netztopologie aber auch im Wesentlichen unabhängig von den Klassifizierungen sein.

Das zweite neuronale Netz 520 kann dann ein deutlich größeres und/oder komplexeres Klassifikationssystem aufweisen. Beispielsweise kann dieser Speicher 522 bzw. die zugrundeliegende Klassifikation auch hierarchisch in mehreren Ebenen 524 aufgebaut sein, wie in der Figur 5 gezeigt ist. Die Gesamtanzahl m der Klassen K1, K2, ...., Km des zweiten Netzes 520 kann sehr groß sein, insbesondere deutlich größer als die Anzahl n der Klassen, die von dem ersten neuronalen Netz 510 verwendet werden. Beispielsweise könnte sich die Anzahl m, n der Klassen um eine oder mehrere Größenordnungen unterscheiden. Damit wird eine asymmetrische Verteilung der einzelnen Netze im Gesamtsystem erreicht.

Die schnelle Klassifizierung durch das erste neuronale Netz 510 kann dann dazu dienen, die Eingabewerte rasch einzuordnen. Dazu können bevorzugt abstrakte, zusammenfassende Klassen verwendet werden. Die Einordnung einer erfassten Situation (z.B. auf Grundlage von Sensordaten wie Bild- und Audiodaten) kann dann in einem Beispiel zunächst durch das erste neuronale Netz 510 als "großes, möglicherweise gefährliches Tier" erfolgen, ohne dazu weitere Auswertungen vorzunehmen. Dies bedeutet, dass z.B. keine weitere Klassifizierung nach Tierarten (Wolf, Hund) oder als gefährliches Raubtier in dem ersten Netz erfolgt, sondern nur nach möglichst breit gefassten, allgemeinen Merkmalen wie etwa der Größe, Erfassung von Zähnen, Angriffshaltungen und weiteren Eigenschaften klassifiziert wird. Diese Daten, die im Wesentlichen der Ausgabe "Gefahr" entsprechen, können dann optional bereits zur vorläufigen und schnellen Reaktion weiter an entsprechende externe Systeme gegeben werden, z.B. ein Warnsystem für einen Nutzer oder an bestimmte Aktoren eines automatisierten Systems. Außerdem wird die Ausgabe Output1 des ersten neuronalen Netzes 510 wie beschrieben zur Erzeugung von Modulationsfunktionen für das zweite neuronale Netz 520 genutzt.

Dieselben Eingabewerte Xᵢ, also z.B. die genannten Sensorwerte, werden auch an das zweite neuronale Netz 520 gegeben. Dabei können die Eingabewerte sofort, also im Wesentlichen gleichzeitig wie an das erste Netz, oder verzögert eingegeben werden, wobei sie je nach Ausführungsform bereits vor oder erst bei Anwendung der Modulationsfunktionen, d.h. bei Vorliegen des Ergebnisses des ersten Netzes eingegeben werden. Bevorzugt sollten sie insbesondere bei zeitkritischen Prozessen nicht später an das zweite neuronale Netz gegeben werden, um Verzögerungen zu vermeiden. Das zweite neuronale Netz berechnet dann ebenfalls eine Lösung, wobei die von diesem zweiten Netz ursprünglichen selbstgenerierten Gewichte und seine Basisfunktionen (wie die festgelegten Aktivierungsfunktionen und Ausgabefunktionen) jeweils auf Grundlage der Modulationsfunktionen überlagert werden können, die aus den Ausgabewerten des ersten Netzes gebildet wurden. Dadurch können bei der iterativen Arbeit des zweiten Netzes eine Vielzahl möglicher Varianten entfallen, für die bei einer von dem ersten Netz schnell erkannten kritischen Situation (z.B. einer Gefahrensituation) keine Zeit wäre. Während die langsamere Analyse des zweiten neuronalen Netzes stattfindet, können wie beschrieben bereits mögliche Reaktionen auf Basis des ersten neuronalen Netzes ausgeführt werden. Dies entspricht einer ersten instinktiven Reaktion in biologischen Systemen. Der hierarchische und gegenüber dem ersten Netz deutlich größere Speicher des zweiten Netzes erlaubt dann eine präzise Analyse der Eingabewerte, in dem genannten Beispiel eine detaillierte Einordnung in die Klasse "Hund", die jeweilige Rasse, Verhaltensmerkmale, die auf Gefahren oder eine harmlose Situation schließen lassen, und weitere. Bei Bedarf kann dann nach Erreichen eines Ergebnisses durch das zweite neuronale Netz die vorherige Reaktion des Gesamtsystems überschrieben werden, indem z.B. die erste Einordnung "Gefahr" wieder herabgestuft wird.

Insgesamt kann für ein derartig gekoppeltes Gesamtsystem mit asymmetrischer Klassifizierung beispielsweise vorgesehen sein, dass die Klassen Kn des schnell klassifizierenden ersten Netzes 510 vor allem abstrakte Einordnungen wie neue/bekannte Situation, gefährliches/ungefährliches Ereignis, interessantes/uninteressantes Merkmal, Entscheidung erforderlich/nicht erforderlich und ähnliche vornehmen, ohne dabei in die Tiefe zu gehen. Diese erste Klassifizierung muss dabei nicht zwingend dem Endergebnis entsprechen, das durch die zweite Einheit 520 letztendlich gefunden wird. Die zweistufige Klassifizierung durch mindestens eine schnelle und eine tief analysierende Einheit erlaubt aber damit gefühlsähnliche oder instinktive Reaktionen eines künstlich lernenden Gesamtsystems. Wenn beispielsweise ein Objekt durch Bilderkennung identifiziert wird, das möglicherweise eine Schlange sein könnte, kann bevorzugt der "worst case" das Ergebnis der ersten Klassifizierung sein, unabhängig davon, ob diese Einordnung wahrscheinlich richtig ist oder nicht. Was im Fall der menschlichen Intelligenz als evolutionäres Wissen und instinktive Reaktion vorliegt, kann durch eine schnelle erste Klassifizierung mit vorprogrammiertem Wissen ersetzt werden, so dass ebenfalls entsprechende Standardreaktionen (Abstand halten, Bewegung einleiten, erhöhte Aufmerksamkeit aktivieren) durch das Gesamtsystem und seine Aktoren durchgeführt werden können. Die zusätzliche Modulation der zweiten lernenden Einheit auf Basis dieser ersten Klassifizierung kann dann ähnlich wie eine gefühlsbedingte Überlagerung verstanden werden, d.h. beispielsweise entsprechend einer Angstreaktion, die automatisch eine andere bewusste Situationsanalyse einleitet als eine als harmlos verstandene Situation. Die Überlagerung der Parameter des zweiten neuronalen Netzes, die durch die Modulationsfunktionen vorgenommen wird, kann dabei die erforderliche Verschiebung in andere, ansonsten standardmäßig nicht oder nicht sofort erreichte Klassifikationsräume bewirken.

Entsprechend können derartige Systeme für eine Vielzahl von Anwendungsbereichen eingesetzt werden, beispielsweise in allen Anwendungen, in denen kritische Entscheidungssituationen auftreten. Beispiele sind Fahrsysteme, Rettungs- oder Warnsysteme für unterschiedliche Gefahrenarten, Chirurgiesysteme, und allgemein komplexe und nichtlineare Aufgabenstellungen.

In den bisher beschriebenen Ausführungsformen wurden nur zwei künstlich lernende Einheiten miteinander gekoppelt. Diese Idee ist aber grundsätzlich auch auf mehr als zwei Einheiten anwendbar, so dass beispielsweise drei oder mehr künstlich lernende Einheiten auf entsprechende Art und Weise gekoppelt werden können, wobei festgelegt sein kann, welche der Einheiten die Parameter einer bestimmten anderen Einheit oder mehrerer anderer Einheiten modulieren kann.

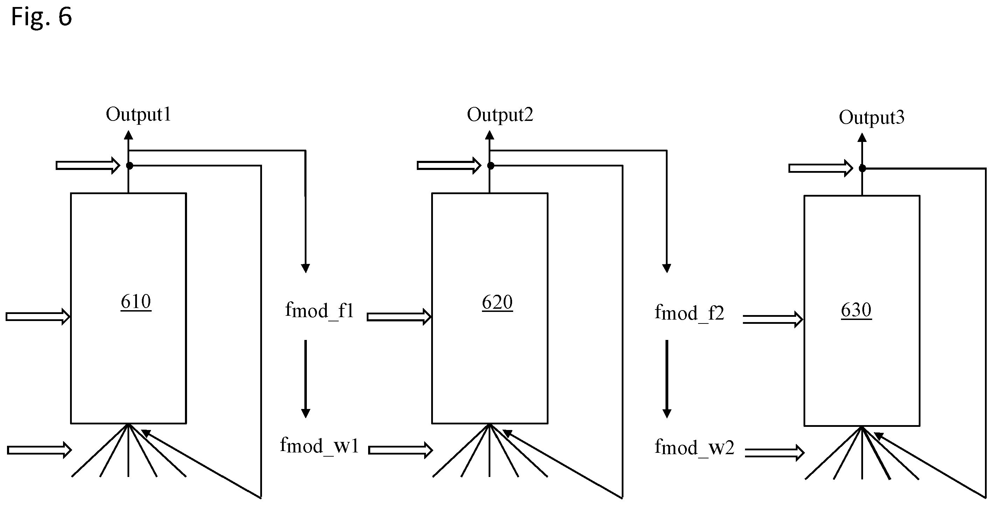

Figur 6 zeigt ein Beispiel, in dem drei neuronale Netze 610, 620, 630 (und/oder andere künstlich lernende Einheiten) vorgesehen sein können, wobei die Ausgabewerte des ersten Netzes 610 Modulationsfunktionen für die Gewichte und/oder Funktionen des zweiten Netzes 620 ergeben, und wobei wiederum Ausgabewerte des zweiten Netzes Modulationsfunktionen für die Gewichte und/oder Funktionen des dritten Netzes 630 ergeben. Auf diese Art und Weise könnten beliebig lange Ketten aus künstlich lernenden Einheiten gebildet werden, die sich gekoppelt durch Überlagerung beeinflussen.

Dabei können ähnlich wie im früheren Beispiel mit zwei neuronalen Netzen in einer Ausführungsform alle gekoppelten Netze dieselben Eingabewerte erhalten und die Verarbeitung nur durch die Modulation der jeweiligen Netze gekoppelt werden. Ebenso sind aber Ausführungsformen denkbar, in denen beispielsweise anschließend an zwei neuronale Netze wie in Figur 1 ein drittes neuronales Netz vorgesehen ist, welches die Ausgabewerte des ersten und/oder zweiten Netzes als Eingabewerte erhält. Optional könnten auch die Funktionen und/oder Gewichte dieses dritten neuronalen Netzes durch Modulationsfunktionen moduliert werden, die beispielsweise aus den Ausgabewerten des ersten Netzes gebildet werden. Dabei kann es sich um dieselben oder auch um andere Modulationsfunktionen als die für das zweite Netz gebildeten Modulationsfunktionen handeln. Alternativ könnten beispielsweise die Ausgabewerte des dritten Netzes verwendet werden, um zusätzliche Modulationsfunktionen zu bilden, die dann auf das erste und/oder zweite Netz rekursiv angewendet werden.

Es versteht sich, dass diverse weitere Kombinationen entsprechend gekoppelter lernender Einheiten möglich sind, bei denen zumindest zwei der verbundenen Einheiten eine Kopplung durch Bildung von Modulationsfunktionen für die beschreibenden Parameter der Einheiten, insbesondere für den Fall neuronaler Netze für die Gewichte und/oder Funktionen eines Netzes aufweisen. Mit zunehmender Anzahl der gekoppelten Einheiten sind dabei auch komplexere Variationen der Modulationen und Kopplungen denkbar.

Wie bereits anfangs angemerkt, wurden die hier beschriebenen Ausführungsformen zwar beispielhaft in Bezug auf neuronale Netze beschrieben, können aber grundsätzlich auch auf andere Formen des maschinellen Lernens übertragen werden. Dabei kommen alle Varianten in Betracht, bei denen eine Beeinflussung mindestens einer zweiten künstlich lernenden Einheit durch eine erste künstlich lernende Einheit durch Überlagerung bzw. Modulation auf Grundlage von Ausgabewerten möglich ist. Die Veränderung der Gewichte und Funktionen eines neuronalen Netzes durch Überlagerung mittels Modulationsfunktionen aus den vorstehenden Beispielen kann durch eine entsprechende Modulierung jedes geeigneten Parameters, der die Funktionsweise einer derartigen lernenden Einheit steuert bzw. beschreibt, ersetzt werden. In den Beispielen kann jeweils der Begriff "lernende Einheit" durch den Spezialfall eines neuronalen Netzes ersetzt werden, und umgekehrt können die beschriebenen neuronalen Netze der beispielhaften Ausführungsformen auch jeweils verallgemeinert in Form einer künstlich lernenden Einheit implementiert werden, auch wenn es im jeweiligen Beispiel nicht explizit angeführt ist.

Als Beispiele sind neben neuronalen Netzen unter anderem evolutionäre Algorithmen, Support Vector Machines (SVM), Entscheidungsbäume sowie jeweilige Spezialformen wie Random Forests oder genetische Algorithmen bekannt.

Ebenso können neuronale Netze und andere künstlich lernende Einheiten miteinander kombiniert werden. Dabei ist es insbesondere möglich, z.B. das erste neuronale Netz aus den vorstehenden Beispielen, das als schnell kategorisierende Einheit dargestellt wurde, durch eine beliebige andere künstlich lernende Einheit zu ersetzen. Dabei kann auch gezielt eine Methode gewählt werden, die sich für eine schnelle, grobe Klassifizierung von Merkmalen besonders gut eignet. Die Ausgabewerte einer solchen ersten lernenden Einheit können dann aber ebenso, wie es für zwei neuronale Netze beschrieben wurde, zur Bildung von Modulationsfunktionen für eine zweite künstlich lernende Einheit angewendet werden, die insbesondere wieder ein neuronales Netz sein kann.

Wie erwähnt bilden Systeme, die wie vorstehend beschrieben mehrere gekoppelte künstlich lernende Einheiten umfassen, "künstlich lernende Systeme".

Zusätzlich oder alternativ zu den beschriebenen Varianten kann ein künstlich lernendes System aus zwei oder mehr gekoppelten künstlich lernenden Einheiten weiter verbessert werden, indem eine Instanz hinzugefügt wird, die eine Bewertung bzw. Validierung von Ergebnissen des künstlich lernenden Systems vornimmt und entsprechend dieser Bewertung das Gewinnen von Ergebnissen durch das künstlich lernende System beeinflusst. Erfindungsgemäß wird hierfür ein weiteres künstlich lernendes System herangezogen. Im Weiteren werden der Aufbau und die Funktion eines zwei künstlich lernende Systeme umfassenden Gesamtsystems erläutert.

Solche künstlich lernenden Einheiten, die eine Bewertung/Validierung der Ergebnisse anderer künstlich lernender Einheiten bzw. derer Ergebnisse vornehmen, werden als Bewertungseinheiten bezeichnet. Im Unterschied dazu werden künstlich lernende Einheiten, die die Eingabewerte verarbeiten bzw. analysieren und zu entsprechenden Ergebnissen gelangen, die durch die Bewertungseinheiten geprüft wird, als Arbeitseinheiten bezeichnet. Die Funktion, d.h. die Abbildung von Eingabewerten auf Ausgabewerte, der künstlich lernenden Einheiten, die insbesondere neuronale Netze sind, wird durch Parameter, z.B. wie vorstehend beschrieben Funktionen und/oder Gewichte, bestimmt.

### Prinzipieller Aufbau und Funktion des Gesamtsystems

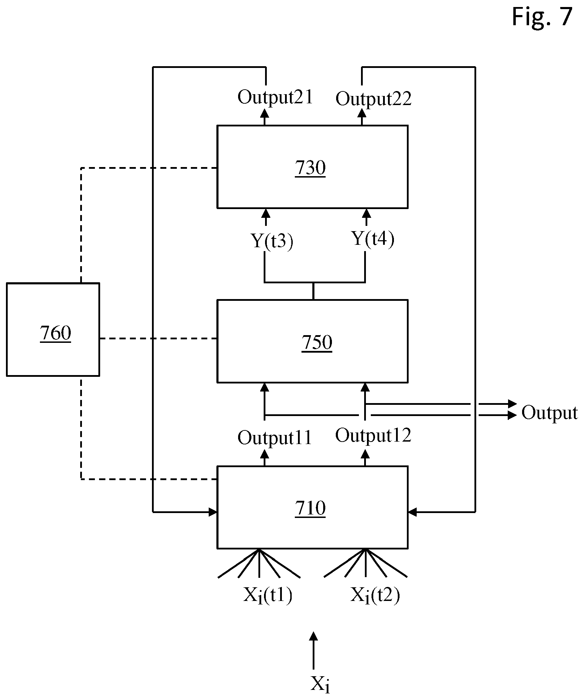

Figur 7 stellt den prinzipiellen Aufbau eines Gesamtsystems (bzw. Verarbeitungs- und Bewertungssystems), das ein Arbeitsebene 710 und eine Bewertungsebene 730, die beide künstlich lernende Systeme sind, d.h. die gekoppelte künstlich lernende Einheiten umfassen und die wie vorstehend beschrieben aufgebaut sind bzw. funktionieren. Weiterhin umfasst das Gesamtsystem eine Projektionsebene 750 und einen Gesamtabfolgespeicher 760.

Durch das Gesamtsystem werden Eingangsdaten bzw. Eingabewerte Xᵢ, die z.B. eine Zeitreihe von Sensordaten oder daraus durch eine Vorverarbeitung gewonnene Daten sind, verarbeitet, wobei Ausgangsdaten bzw. Ausgabewerte (Output) gewonnen werden, die die Gesamtausgabe des Gesamtsystems bilden.

Die Arbeitsebene 710 ist eingerichtet, die Eingabewerte Xᵢ, die in diese in Form von ersten und zweiten Eingabewerten Xᵢ(t1) und Xᵢ(t2), z.B. fortlaufende Sensordaten zu Zeitpunkten t1, t2, eingegeben werden, zu verarbeiten bzw. zu analysieren. Dabei werden einerseits aus den ersten Eingabewerten Xᵢ(t1) erste Ausgabewerte (Output11) entsprechend einer ersten Klassifizierung bestimmt, d.h. die Arbeitsebene, die ein künstlich lernendes System ist, ist so trainiert, dass sie eine entsprechende Klassifizierung der ersten Eingabewerte vornimmt. Andererseits werden aus den zweiten Eingabewerten Xᵢ(t2) zweite Ausgabewerte (Output12) entsprechend einer zweiten Klassifizierung bestimmt, d.h. die Arbeitsebene ist also entsprechend trainiert.

Das Bestimmen der ersten Ausgabewerte erfolgt vorzugsweise in einem relativ zu dem Zeitraum, der für das Bestimmen der zweiten Ausgebewerte benötigt wird, kurzen Zeitraum. Entsprechend umfasst die erste Klassifizierung relativ zur zweiten Klassifizierung wenige Klassen. Die ersten Ausgabewerte beruhen also auf einer groben Analyse der Eingabewerte während die zweiten Ausgabewerte auf einer feinen Analyse der Eingabewerte beruhen.

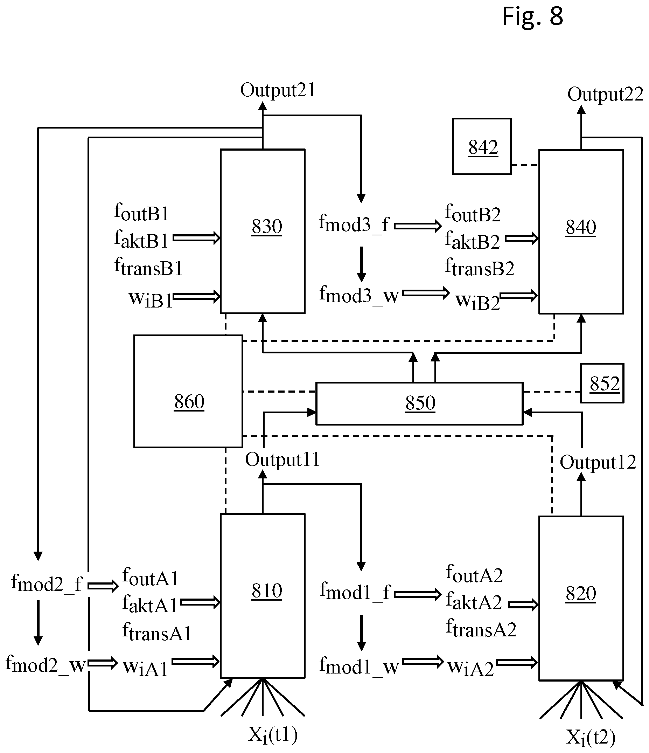

In der Projektionsebene 750 werden basierend auf den ersten und/oder zweiten Ausgabewerten erste Situationsdaten Y(t3) und zweite Situationsdaten Y(t4) gebildet. Dabei basieren die ersten Situationsdaten zumindest teilweise auf den ersten Ausgabewerten und die zweiten Situationsdaten zumindest teilweise auf den zweiten Ausgabewerten. Beispielsweise können im einfachsten Fall die Situationsdaten die jeweiligen Ausgabewerte selbst sein. Weitergehend können die Situationsdaten zumindest teilweise auch auf Grundlage anderer Werte gebildet werden. Bevorzugt ist jedoch, dass die ersten Situationsdaten auf Grundlage der ersten Ausgabewerte und die zweiten Situationsdaten auf Grundlage der zweiten Ausgabewerte gebildet werden. Zusätzlich kann der Projektionsebene ein optionales Speicherelement als Projektionsspeicher (in Figur 7 nicht gezeigt; vgl. Figur 8) zugeordnet sein, in welchem in der Projektionsebene anfallende Daten gespeichert werden können.

Die Projektionsebene 750 kann als Software- und/oder Hardware-Einheit oder als Kombination mehrerer solcher Einheiten ausgeführt sein. Dabei kann die Projektionsebene insbesondere einen Verbund aus mehreren Einheiten bilden, in denen auch künstlich lernenden Einheiten und ihre Speicherelemente enthalten sein können. Die Projektionsebene 750 kann dabei eine Zentraleinheit bilden, in der die Ausgaben mindestens der Arbeitsebene verarbeitet und verknüpft werden, z.B. eine Multiplexereinheit, eine Einheit, die Sequenzen aus Daten erzeugt, eine Einheit, die nach einer positiven oder negativen Bewertung den gespeicherten Daten oder Sequenzen eine Kennung bzw. ein Label aufprägt, das beim Vergleich neuer Daten mit gespeicherten Daten beispielsweise Entscheidungen abkürzen kann. Diese Funktionen können auch ganz oder teilweise durch Programmmodule erfüllt werden. Die Projektionsebene kann außerdem auch Eingabe- und/oder Ausgabeeinheiten umfassen, wie etwa einen Bildschirm oder eine akustische Einheit, wodurch ermöglicht wird, mit einem Nutzer oder einem Anwender, der z.B. eine Trainingsphase des Systems unterstützt, zu kommunizieren und etwa den derzeitigen Bearbeitungsstand einzuschätzen.

Die in der Projektionsebene 750 gebildeten ersten bzw. zweiten Situationsdaten bilden die Eingabe der Bewertungsebene 730. Die Arbeitsebene 730 ist eingerichtet, als Ausgabe erste Bewertungen (Output21) und zweite Bewertungen (Output22) zu bestimmen, die anzeigen, ob oder zu welchem Grad die ersten Situationsdaten vorgegebene erste Bedingungen erfüllen, bzw., ob oder zu welchem Grad die zweiten Situationsdaten vorgegebene zweite Bedingungen erfüllen. Die Bewertungsebene als künstlich lernendes System ist also trainiert, Ausgabewerte, die erste/zweite Bewertungen genannt werden, zu bestimmen, die anzeigen, ob oder zu welchem Grad die ersten/zweiten Situationsdaten vorgegebene erste/zweite Bedingungen erfüllen. Die Bewertungen können unabhängig voneinander jeweils einfache ja/nein Bewertungen sein (z.B. kann eine Bewertung lediglich die Werte 0 oder 1 annehmen) oder graduelle Bewertungen sein, die anzeigen zu welchem Grad eine Bedingung erfüllt ist (z.B. kann eine Bewertung alle Werte von 0 bis 1 annehmen). Entsprechend soll die Formulierung "ob Bedingungen erfüllt sind" oder ähnlich im Rahmen dieser Anmeldung, auch wenn nicht immer explizit erwähnt, auch den Fall einschließen, dass die Bedingungen zu einem gewissen Grad erfüllt sind, ist also im Sinne von "ob oder zu welchem Grad Bedingungen erfüllt sind" oder ähnlich zu verstehen. Das System kann nun eingerichtet sein, auf Grundlage der Bewertungen Ausgabewerte der Arbeitseinheiten zurückzuweisen oder anderweitig zu modifizieren, insbesondere die Verarbeitung der Eingabewerte durch die Arbeitsebene zu beeinflussen.

Das Bestimmen der ersten Bewertungen erfolgt vorzugsweise in einem relativ zu dem Zeitraum, der für das Bestimmen der zweiten Bewertungen benötigt wird, kurzen Zeitraum. Entsprechend sind relativ wenige erste Bedingungen (insbesondere weniger als 1000, bevorzugt weniger als 100) und relativ viele zweite Bedingungen vorgegeben. Die ersten Bewertungen zeigen also an, ob oder inwiefern grobe Bedingungen erfüllt sind, während die zweiten Bewertungen anzeigen, ob oder inwiefern relativ zu den ersten Bedingungen feine zweite Bedingungen erfüllt sind.

Durch die ersten und zweiten Bewertungen (Output21, Output22) wird nun die Verarbeitung der ersten und zweiten Eingabewerte Xᵢ(t1), Xᵢ(t2) beeinflusst. Insbesondere beeinflussen die ersten Bewertungen das Bestimmen der ersten Ausgabewerte aus den ersten Eingabewerten und die zweiten Bewertungen das Bestimmen der zweiten Ausgabewerte aus den zweiten Eingabewerten.

Die Gesamtausgabe (Output) beruht in jedem Fall auf den ersten und/oder zweiten Ausgabewerten der Arbeitsebene 710. Ob zu einem jeweiligen Zeitpunkt die ersten oder die zweiten Ausgabewerte als Gesamtausgabe angesehen werden, wird bevorzugt durch die Arbeitsebene bestimmt, kann aber auch durch einen Timer gesteuert werden, der als Bestandteil der Arbeitsebene angesehen werden kann. Denkbar ist hier auch eine Kombination der ersten und zweiten Ausgabewerte als Gesamtausgabe zu verwenden. Die Beeinflussung der Arbeitsebene 710 durch die Bewertungsebene 730 hat also nur einen indirekten Einfluss auf die Gesamtausgabe; in diesem Sinne stellen die ersten und zweiten Bedingungen keine absoluten Einschränkungen dar.

Bei der Verarbeitung von Eingangswerten werden also durch die Arbeitsebene 710 aus den ersten/zweiten Eingabewerten Xᵢ(t1), Xᵢ(t2) erste/zweite Ausgabewerte (Output11, Output12) bestimmt, durch die Projektionsebene 750 aus den ersten/zweiten Ausgabewerten erste/zweite Situationsdaten Y(t3), Y(t4) bestimmt und durch die Bewertungsebene 730 aus den ersten/zweiten Situationsdaten erste/zweite Bewertungen (Output21, Output22) bestimmt, die wiederum die Arbeitsebene beeinflussen. Die Gesamtausgabe (Output) ist jeweils aus den ersten/zweiten Ausgabewerten bestimmt.

Dieser Vorgang wiederholt sich in mehreren Iterationen bzw. Wiederholungen, wobei die Arbeitsebene versucht, beeinflusst durch die Bewertungen der Bewertungsebene, eine Gesamtausgabe bzw. erste und/oder zweite Ausgabewerte zu bestimmen, die im Einklang mit den ersten/zweiten Bedingungen steht. Im Allgemeinen können Eingabewerte Xᵢ auftreten, für die es nicht möglich ist, eine solche Gesamtausgabe (bzw. erste und/oder zweite Ausgabewerte), die alle Bedingungen erfüllt, zu finden. In diesem Fall kann der Vorgang der Wiederholungen abgebrochen werden, wenn festgestellt wird, dass sich die Gesamtausgabe (bzw. erste und/oder zweite Ausgabewerte) von Wiederholung zu Wiederholung oder über einen bestimmten Zeitraum nicht mehr wesentlich, also nur innerhalb vorgegebener Toleranzen, ändert. Es wird dann die letzte Gesamtausgabe des Systems als letztendliche Gesamtausgabe verwendet. Die letztendliche Gesamtausgabe bildet dann gewissermaßen die bestmögliche Gesamtausgabe, die von der Arbeitsebene unter Beeinflussung bzw. Beratung der Bewertungsebene gefunden werden kann. Ein Abbruch kann auch zeitgesteuert durch einen Timer (etwa in einem Echtzeitsystem) erfolgen, auch hier wird dann die letzte Gesamtausgabe verwendet.

Bei jeder Wiederholung/Iteration fallen entsprechende Daten an, die die ersten und zweiten Eingabewerte, die ersten und zweiten Ausgabewerte, die ersten und zweiten Situationsdaten, die ersten und zweiten Bewertungen und die Gesamtausgabe umfassen können. Es ist insbesondere vorgesehen, aus einigen oder bevorzugt allen dieser Elemente einen als Gesamtsatz bezeichneten Datensatz zu bilden.

Insgesamt fällt entsprechend der Abfolge von Iterationen eine Abfolge von Gesamtsätzen bzw. eine Gesamtabfolge an. Die Gesamtsätze bzw. die Abfolge von Gesamtsätzen kann in dem Gesamtabfolgespeicher 760 gespeichert werden. Dies ist durch gestrichelte Linien, die den Gesamtabfolgespeicher mit den drei Ebenen verbinden angedeutet. Bei der Speicherung werden die Gesamtsätze vorzugsweise mit Zeitstempeln und/oder einer Nummerierung versehen und/oder entsprechend ihrer Reihenfolge bzw. Abfolge angeordnet. Bevorzugt ist vorgesehen, jeweils mit der Speicherung einer neue Abfolge von Gesamtsätzen zu beginnen, wenn sich die Eingabewerte wesentlich, d.h. mehr als eine vorgegebene Toleranz ändern. Anhand der gespeicherten Abfolgen von Gesamtsätzen kann insbesondere die Verarbeitung von Eingabewerten durch das Gesamtsystem nachvollzogen werden.

### Erläuterungen zu den Bedingungen und deren Auswirkung auf das Gesamtsystem

Die (ersten/zweiten) Bedingungen können einfache Bedingungen sein, die z.B. prüfen, ob die Situationsdaten in einem bestimmten Wertebereich liegen. Weitergehend können die (ersten/zweiten) Bedingungen aber auch komplizierter sein, etwa in Form normativer Regeln R1 bis Rn vorliegen.

Bei den (ersten/zweiten) Bedingungen kann es sich um technische Bedingungen handeln. Etwa könnte in einer Maschine geprüft werden, ob die Drehzahl eines Motors (die z.B. durch die Arbeitsebene anhand von Vibrations-Sensordaten analysiert und als Ausgabe ausgegeben wird) in einem zulässigen Drehzahlbereich liegt. Eine weitergehende Regel wäre, eine solche Drehzahlprüfung von einem Betriebszustand (der ebenfalls durch die Arbeitsebene anhand von Sensordaten erfasst wird) abhängig zu machen.

Weitergehend können die Regeln auch nicht technischer Natur sein, wie "Keine Person darf getötet werden" (R1) oder "Keine Person darf in ihrer Freiheit eingeschränkt werden"(R2) oder "Es darf nicht gelogen werden" (R3) handeln. Die Regel-Erfüllung oder ein Regel-Bruch kann über eine der üblichen Parametrisierungen technisiert werden, z.B. 0 = kein Regelbruch, 1 = Regelbruch oder graduiert feiner unterteilt. Diese Regeln können als erste Bedingungen implementiert sein, die Parametrisierung von Regel-Erfüllung bzw. -Bruch entspricht dann den ersten Bewertungen. Die zweiten Bedingungen können dann eine feinere Untergliederung der Regeln R1 bis Rn in Regel-Klassifizierungen K1 bis Kn darstellen. Dabei handelt es sich um Ausnahmen, Ergänzungen und Alternativen zu diesen Regeln. Diese Regel-Klassifizierungen sind zunächst so strukturiert, das Ausnahmen zu R1 in der Regel-Klassifizierung K1, zu R2 in K2 usw. vorgegeben sind. In manchen Situationen, die in den Regel-Klassifizierungen benannt sind, darf die entsprechende Regel Rx gebrochen werden. Eine beispielhafte Regel-Klassifikation K1y der Regel R3 könnte lauten: "Kommen Personen zu schwerem Schaden, wenn die Wahrheit gesagt wird, darf gelogen werden.". Die Regeln gelten weiterhin prinzipiell, aber nur prima facie, solange keine Regel-Klassifizierung angewendet werden muss. Die zweiten Bedingungen (Regel-Klassifizierungen K1 bis Kn) stellen also eine feinere Ausgestaltung der ersten Bedingungen (Regeln R1 bis Rn) dar.

Es können jeweilige Speicher vorgesehen sein, in denen die ersten bzw. zweiten Bedingungen abgelegt bzw. gespeichert werden. Die Strukturierung der Speicher bzw. der Regeln R1 bis Rn und Regel-Klassifizierungen kann insbesondere der in Figur 5 gezeigten entsprechen, wobei im dortigen Speicher 512 die relativ groben Regeln R1 bis Rn gespeichert werden und im Speicher 522 die relativ feinen Regel-Klassifizierungen K1 bis Kn und deren feinere Untergliederung in Ebenen 524 gespeichert werden, wobei vorzugsweise m gleich n ist.

Bevorzugt ist vorgesehen, die Regeln und/oder Regel-Klassifizierungen, d.h. die ersten und insbesondere die zweiten Bedingungen, in einer Blockchain zu speichern, wobei die Regeln, in Form sogenannter Smart-Contracts implementiert sind. Ein Smart-Contract kann als ein Computerprotokoll angesehen werden, das eine Regel bzw. Regel-Klassifizierung abbildet und deren Einhaltung prüft.

Wird eine Regel-Klassifizierung genutzt, wird diese Bedingung in einem anderen Speicher (insbesondere Gesamtabfolgespeicher 760) situationsbezogen dokumentiert und abgelegt, wobei dies bevorzugt in einer Blockchain erfolgt, um sicher zu stellen, dass diese Dokumentation nicht modifizierbar ist. Es werden also Gesamtabfolgen bzw. Gesamtbewertungsabfolgen gespeichert. Das prinzipielle Gelten der Regel R3 wird durch die Regel-Klassifizierung nicht in Frage gestellt. Im Arbeitsmodus der Arbeitsebene bzw. des Gesamtsystems wird es bei einer Handlungsfolge zu einer iterativen Kette von Anpassungen und Bewertungen zwischen Arbeitsebene und Bewertungsebene führen, so dass in der Blockchain eine situationsbezogene Abstimmungs-Lösungsabfolge gespeichert wird, bei der die Bewertungsebene die Arbeitsebene auf Konflikte mit Regeln hinweist und Vorschläge für deren Modifizierung unterbreitet, aber die zukünftige Handlung nicht entscheidet. Die Handlungsentscheidung, d.h. die Gesamtausgabe des Systems, erfolgt ausschließlich über die Arbeitsebene, da diese unmittelbar mit der Außensituation und der Lösungsstrategie beschäftigt ist, während die Bewertungsebene vorzugsweise nur mittelbar über die Projektionsebene mit bereits über die Arbeitsebene verdichteten Informationen versorgt wird.

Eine beispielhafte Erweiterung dieses Grundprinzips ist, dass die Bewertungsebene bei Konfliktsituationen mit Verletzungsgefahr der Regeln R1...n auch die Gesamtabfolgen (bevorzugt Blockchain-Entscheidungspfade) in ihre Suche einbezieht und auf früher vorgenommene Lösungen prüft. Im Sinne des selbstlernenden Systems muss daher zwingend bei jeder Dokumentation in Gesamtabfolgen (bevorzugt Blockchain-Dokumentation) auch der Erfolg oder Misserfolg der vorgenommenen Handlung vermerkt sein, um nicht Fehler erneut zu begehen.

In einer weiteren Erweiterung des Prinzips, kann beispielsweise bei Konflikt mit Regel R1 nicht nur in den Regel-Klassifizierungen K1 und deren Unterklassifizierungen nach Verknüpfung, Modifikation etc. gesucht werden, sondern in allen bevorzugt Klassifizierungen, ob es eine bisher nicht bekannte Kombination zur Lösung der Situation gibt, auch wenn die anderen Regel-Klassifizierungen eigentlich nicht zu Regel R1 gehören.

In einer nochmaligen Erweiterung des Prinzips, können bei Erfolg aber auch Misserfolg Änderungen im Regel-Klassifikationsspeicher vorgenommen werden, indem neue, erfolgreiche Regel-Klassifizierungen eingefügt und ggf. vorhandene, aber nicht mehr aktuelle oder sich als ungünstig erwiesene Regel-Klassifizierungen gelöscht werden. Dies ergibt ein selbstlernendes Bewertungssystem (Gesamtsystem) mit einem starren Regelwerk, bei gleichzeitig flexiblem Klassifizierungssystem. Diese Varianten ermöglichen insbesondere die Implementierung "harter KI-Systeme".

### Beispielhafte konkrete Ausführungsform des Gesamtsystems

Figur 8 stellt eine beispielhafte Ausführungsform eines Gesamtsystems dar, in welchem die Arbeitsebene durch eine erste künstlich lernende Arbeitseinheit 810 und eine damit gekoppelte zweite künstlich lernende Arbeitseinheit 820 gebildet ist und die Bewertungsebene durch eine erste künstlich lernende Bewertungseinheit 830 und eine damit gekoppelte zweite künstlich lernende Bewertungseinheit 840 gebildet ist. Die künstlich lernenden Arbeits- und Bewertungseinheiten können jeweils neuronale Netze sein, deren Funktion durch Parameter, insbesondere durch Funktionen (etwa Transferfunktionen fₜᵣₐₙₛ, Aktivierungsfunktionen fₐₖₜ, Propagierungsfunktionen und Ausgabefunktionen fₒᵤₜ) und Gewichte bestimmt ist.

Die erste Arbeitseinheit 810 ist eingerichtet, aus den ersten Eingabewerten Xᵢ(t1) die ersten Ausgabewerte (Output11) zu bestimmen, d.h. die Arbeitseinheit ist als künstlich lernende Einheit entsprechend trainiert. Die Funktion der ersten Arbeitseinheit ist durch Parameter, insbesondere Funktionen f_{outA1}(Propagierungs- und Ausgabefunktionen), f_{aktA1}(Aktivierungsfunktionen), f_{transA1}(Transferfunktionen) bzw. Gewichte w_{iA1}, bestimmt. Die zweite Arbeitseinheit 820 ist eingerichtet, aus den zweiten Eingabewerten Xᵢ(t2) die zweiten Ausgabewerte (Output12) zu bestimmen, ist also entsprechend trainiert. Die Funktion der zweiten Arbeitseinheit ist durch Parameter, insbesondere Funktionen f_{outA2}, f_{aktA2}, f_{transA2} bzw. Gewichte w_{iA2}, bestimmt. Die erste Bewertungseinheit 830 ist eingerichtet, aus den ersten Situationsdaten Y(t3) die ersten Bewertungen (Output21) zu bestimmen. Die Funktion der ersten Bewertungseinheit ist durch Parameter, insbesondere Funktionen f_{outB1}, f_{aktB1}, f_{transB1} bzw. Gewichte w_{iB1}, bestimmt. Die zweite Bewertungseinheit 840 ist eingerichtet, aus den zweiten Situationsdaten Y(t4) die zweiten Bewertungen (Output22) zu bestimmen. Die Funktion der zweiten Bewertungseinheit ist durch Parameter, insbesondere Funktionen f_{outB2}, f_{aktB2}, f_{transB2} bzw. Gewichte w_{iB2}, bestimmt.

Die Kopplung zwischen den beiden Arbeitseinheiten 810, 820 bzw. zwischen den beiden Bewertungseinheiten 830, 840 entspricht der im Zusammenhang mit den Figuren 1 bis 6 erläuterten. Es werden also auf Grundlage der ersten Ausgabewerte (Output11) der ersten Arbeitseinheit 810 Modulationsfunktionen f_{mod1_f}, f_{mod1_w} gebildet, mittels derer Parameter (Funktionen f_{outA2}, f_{aktA2}, f_{transA2} und/oder Gewichte w_{iA2}) der zweiten Arbeitseinheit 820 moduliert werden, so dass die Funktion bzw. die Gewinnung von Ausgabewerten (Ouput12, zweite Ausgabewerte) der zweiten Bewertungseinheit beeinflusst wird. Ebenso werden auf Grundlage der ersten Bewertungen (Output21) der ersten Bewertungseinheit 830 dritte Modulationsfunktionen f_{mod3_f}, f_{mod3_w} gebildet, mittels derer Parameter, (Funktionen f_{outB2}, f_{aktB2}, f_{transB2} bzw. Gewichte w_{iB2}) der zweiten Bewertungseinheit 840 moduliert werden, so dass die Funktion bzw. das Bestimmen von Ausgabewerten (Ouput22, zweite Bewertungen) der zweiten Bewertungseinheit beeinflusst wird.

Das Gesamtsystem umfasst bevorzugt wieder eine Projektionsebene 850, für die das im Zusammenhang mit Figur 7 Gesagte gilt. Zusätzlich ist der Projektionsebene 850 ein optionales Speicherelement als Projektionsspeicher 852 zugeordnet, in dem Daten, insbesondere Situationsdaten, aber auch die ersten und zweiten Ausgabewerte, aus der bzw. durch die Projektionsebene zumindest vorübergehend abgespeichert werden können. Die Speicherdauer für diese Daten kann beispielsweise allgemein festgelegt sein, kann aber auch von einer der Einheiten festgelegt werden, etwa von der ersten Bewertungseinheit. Je nach Ausführungsform kann der Speicher der Projektionsebene im Wesentlichen als Kurzzeitspeicher dienen, dessen Inhalte nach Bedarf überprüft, gelöscht, überschrieben und/oder in andere Speicher, etwa in die Speicherelemente der jeweiligen neuronalen Netze bzw. Einheiten übertragen werden können. Damit kann der Projektionsspeicher 852 beispielsweise als Ringspeicher ausgeführt werden, in dem jeweils nach einer bestimmten Anzahl von Einträgen oder einer bestimmten Datenmenge der Speicher "voll" ist und daher die vorherigen Daten von vorne überschrieben werden, was einer Ringstruktur entspricht.

Ebenso umfasst die dargestellte Ausführungsform wieder einen Gesamtabfolgespeicher 860, für den wieder das im Zusammenhang mit Figur 7 Gesagte gilt. Durch gestrichelte Linien ist wieder angedeutet, dass der Gesamtabfolgespeicher 860 Daten von beiden Arbeitseinheiten, beiden Bewertungseinheiten und der Projektionsebene erhalten kann bzw. mit diesen austauschen kann, die Einheiten können vorzugsweise auch auf die im Gesamtabfolgespeicher gespeicherten Daten zugreifen.

Die Beeinflussung der Arbeitsebene (d.h. erste und zweite Arbeitseinheiten) bzw. der durch diese gebildeten ersten und zweiten Ausgabewerte durch die Bewertungsebene (d.h. erste und zweite Bewertungseinheit) bzw. durch die in dieser gebildeten ersten und zweiten Bewertungen wird wie folgt implementiert.

Entsprechend der in Figur 8 gezeigten Ausführungsform ist hierzu vorgesehen, die erste Arbeitseinheit 810 durch die ersten Bewertungen (Output21) der ersten Bewertungseinheit 830 zu beeinflussen. Dies kann einerseits erfolgen, indem die ersten Bewertungen oder daraus abgeleitete Werte als zusätzliche (zusätzlich zu Xᵢ(t)) Eingabewerte der ersten Arbeitseinheit 810 verwendet werden, diese können als erste Bewertungs-Eingabewerte bezeichnet werden. In diesem Fall sollten die ersten Bewertungen zu Beginn der Analyse von Eingabewerten Xᵢ(t) mit neutralen Werten initialisiert werden, z.B. mit Werten, die anzeigen, dass alle ersten Bedingungen erfüllt sind. Eine solche Initialisierung mit neutralen Werten kann auch im weiteren Verlauf erneut durchgeführt werden, etwa wenn sich die Eingabewerte wesentlich ändern oder wenn die Dominanz von einer der Arbeitseinheiten zur anderen übergeht (insbesondere von der zweiten zur ersten Arbeitseinheit), auch eine zeitliche Steuerung ist denkbar.

Zusätzlich oder alternativ, kann bevorzugt die erste Bewertungseinheit 830 mit der ersten Arbeitseinheit 810 entsprechend der obig, insbesondere im Zusammenhang mit den Figuren 1 bis 6, beschriebenen Kopplung gekoppelt sein. Es können also auf Grundlage der ersten Bewertungen (Output21) der ersten Bewertungseinheit 830 zweite Modulationsfunktionen f_{mod2_f}, f_{mod2_w} gebildet werden, mittels derer die Parameter, d.h. Funktionen f_{outA1}, f_{aktA1}, f_{transA1} und/oder Gewichte w_{iA1}, der ersten Arbeitseinheit 810 moduliert werden, so dass die Funktion bzw. die Gewinnung von Ausgabewerten (Ouput11) der ersten Arbeitseinheit beeinflusst wird.

Weiterhin beeinflussen die zweiten Bewertungen die Funktion der zweiten Arbeitseinheit 820. Dies kann erfolgen, indem die zweiten Bewertungen oder daraus abgeleitete Werte als zusätzliche (zusätzlich zu Xᵢ(t)) Eingabewerte (zweite Bewertungs-Eingabewerte) der zweiten Arbeitseinheit 820 verwendet werden. In diesem Fall sollten die entsprechenden zweiten Bewertungen zu Beginn der Verarbeitung von Eingabewerten Xᵢ(t) mit neutralen Werten initialisiert werden, z.B. mit Werten, die anzeigen, dass alle zweiten Bedingungen erfüllt sind. Eine solche Initialisierung mit neutralen Werten kann auch im weiteren Verlauf erneut durchgeführt werden, etwa wenn sich die Eingabewerte wesentlich ändern oder wenn die Dominanz von einer der Arbeitseinheiten zur anderen übergeht (insbesondere von der ersten zur zweiten Arbeitseinheit), auch eine zeitliche Steuerung ist wieder denkbar.

Weitergehend (in der Figur nicht dargestellt) können auf Grundlage der zweiten Bewertungen (Output22) der zweiten Bewertungseinheit 840 vierte Modulationsfunktionen f_{mod4_f}, f_{mod4_w} gebildet werden, mittels derer Parameter , d.h. Funktionen f_{outA2}, f_{aktA2}, f_{transA2} und/oder Gewichte w_{iA2}, der zweiten Arbeitseinheit 820 moduliert werden, so dass die Funktion bzw. die Gewinnung von Ausgabewerten (Ouput12) der zweiten Arbeitseinheit beeinflusst wird. Allerdings sollte die Menge der Parameter (Funktionen und/oder Gewichte) der zweiten Arbeitseinheit, die durch die vierten Modulationsfunktionen modulierten werden, disjunkt von der Menge der Parameter (Funktionen und/oder Gewichte) der zweiten Arbeitseinheit, die durch die ersten Modulationsfunktionen modulierten werden, sein. Die zweite Bewertungseinheit sollte also nur Parameter (Funktionen und/oder Gewichte) der zweiten Arbeitseinheit modulieren, die nicht durch die erste Arbeitseinheit moduliert werden. Dies ist vorteilhaft, um Instabilitäten zu verhindern. Ist die zweite Arbeitseinheit ein neuronales Netz mit mehreren verdeckten Schichten, wie es z.B. beim sogenannten "Deep Learning" verwendet werden kann, können beispielsweise eine oder mehrere eingangsseitige Schichten mittels der ersten Modulationsfunktion moduliert werden (d.h. Funktionen und/oder Gewichte der Neuronen der Schichten werden moduliert) während eine oder mehrere ausgangsseitige Schichten mittels der vierten Modulationsfunktionen moduliert werden. Bildlich gesprochen würde dann die erste Arbeitseinheit mit den ersten Ausgabewerten mittels der ersten Modulationsfunktionen die grundlegende Analyse der Eingabewerte in der zweiten Arbeitseinheit beeinflussen während die zweite Bewertungseinheit mit den zweiten Bewertungen mittels den vierten Modulationsfunktionen die Klassifizierung der durch diese grundlegende Analyse erhaltenen Ergebnisse in der zweiten Arbeitseinheit beeinflusst.

Die Arbeitseinheiten 810, 820 und die Bewertungseinheiten 830, 840 können jeweils über einen Speicher, insbesondere einen Klassifikationsspeicher, verfügen, in denen die Klassifizierungen bzw. Bedingungen gespeichert werden. Die entsprechende Speicherstruktur wurde ausführlich im Zusammenhang mit Figur 5 erläutert. In Figur 8 ist exemplarisch lediglich für die zweite Bewertungseinheit 840 ein Speicher 842 eingezeichnet. Die Speicher können jeweils separat von den Einheiten ausgeführt sein oder auch in der jeweiligen Einheit umfasst sein.

Der Speicher 842 der zweiten Bewertungseinheit (und auch ein entsprechender Speicher der ersten Bewertungseinheit) kann (neben einem Klassifikationsspeicher) einen Abfolgespeicher, genauer einen zweiten Abfolgespeicher, umfassen, der dazu dient, Abfolgen von Bewertungen zu speichern. Im Falle der zweiten Bewertungseinheit wird dabei eine (oder mehrere) zweite Bewertungsabfolge gespeichert, die zweite Bewertungssätze umfasst, die jeweils Sätze von Eingabewerten (zweiten Situationsdaten) der zweiten Bewertungseinheit und den daraus durch die zweite Bewertungseinheit erhaltenen zweiten Bewertungen umfassen. Die Bewertungssätze können mit jeweiligen Zeitinformationen versehen sein und/oder mittels einer Nummerierung durchnummeriert sein und/oder entsprechend ihrer Reihenfolge angeordnet sein. Ebenso kann in einem nicht dargestellten Speicher der ersten Bewertungseinheit 830 ein erster Abfolgespeicher umfasst sein, der analog dazu dient, erste Bewertungsabfolgen zu speichern, die erste Bewertungssätze umfassen, die jeweils Sätze von Eingabewerten (ersten Situationsdaten) der ersten Bewertungseinheit und den daraus durch die erste Bewertungseinheit erhaltenen ersten Bewertungen umfassen.

Sowohl die Arbeitsebene als auch die Bewertungsebene können weitere künstlich lernende Einheiten umfassen, die jeweils wie in Figur 6 in gekoppelt sind. Die Arbeitsebene könnte also eine dritte (und evtl. eine vierte, fünfte, ...) Arbeitseinheit umfassen, die mit der zweiten Arbeitseinheit (bzw. mit der jeweils vorhergehenden) mittels Modulationsfunktionen gekoppelt ist, die durch die Ausgabewerte der zweiten (bzw. vorhergehenden) Arbeitseinheit bestimmt sind. Ebenso könnte die Bewertungsebene eine dritte (und evtl. eine vierte, fünfte, ...) Bewertungseinheit umfassen, die mit der zweiten Bewertungseinheit (bzw. mit der jeweils vorhergehenden) mittels Modulationsfunktionen gekoppelt ist, die durch die Bewertungen der zweiten (bzw. vorhergehenden) Bewertungseinheit bestimmt sind. Das Zusammenspiel einander entsprechender n-ter Arbeits- und Bewertungseinheiten kann dann wie das Zusammenspiel zwischen zweiter Arbeits- und zweiter Bewertungseinheit erfolgen, d.h. insbesondere beeinflusst die n-te Bewertungseinheit die n-te Arbeitseinheit.

### Beispielhafte Verarbeitung von Eingabewerten

Die sich daraus ergebende Verarbeitung bzw. Analyse von Eingangsdaten wird im Folgenden beispielhaft beschrieben. Die Eingangsdaten bilden Eingangswerte für die Arbeitseinheiten 810, 820. Die Eingangswerte können für beide Arbeitseinheiten identisch oder unterschiedlich, etwa zu verschiedenen Zeitpunkten einer Zeitreihe, sein. Die Eingangswerte Xᵢ(t) können zeitabhängig sein, z.B. eine Zeitreihe von Sensormesswerten oder ein Video-/Audiostream, wobei die Arbeitseinheiten die Eingangswerte Xᵢ(t1), Xᵢ(t2) zu bestimmten Zeitpunkten, etwa gesteuert durch einen Timer oder durch einen Dominanzübergang, oder auch fortlaufend, insbesondere bei rekurrenten neuronalen Netzen, erhalten bzw. übernehmen können. Die Arbeitseinheiten können eine fortlaufende Verarbeitung der Eingangswerte durchführen oder eine Verarbeitung beginnend zu bestimmten Zeitpunkten, etwa Timer-gesteuert oder bei bestimmten Ereignissen, z.B. Dominanzübergang, durchführen.

Durch die erste Arbeitseinheit 810 werden aus den Eingabewerten Xᵢ(t1) erste Ausgabewerte (Output11) bestimmt, aus denen durch die Projektionsebene 850 erste Situationsdaten (z.B. die ersten Ausgabewerte selbst oder Teile davon oder daraus abgeleitete Werte) gebildet werden, die wiederum als Eingabe für die erste Bewertungseinheit 830 dienen, welche diese (d.h. die ersten Situationsdaten) bewertet, d.h. prüft, ob erste Bedingungen erfüllt sind, und entsprechende erste Bewertungen (Output21) erzeugt. Auf Grundlage der ersten Bewertungen wird die erste Arbeitseinheit 810 bzw. die Ausgabe (Output1 1) beeinflusst.

Wird festgestellt (anhand der ersten Bewertungen), dass die ersten Bedingungen nicht oder nur zu einem gewissen Grad erfüllt sind, können die Eingabewerte Xᵢ(t) erneut durch die erste Arbeitseinheit 810 verarbeitet werden, wobei jetzt die Beeinflussung durch die ersten Bewertungen berücksichtigt wird (etwa durch die aus den ersten Bewertungen bestimmten zweiten Modulationsfunktionen oder indem die ersten Bewertungen oder daraus abgeleitete Werte als zusätzliche Eingabewerte verwendet werden), so dass sich im Allgemeinen geänderte erste Ausgabewerte (Output1 1) ergeben, die, insbesondere bei entsprechendem Training der ersten Arbeitseinheit, durch die ersten Bewertungen beeinflusst sind.

Dies kann in Iterationen mehrmals durchlaufen werden, bis festgestellt wird, dass die ersten Bedingungen erfüllt sind, wobei dann die ersten Ausgabewerte als (Gesamt-)Ausgabe bzw. Gesamt-Ausgabewerte des Systems verwendet werden können. Nachfolgend können dann die Eingangswerte durch die zweite Arbeitseinheit 820 verarbeitet werden und/oder es kann die Dominanz an die zweite Arbeitseinheit übergehen. Die damit erzeugten zweiten Ausgabewerte können dann zusätzlich oder alternativ als Gesamtausgabe werden, eventuell je nach Dominanz.

Alternativ oder zusätzlich, wenn es beispielsweise nicht möglich ist, alle ersten Bedingungen zu erfüllen, oder nur ein beschränkter Zeitraum zur Verfügung steht, etwa in einem Echtzeitsystem, kann die Verarbeitung durch die zweite Arbeitseinheit 820 und/oder die Dominanz der zweiten Arbeitseinheit vorzugsweise auch nach einer vorgegebenen Zeitspanne (gesteuert durch einen Timer), nach Erreichen einer vorgegebenen Anzahl von Iterationen, wenn sich die ersten Ausgabewerte innerhalb vorgegebener Toleranzen zwischen zwei aufeinanderfolgenden Iterationen nicht mehr ändern, oder wenn sich die ersten Bewertungen innerhalb vorgegebener Toleranzen zwischen zwei aufeinanderfolgenden Iterationen nicht mehr ändern, erfolgen. Kombinationen hiervon sind ebenso denkbar.

Geht die Dominanz wieder an die erste Arbeitseinheit 810 über, etwa bei wesentlich geänderten Eingabewerten Xᵢ, kann dieser Ablauf bzw. diese Bewertung durch die erste Bewertungseinheit 830 erneut durchgeführt werden, gegebenenfalls nach Initialisierung der ersten Bewertungen.

Optional könnten, insbesondere wenn die zweite Arbeitseinheit 820 dominiert, Situationsdaten durch die Projektionsebene 850 auch auf Grundlage der zweiten Ausgabewerte (Output12) der zweiten Arbeitseinheit 820 gebildet und durch die erste Bewertungseinheit 830 bewertet werden, d.h. es wird geprüft, ob die zweiten Ausgabewerte in Einklang mit den ersten Bedingungen stehen. Ist das nicht oder nur teilweise der Fall, könnte auch die zweite Arbeitseinheit durch die (jetzt geänderten) ersten Bewertungen beeinflusst werden, analog zur Beeinflussung der ersten Arbeitseinheit durch die ersten Bewertungen, wobei hier keine Modulationsfunktionen verwendet werden sollten, insbesondere keine, die Parameter, d.h. Funktionen f_{outA2}, f_{aktA2}, f_{transA2} und/oder Gewichte w_{iA2}, der zweiten Arbeitseinheit 820 modulieren, die durch die ersten Modulationsfunktionen moduliert werden.

Die durch die erste Bewertungseinheit 830 gebildeten ersten Bewertungen beeinflussen indirekt über die Kopplung auch die Funktion der zweiten Bewertungseinheit 840, d.h. vermöge der dritten Modulationsfunktionen f_{mod3_f}, f_{mod3_w}.

Die zweite Bewertungseinheit 840 erhält als Eingangswerte in der Projektionsebene 850 gebildete zweite Situationsdaten (die nicht identisch zu den ersten Situationsdaten sein müssen, die die erste Bewertungseinheit 830 erhält). Bevorzugt sind diese zweiten Situationsdaten auf Grundlage der zweiten Ausgabewerte (Output12) zumindest der zweiten künstlich lernenden Arbeitseinheit 820 gebildet, d.h. die zweiten Situationsdaten können einige oder alle der zweiten Ausgabewerte umfassen oder auch daraus abgeleitete Werte; wobei weitergehend die Situationsdaten zumindest teilweise auch auf Grundlage der ersten Ausgabewerte (Output11) der ersten künstlich lernenden Arbeitseinheit 810 oder anderer Werte gebildet werden können.

Wenn die zweite Arbeitseinheit 820 die Eingabewerte Xᵢ(t2) verarbeitet und/oder die Dominanz an die zweite Arbeitseinheit übergegangen ist, werden zweite Situationsdaten durch die Projektionsebene 850 gebildet, die zumindest teilweise auf den zweiten Ausgabewerten (Output12) der zweiten Arbeitseinheit 820 beruhen. Diese zweiten Situationsdaten dienen als Eingabewerte für die zweite Bewertungseinheit 840, die daraus zweite Bewertungen bildet. Diese beeinflussen Funktion der zweiten Arbeitseinheit 820. Wenn die zweiten Bewertungen anzeigen, dass alle zweiten Bedingungen erfüllt sind, können die zweiten Ausgabewerte beispielsweise als Gesamtausgabe des Systems verwendet werden.

Durch die Beeinflussung der zweiten Arbeitseinheit durch die zweiten Bewertungen ergeben sich im Allgemeinen, zumindest, wenn die zweiten Bewertungen anzeigen, dass nicht alle zweiten Bedingungen erfüllt sind und die zweite Arbeitseinheit entsprechend trainiert wurde, geänderte zweite Ausgabewerte (Output12), aus denen dann durch die Projektionsebene gegebenenfalls geänderte Situationsdaten gebildet werden, die durch die zweite Bewertungseinheit geprüft werden und zu geänderten zweiten Bewertungen führen.

Dies kann sich in mehreren Iterationen solange wiederholen bis beispielsweise eine vorgegebene Anzahl von Iterationen erreicht ist, eine vorgegebene Zeitspanne verstrichen ist oder sich die zweiten Ausgabewerte innerhalb vorgegebener Toleranzen zwischen zwei aufeinanderfolgenden Iterationen nicht mehr ändern. Kombination hiervon oder andere Bedingungen sind ebenso denkbar.

Das Zusammenspiel zwischen zweiter Bewertungseinheit 840 und zweiter Arbeitseinheit 820 entspricht also dem Zusammenspiel zwischen erster Bewertungseinheit 830 und erster Arbeitseinheit 810. Zusätzlich wird allerdings aufgrund der Kopplung der beiden Bewertungseinheiten die Bewertung durch die zweite Bewertungseinheit 840, d.h. die zweiten Bewertungen, von den ersten Bewertungen, die durch die erste Bewertungseinheit 810 gewonnen wurden, beeinflusst. Entsprechend wird vorzugsweise der zeitliche Ablauf so gesteuert, dass zunächst das Zusammenspiel zwischen erster Arbeitseinheit und erster Bewertungseinheit erfolgt und anschließend das Zusammenspiel zwischen zweiter Arbeitseinheit und zweiter Bewertungseinheit.

Auch wenn vorstehend die Verarbeitung von Eingabewerten als Prozess aufeinanderfolgender Verarbeitungsschritte in den einzelnen künstlich lernenden Einheiten dargestellt wurde, ist anzumerken, dass die Einheiten (erste, zweite Arbeitseinheit, erste, zweite Bewertungseinheit) im Prinzip asynchron zueinander arbeiten können, d.h. jede Einheit kann entsprechend ihrer eigenen Geschwindigkeit arbeiten, wobei die jeweils gerade vorliegenden Eingangsdaten bzw. Modulationen (die teilweise Ausgaben anderer Einheiten sind) verwendet werden. Eine zeitliche Synchronisation kann, muss aber nicht, vorgesehen sein. Die Einheiten können entsprechend parallel zueinander arbeiten.

### Training

Nachfolgend wird ein beispielhaftes Training des Gesamtsystems beschrieben. Wie bereits erläutert werden im Rahmen überwachten Lernens Eingangswerten und entsprechende (d.h. jeweiligen Eingangswerten zugeordnete) gewünschte Ausgangswerten (d.h. bekannte Trainingsdaten) vorgegeben und es wird beim Training ein Fehler bezüglich einem Fehlermaß, das die Abweichung zwischen von der künstlich lernenden Einheit bestimmten Ausgangswerten und den gewünschten Ausgangswerten anzeigt, minimiert. Ein typisch verwendetes Fehlermaß ist eine mittlere (eventuell gewichtete) quadratische Abweichung. Parameter der künstlich lernenden Einheit (z.B. Gewichte) werden beim Training variiert, um den Fehler zu minimieren. Dieses Vorgehen ist dem Fachmann an sich bekannt.

Das Training des Systems erfolgt so, dass zunächst die Arbeits- und die Bewertungsebene einzeln trainiert werden. Diese stellen "künstlich lernende Systeme" dar, deren Training in Zusammenhang mit den Figuren 1-5 erläutert wurde. Im vorstehend genannten überwachten Lernen werden also beim Training der Arbeitsebene Eingabewerte (die Sensordaten umfassen) als Eingangswerte und entsprechende (bekannte) gewünschte Ausgabewerte (Steuerungsparameter, Zustandsparameter) als Ausgangswerte verwendet und beim Training der Bewertungsebene werden Situationsdaten (die aus den Ausgabewerten bzw. Steuerungsparametern/Zustandsparametern gebildet sind) als Eingangswerte und entsprechende (bekannte) gewünschte Bewertungen (die anzeigen, inwiefern Bedingungen erfüllt sind) als Ausgangswerte verwendet.

Weitergehend kann, während des gekoppelten Betriebs von Arbeits- und Bewertungsebene, ein Anpassen bzw. Ergänzen der Bedingungen erfolgen (siehe weiter unten). Dieser Prozess kann als gemeinsames Lernen von Arbeits- und Bewertungsebene, d.h. des Gesamtsystems, angesehen werden.

Bezüglich der Arbeitsebene und der Bewertungsebene ist, bezugnehmend auf die in Fig. 8 gezeigte Ausführung, in jeder der beiden Ebenen eine erste 810, 830 und eine zweite 820, 840 künstlich lernende Einheit umfasst, die analog zu den Figuren 1-5 gekoppelt sind. Hier erfolgt innerhalb einer Ebene insbesondere zunächst ein eigenständiges Training jeder der beiden (erste/zweite) Einheiten (d.h. einzeln und unabhängig von der gekoppelten Einheit), wobei für beide Einheiten der gleiche Trainings-Datensatz an Eingangswerten verwendet werden kann oder verschiedene Trainings-Datensätze an Eingangswerten verwendet werden können. Unterschiedlich zwischen der ersten und der zweiten Einheit sind die zugeordneten gewünschten Ausgangswerte (die den Eingangswerten entsprechen, d.h. die im Training möglichst erreicht werden sollen), wobei die gewünschten Ausgangswerte der zweiten Einheit bevorzugt eine Art Verfeinerung der gewünschten Ausgangswerte der ersten Einheit darstellen. Beispielsweise könnte vorgesehen sein, dass die gewünschten Ausgangswerte der ersten Einheit eine echte (nicht-triviale) Teilmenge der gewünschten Ausgangswerte der zweiten Einheit sind, auch könnte vorgesehen sein, das im Fehlermaß verschiedene Gewichte für Abweichungen bestimmter Ausgangswerte verwendet werden. Weitergehend kann ein gemeinsames Training der gekoppelten (erste/zweite) Einheiten erfolgen. Hierbei können die Fehler von erster und zweiter Einheit eingehen, wobei etwa die Fehler der ersten und der zweiten Einheit unterschiedlich gewichtet werden können. Im gemeinsamen Training kann auch der Zusammenhang der Ausgabewerte ersten Einheit mit den Modulationsfunktionen, über die die zweite Einheit beeinflusst wird, erzeugt werden.

### Erster/Zweiter Abfolgespeicher

Das Speichern der ersten/zweiten Bewertungsabfolgen ermöglicht es, die "Entscheidungen" der Bewertungseinheiten nachzuvollziehen und gegebenenfalls, etwa falls diese nicht wie gewünscht funktionieren, ein weiteres Training unter Verwendung der Bewertungsabfolgen durchzuführen.

Weitergehend kann eine Bewertungseinheit 830, 840 vor oder parallel zu dem Bestimmen der Bewertungen (Output21, Output22) einen Vergleich eingegebener Situationsdaten Y(t3), Y(t4) mit im Abfolgespeicher in Bewertungsabfolgen gespeicherten Bewertungssätzen durchführen, d.h. die eingegebenen Situationsdaten werden mit entsprechenden Situationsdaten in den gespeicherten Bewertungsätzen verglichen. Wird festgestellt, dass diese gleich oder ähnlich sind, d.h. dass gleiche oder ähnliche Situationsdaten bereits zu einem früheren Zeitpunkt aufgetreten sind, können frühere Bewertungen aus der Bewertungsabfolge gelesen und als Ausgabe, also als Bewertungen für die aktuellen Situationsdaten, verwendet werden. Insbesondere können der Bewertungssatz, in dem gleich oder ähnlicher Situationsdaten aufgetreten sind, und gegebenenfalls auf diesen nachfolgende Bewertungssätze in der entsprechenden Bewertungsabfolge übersprungen werden. Es werden also frühere Bewertungen als aktuelle Bewertungen für die eingegebenen Situationsdaten Y(t3), Y(t4) verwendet, die einem Bewertungssatz entnommen sind, der in der jeweiligen Bewertungsabfolge zu einem späteren Zeitpunkt aufgetreten ist (dazu sind die Bewertungssätze vorteilhafterweise mit Zeitstempeln versehen, mit einer Nummerierung versehen und/oder entsprechend der Reihenfolge ihres Auftretens angeordnet). "Ähnlich" ist jeweils im Sinne geeignet gewählter Toleranzen zu verstehen.

Dabei können maximal so viele Bewertungssätze übersprungen werden bis die Bewertungen anzeigen, dass eine vorgegebene Anzahl von übersprungenen Bewertungsätzen erreicht ist und/oder Zeitinformationen anzeigen, dass eine vorgegebene Zeitspanne innerhalb der Bewertungsabfolge verstrichen ist und/oder in der jeweiligen Bewertungsabfolge die Eingabewerte der Bewertungseinheit (Situationsdaten) innerhalb vorgegebener Toleranzen gegenüber dem vorherigen Eintrag in der Bewertungsabfolge unverändert sind. Diese Vorgehensweise kann zu einer Beschleunigung des Verfahrensablaufs führen.

Die Speicherung der ersten und/oder zweiten Bewertungsabfolge im ersten bzw. zweiten Abfolgespeicher erfolgt vorzugsweise in kryptologisch abgesicherter Form, um diese vor Manipulationen zu schützen. Hierzu ist insbesondere jeweils die Verwendung einer Blockchain vorgesehen, wobei die Einträge der Abfolgen (z.B. ein oder mehrere Bewertungssätze für die erste Bewertungsabfolge) die Blöcke der Blockchain bilden. Ein Block umfasst also jeweils zumindest einen Bewertungssatz und ist mit der Abfolge der vorherigen Bewertungssätze, die in vorherigen Blöcken gespeichert sind, nach dem Blockchain-Prinzip verkettet.

### Komplexitätsstruktur

Bevorzugt ist vorgesehen, dass die Komplexitätsstruktur der Arbeitsebene und der Bewertungsebene gestaltet sind wie insbesondere im Zusammenhang mit den Figuren 1 und 5 beschrieben, dass also die erste Arbeitseinheit eine relativ grobe Analyse bzw. Einteilung der Eingabewerte in relativ wenige Klassen vornimmt und im Vergleich dazu die zweite Arbeitseinheit eine relativ feine Analyse bzw. Unterteilung in relativ viele Klassen bzw. Unterklassen und weitere Hierarchiestufen vornimmt und dass ebenso die erste Bewertungseinheit prüft, ob die ersten Situationsdaten bzw. die ersten Ausgabewerte relativ grobe Bedingungen erfüllen, und die zweite Bewertungseinheit prüft, ob die zweiten Situationsdaten bzw. die zweiten Ausgabewerte im Vergleich dazu relativ feine Bedingungen erfüllen.

Dabei kann ersten Bewertungseinheit 830 ein Klassifikationsspeicher (nicht gezeigt) zugeordnet sein, der mit vergleichsweise wenigen Ebenen und Klassen ausgestaltet ist. Im vorliegenden Beispiel wird davon ausgegangen, dass die Anzahl der Ebenen und/oder Klassen für die erste Bewertungseinheit 830 deutlich geringer ist als für die zweite Arbeitseinheit 820, das als analysierende Einheit vorgesehen ist, also beispielsweise um eine oder mehrere Größenordnungen kleiner. Ebenso kann die Anzahl der Ebenen und/oder Klassen für die zweite Bewertungseinheit 840 deutlich größer als die Anzahl der Ebenen und/oder Klassen für die erste Bewertungseinheit 830 sein. Auch kann die Anzahl der Ebenen und/oder Klassen für die zweite Arbeitseinheit 820 deutlich größer als die Anzahl der Ebenen und/oder Klassen für die erste Arbeitseinheit 810 sein. Die Speicher können sich auch weiter unterscheiden, dabei wird aber üblicherweise eine deutliche Asymmetrie zwischen den Speichergrößen und -komplexitäten vorherrschen.

### Anpassen und/oder Ergänzen von Bedingungen

Wie im Zusammenhang mit Figur 7 ausgeführt, kann es Fälle geben, in denen es dem Gesamtsystem nicht gelingt, erste/zweite Ausgabewerte, d.h. eine Gesamtausgabe, zu finden, so dass daraus erste/zweite Situationsdaten abgeleitet werden, die mit allen ersten bzw. zweiten Bedingungen in Einklang stehen. Aufgrund des Dominanzübergangs von der ersten zur zweiten Arbeitseinheit und entsprechend von der ersten zur zweiten Arbeitseinheit, betrifft dies insbesondere die zweiten Ausgabewerte bzw. zweiten Situationsdaten, die die letztendliche Gesamtausgabe des Systems darstellen.

Es ist daher bevorzugt vorgesehen, eine Änderung bzw. Ergänzung der Bedingungen, bevorzugt der zweiten Bedingungen, durchzuführen, so dass für zumindest einige dieser Fälle, die entsprechenden Ausgabewerte bzw. Situationsdaten die ergänzten Bedingungen als erfüllt gelten. Es findet also eine Anpassung des Systems statt, die die Verarbeitung zukünftiger Eingabewerte beeinflusst.

Vorzugsweise wird eine solche Ergänzung der Bedingungen allerdings nicht für alle der Fälle durchgeführt, für die nicht alle Bedingungen erfüllt werden können, sondern nur wenn bestimmte Voraussetzungen erfüllt sind. Eine mögliche Voraussetzung ist, dass nur eine bestimmte Anzahl oder ein bestimmter Prozentsatz (z.B. 20% oder 10% oder 5%) aller Bedingungen nicht erfüllt werden kann, die anderen aber erfüllt werden.

Eine Ergänzung der Bedingungen kann während der normalen Verarbeitung von Eingabewerten erfolgen und/oder in gewissen Zeitabständen anhand der im Gesamtabfolgespeicher gespeicherten Gesamtabfolgen. Werden gespeicherte Gesamtabfolgen verwendet, kann als Voraussetzung für die Ergänzung einer Bedingung verwendet werden, dass die Bedingung in einer gewissen Mindestanzahl (z.B. 10, 50 oder 100) von Gesamtabfolgen in derselben Art (innerhalb gewisser Toleranzen) nicht erfüllt war, dass also für diese Gesamtabfolgen die Bedingung als erfüllt gilt, wenn eine Ergänzung der Bedingung um eine Zusatzbedingung (entsprechend der Art des nicht Erfüllens, einschließlich möglicher Toleranzen) durchgeführt wird.

In einem einfachen Beispiel für eine Bewertungseinheit, die ein neuronales Netz ist, könnte bei einer Ergänzung/Änderung einer Bedingung etwa ein Wertebereich einer Ausgabe eines Neurons, die der Bedingung entspricht, ergänzt werden. Hier ist also das Neuron einer der Bedingung zu geordnet. Das Neuron hat beispielsweise eine Ausgabefunktion, so dass die Ausgabe dieses Neurons als numerischer Wert im Bereich zwischen -1 und +1 liegt. In einem anfänglichen Training könnte das Netz etwa so trainiert worden sein, dass dieses Neuron einen Wert im Intervall von -0,1 bis 0,1 ausgibt, wenn die Bedingung erfüllt ist, und, wenn die Bedingung nicht erfüllt ist, außerhalb dieses Bereichs liegt. Tritt jetzt der Fall auf, dass die Bedingung für eine Ausgabe der Arbeitsebene nicht erfüllt ist, d.h. dass das Neuron einen Wert R ausgibt, der nicht im Intervall [-0,1; +0,1] liegt, und soll die Bedingung ergänzt werden, kann der Wert R als gültiger Wert zusätzlich zum Intervall hinzugenommen werden. Vorzugsweise wird dabei nicht nur der Wert R selbst sondern ein kleiner Bereich um den Wert R hinzugenommen etwa R±0,01. Anlass für die Ergänzung dieser Bedingung könnte sein, dass eine der obigen Voraussetzungen erfüllt ist, z.B. dass diese Bedingung als einzige oder eine von wenigen nicht erfüllt wurde, oder, dass in mehreren Gesamtabfolgen eine Ausgabe in dem Bereich R±0,01 aufgetreten ist.

Es liegen dann also zwei Intervalle vor, nämlich [-0,1; +0,1] und [R-0,01; R+0,01]. Wenn bei der Verarbeitung zukünftiger Eingabewerte die Ausgabe des Neurons in einem dieser zwei Intervalle liegt, gilt die entsprechende Bedingung als erfüllt. Zu diesen beiden Intervallen können bei weiteren Ergänzungen noch weitere hinzugefügt werden, so dass die Bedingung durch eine Menge von Intervallen repräsentiert wird. Diese Intervalle können im Klassifizierungsspeicher der Bewertungseinheit gespeichert werden.

Selbstverständlich kann analog zu diesem Beispiel eine Bedingung auch mit mehreren Neuronen verknüpft sein, dann liegen die Ausgaben der Neuronen in einem Gesamtwertebereich, der eine Teilmenge eines n-dimensionalen Raums ist, wobei n gleich der Anzahl der Neuronen ist, die der Bedingung zugeordnet sind. Die Bedingung dann als erfüllt, wenn die Ausgaben dieser mehreren Neuronen in einer oder mehreren Teilmengen (entsprechend den Intervallen im vorstehenden Beispiel liegen) des Gesamtwertebereichs liegen. Diese Teilmengen können dann ebenso ergänzt werden.

Die ursprüngliche Bedingung und jede Ergänzung der Bedingung kann zusätzlich mit der Angabe einer Stufe S versehen werden, die zusammen mit der Bedingung/Ergänzung im Klassifizierungsspeicher der Bewertungseinheit gespeichert werden kann. Die ursprüngliche könnte etwa die 0-te Stufe sein, S=0. Ergänzungen hätten dann eine höhere Stufe, S>0. Die zugehörige Bewertung kann dann zusätzlich angeben, zu welchem Grad die Bedingung erfüllt ist. Beispielsweise durch Angabe der Stufe. Oder durch Angabe eines entsprechenden Werts, etwa 0,9^{S}(oder ein anderer reeller Wert kleiner 1 statt 0,9); der Wert 1 entspräche also dem Fall, dass die ursprüngliche Bedingung erfüllt ist, sozusagen eine vollständige Erfüllung der Bedingung. Ergänzungen (S>1) würden entsprechend ihrer Stufe die Bedingung nur zu einem gewissen Grad (0,9^{S}<1) erfüllen.

Die Stufe einer Ergänzung kann in Abhängigkeit davon bestimmt werden, welche und/oder wie viele Voraussetzungen, die die Ergänzung veranlassen, erfüllt sind. Wird als Voraussetzung verwendet, dass nur eine oder wenige Bedingungen nicht erfüllt sind, könne beispielsweise die Stufe gleich der höchsten Stufe der erfüllten Bedingungen plus eins sein.

Durch die Stufen bzw. Ebenen wird gewissermaßen eine Hierarchie der Bedingungen eingeführt, mit der sich die ursprüngliche Bedingung immer weiter verfeinert bzw. verästelt. Je nach Stufe bzw. je nach entsprechendem Grad werden dann durch die Bewertungen wiederum über die Beeinflussung der Arbeitsebene bestimmte Ausgabewerte bevorzugt.

Eine solche Vorgehensweise könnte im Prinzip sowohl für die ersten als auch für die zweiten Bedingungen durchgeführt werden. Bevorzugt ist allerdings, dass nur die zweiten Bedingungen ergänzt bzw. geändert werden. Die ersten Bedingungen sollten hingegen unverändert bleiben, diese stellen sozusagen grundlegende, unveränderliche Bedingungen dar. In dem oben (im Abschnitt Offenbarung der Erfindung) erwähnten Beispiel von Bedingungen als Moralkontrakten, wären die ersten, absoluten Erwägungen entsprechend unveränderlich, während die zweiten, relativen Erwägungen mit der Zeit, abhängig von tatsächlichen Gesamtausgabewerten, geändert werden könnten. Beim Einsatz des Verfahrens in einer Maschinensteuerung würde sich sozusagen eine Maschinenmoral weiterentwickeln.

### Kompatibilitätsprüfung mit anderen Systemen

Weitergehend kann, wenn zwei Gesamtsysteme miteinander kommunizieren, einem ersten Gesamtsystem ermöglicht werden, zu beurteilen, inwieweit Gesamtausgabewerte und/oder Bewertungen eines zweiten Gesamtsystems mit den eigenen Bewertungen kompatibel sind, d.h. mit den ersten und zweiten Bedingungen, in Einklang stehen.

Gemäß einer ersten Ausführung übermittelt dazu das zweite Gesamtsystem dem ersten Gesamtsystem Gesamtabfolgen, die typischerweise mehrere Gesamtsätze umfassen. Das erste System verwendet dann in den Gesamtsätzen umfasste Eingabewerte und/oder Situationsdaten als Eingabewerte/Situationsdaten für seine eigenen Arbeits- bzw. Bewertungsebenen und vergleicht die daraus erhaltenen ersten/zweiten Bewertungen und/oder ersten/zweiten Ausgabewerte mit entsprechenden in den übermittelten Gesamtabfolgen enthaltenen Werten. Stimmen diese zumindest teilweise überein, so kann das erste Gesamtsystem das zweite Gesamtsystem als vertrauenswürdig bzw. kompatibel (d.h. nicht im Widerspruch zu den ersten/zweiten Bedingungen stehend) erachten und z.B. von diesem empfangene Analysedaten (d.h. Daten, die durch die Arbeitseinheiten gewonnen werden) als korrekt bzw. kompatibel einstufen und bei der eigenen Verarbeitung verwenden. Anderenfalls werden die empfangenen Daten als nicht korrekt bzw. nicht kompatibel eingestuft und nicht oder nur zu einem gewissen Umfang verwendet. Die empfangenen Daten können Daten sein, die als Eingabewerte in dem Gesamtsystem verwendet werden. Sind beispielsweise die beiden Gesamtsysteme als Steuerungssysteme in zwei autonomen Fahrzeugen enthalten, so könnten die Daten Geschwindigkeit, Bremsvorgänge und Ähnliches umfassen. Fährt ein Fahrzeug in einem Abstand hinter dem anderen, so kann es diesen Abstand in Abhängigkeit von der Vertrauenswürdigkeit/Kompatibilität des Gesamtsystems im vorausfahrenden Fahrzeug wählen (die Bedingungen, die durch die Bewertungseinheit geprüft werden, würden hier z.B. eine fahrzeugspezifische Bremsverzögerung im Falle eines plötzlichen Bremsvorgangs umfassen, die von Fahrzeug zu Fahrzeug unterschiedlich sein können).

Gemäß einer weiteren Ausführung, die alternativ oder zusätzlich verwendet werden kann, kann eine Kompatibilitätsprüfung in einem Frage-Antwort-Prozess erfolgen. Bei dieser Alternative braucht das zweite Gesamtsystem keinen Gesamtabfolgespeicher zu besitzen, sondern muss lediglich ein System sein, das aus Eingabewerte Ausgabewerte generiert. Dazu entnimmt das erste Gesamtsystem seinem Gesamtabfolgespeicher eine oder bevorzugt mehrere Gesamtabfolgen und übermittelt für jede Gesamtabfolge dem zweiten Gesamtsystem die darin enthaltenen Eingabewerte (Frage). Das zweite Gesamtsystem verarbeitet diese und bestimmt darauf basierende Ausgabewerte, die sie dem ersten Gesamtsystem übermittelt (Antwort). Das erste Gesamtsystem speist diese Antwort in seine Projektionsebene, oder eventuell direkt in die Bewertungsebene, ein und bestimmt durch die Bewertungsebene erste/zweite Bewertungen. Dies wird für alle Gesamtabfolgen wiederholt. Zeigen die Bewertungen für alle an Gesamtabfolgen, dass die ersten/zweiten Bedingungen erfüllt sind, wird das zweite Gesamtsystem als kompatibel eingestuft. Alternativ oder zusätzlich kann auch ein Vergleich der aus der Antwort des zweiten Gesamtsystems bestimmten Bewertungen mit den entsprechenden in den Gesamtabfolgen enthaltenen Bewertungen erfolgen, wobei das zweite Gesamtsystem als kompatibel eingestuft wird, wenn nur geringe Unterschiede, z.B. innerhalb vorgegebener Toleranzen, beim Vergleich gefunden werden.

Ein wesentlicher Vorteil dieser Vorgehensweisen liegt auch darin, dass die Bedingungen selbst dem anderen System nicht offengelegt werden. Dies ist etwa dann von Vorteil, wenn die Bedingungen moralisch-ethische Regeln kodifizieren, die als solche, insbesondere dann, wenn sie wie oben beschrieben angepasst bzw. ergänzt wurden, nicht öffentlich zugänglich sein sollten. Ähnliches gilt für wirtschaftliche Gesichtspunkte, die etwa Geschäftsgeheimnisse betreffen können.

Die vorstehend beschriebenen Möglichkeiten einer Kompatibilitätsprüfung setzten natürlich voraus, dass die Bedeutung der Eingabe- und Ausgabewerte des zweiten Gesamtsystems dem ersten Gesamtsystem bekannt ist, so dass dieses diese den Eingängen/Ausgängen der eigenen Arbeits- und Bewertungseinheiten zuordnen kann. Im Falle autonomer Fahrzeuge könnte diese Zuordnung z.B. herstellerspezifisch oder in standardisierter Form als Spezifikation vorgegeben oder als Schnittstelle implementiert sein.

### Weitere Informationen zur Projektionsebene

Die Bewertungseinheiten sind trainiert, Situationsdaten zu bewerten, die in der Projektionsebene 850 vorliegen bzw. von dieser gebildet werden. Die Situationsdaten können beispielsweise, wie bereits erwähnt, Eingabedaten, und/oder Ausgabedaten von einer der beiden Arbeitseinheiten 810, 820, und/oder weitere Daten sein. Es könnten beispielsweise auch nur Ausgabedaten, optional mit zusätzlichen Informationen, in der Projektionsebene 850 verarbeitet werden. Bevorzugt ist allerdings, dass keine Eingabewerte Xᵢ(t) der Arbeitsebene in der Projektionsebene verwendet werden, weiter bevorzugt ist, dass lediglich die Ausgabewerte (Output11, Ouput12) der Arbeitseinheiten 810, 820, d.h. der Arbeitsebene, zur Bildung der Situationsdaten verwendet werden. Auf diese Weise wird durch die Projektionsebene eine Trennung der Bewertungsebene von der Arbeitsebene erreicht, wobei die Eingabewerte X(t) der Arbeitseinheiten für die Bewertungseinheiten nicht sichtbar sind, so dass eine Bewertung der Ausgabewerte der Arbeitseinheiten durch die Bewertungseinheiten in unabhängiger Form erfolgen kann.

Weiterhin ist es möglich, dass die Daten vor der Projektionsebene auf gewisse Weise verarbeitet oder z.B. vereinfacht werden. In Reaktion auf die Verarbeitung der Situationsdaten durch die Bewertungseinheiten, die einer Klassifizierung oder Bewertung entspricht, können verschiedene Aktionen durchgeführt werden, insbesondere die Beeinflussung der Arbeitsebene, die Einfluss auf die endgültigen Ausgabewerte des Gesamtsystems und die damit verbundenen Signale an Aktoren, Ausgabeschnittstellen und anderes haben, und/oder Aktionen, die das weitere Verhalten des Gesamtsystems und insbesondere der übrigen Einheiten, die im System enthalten sind, beeinflussen.

Dabei ist auch denkbar, die Daten in der Projektionsebene miteinander zu verknüpfen, so dass sich mindestens eine weitere Information ergibt. Weiter können zeitliche Parameter vorliegen, die beispielsweise angeben, zu welcher Zeit ein bestimmter Ausgabewert ausgegeben wurde. Dabei könnten solche zeitlichen Parameter eine absolute Zeitangabe umfassen, aber auch eine relative Zeitangabe abhängig von dem derzeitigen Bewertungszeitpunkt oder einem anderen Referenzzeitpunkt. Ebenso könnte kein fester Zeitpunkt, sondern ein zeitlicher Abschnitt angegeben sein, dem ein oder mehrere Eingabe- und/oder Ausgabewerte der Einheiten zugeordnet werden. Zusätzlich oder alternativ zu einem tatsächlichen zeitlichen Parameter kann eine Reihenfolge mit zumindest einem Teil der Daten verknüpft sein, so dass auch ohne explizite Zeitangabe in der Projektionsebene erkennbar ist, in welcher Reihenfolge mehrere vorliegende Datenwerte erzeugt oder verarbeitet wurden, z.B. in Form einer zugeordneten Nummerierung für die Ausgabewerte in der Projektionsebene.

Auf diese Weise können die in der Projektionsebene vorliegenden Daten, insbesondere die Ausgabewerte der Arbeitseinheiten, beispielsweise zeitliche Sequenzen bilden. Optional können solche Sequenzen auch markiert werden, so dass beispielsweise festgelegt ist, dass ein bestimmter Zeitabschnitt oder festgelegte Ausgabewerte zu einer definierten Sequenz gehören. Zur weiteren Verarbeitung, Speicherung oder Bewertung können dann derartig gebildete Sequenzen als Ganzes behandelt werden. Alternativ können dann auch unterschiedliche Ein- und/oder bevorzugt Ausgabewerte, die zu demselben Zeitabschnitt oder zu derselben Sequenz gehören, gemeinsam verarbeitet werden, beispielsweise miteinander verglichen werden. Durch eine zeitliche Einordnung der Daten in der Projektionsebene sowie die Gruppierung in bestimmte Abläufe und Sequenzen, auf die wieder zugegriffen werden kann, kann ein erinnerungsähnliches Konstrukt ermöglicht werden. Es kann ein Timer vorgesehen sein (nicht dargestellt), der entsprechend der in Verbindung mit Figur 4 beschriebenen Idee auch in diesem System eingesetzt werden kann, um die Dominanz zwischen den Arbeitseinheiten zu steuern.

Der für die Projektionsebene 850 bevorzugt vorgesehene Speicher 852 kann beispielsweise als flüchtiges Speicherelement oder als nicht-flüchtiges Speicherelement in Form eines Ringspeichers oder eines anderen Kurzzeitspeichers ausgestaltet sein. Die in der Projektionsebene 850 zu verarbeitenden Daten können in diesem Projektionsspeicher abgelegt werden. Die Speicherdauer der Daten und die Wahl der zu speichernden Daten kann sehr unterschiedlich ausgestaltet sein. Beispielsweise kann zunächst eine feste Speicherdauer vorgegeben werden. Nach Ablauf dieser Zeit können die Daten im Projektionsspeicher verworfen und/oder überschrieben werden. Zusätzlich oder alternativ kann ein Teil des Systems, beispielsweise eine oder beide der Bewertungseinheiten 830, 840, Entscheidungen darüber treffen, ob die Daten im Projektionsspeicher zumindest teilweise an ein anderes Element des Systems weitergegeben werden. Um einen Datenverlust zu verhindern, kann diese Entscheidung getroffen werden, bevor die vorgegebene Speicherdauer abgelaufen ist. Beispielsweise kann eine der Bewertungseinheiten entscheiden, dass ein Teil oder alle der in der Projektionsebene 850 bzw. im Projektionsspeicher abgelegten Daten an ein anderes Speicherelement zur Langzeitspeicherung übergeben werden sollen. Dies kann beispielsweise auch eines der Speicherelemente der Arbeitseinheiten sein. Durch die Speicherung in einem Speicher der anderen Einheiten im System, die später neue Situationen bewerten, können damit bereits bewertete Situationen ähnlich wie gemachte Erfahrungen einfließen. Grundsätzlich könnte aber auch ein eigenes Speichermodul (nicht gezeigt) als Langzeitspeicher vorgesehen sein, bei dem fest vorbestimmt oder von einer der Einheiten definierbar sein kann, welche Einheit in welchem Umfang auf die dort gespeicherten Daten zugreifen kann.

Im Folgenden werden weitere Einzelheiten und Ausführungsformen der Erfindung erläutert. Auf Grundlage der ersten und/oder zweiten Bewertungen kann entschieden werden, ob die ersten und/oder zweiten Ausgabewerte des ersten und/oder zweiten Arbeitseinheiten innerhalb gültiger Bereiche oder Parameter liegen oder ob diese bestimmte normative Regeln erfüllen, d.h. ob sie als gültige (im Sinne der Bedingungen bzw. Regeln) Lösung zulässig sind oder zumindest zu einem gewissen Grad zulässig sind. Falls hier festgestellt wird, dass beispielsweise die aktuellen Ausgabewerte der ersten und/oder zweiten Arbeitseinheit, die in den vorherigen Beispielen als Gesamtausgabewert des Systems festgelegt wurden, außerhalb zulässiger Bereiche liegen, kann eine Reaktion des Gesamtsystems auf Grundlage dieser Bewertung verhindert bzw. gestoppt werden, so dass die zuvor gewonnenen ersten/zweiten Ausgabewerte der ersten/zweiten Arbeitseinheit beispielsweise nicht an Aktoren oder Schnittstellen weitergegeben werden. Die als unzulässig oder ungültig bewerteten Ausgabewerte können dann verworfen werden, können aber auch zusammen mit dieser Bewertung abgespeichert werden, um in späteren Situationen beispielsweise durch Vergleich darauf zurückgreifen zu können. Damit können Bewertungen später erfasster Situationen vereinfacht oder beschleunigt werden, indem die bereits als unzulässig erkannten Lösungen nicht weiterverfolgt werden oder nur mit geringerer Priorität weiterverfolgt werden. Alternativ können die ersten/zweiten Ausgabewerte auch dann als Gesamtausgabe verwendet werden, etwa, wenn keine Lösung die alle Bedingungen erfüllt gefunden werden kann, wobei die erfindungsgemäße Wechselwirkung zwischen Arbeits- und Bewertungsebene sicherstellt, dass eine bestmögliche Lösung gefunden wird.

Ausgabewerte und Lösungen können nicht nur auf Zulässigkeit überprüft werden, sondern auch, ob sie bestimmten Bedingungen bzw. Vorgaben besonders gut entsprechen, also eine möglichst ideale Lösung darstellen. Die so gefundenen Ausgabewerte können dann bevorzugt als Gesamtausgabe des Gesamtsystems verwendet werden, oder können beispielsweise in einem Langzeitspeicher abgelegt werden, um zukünftig schnell als beste gefundene Lösung abgerufen werden zu können. Umgekehrt könnten ebenso Ausgabewerte, die als besonders nachteilig oder vorteilig bewertet wurden, mit einem entsprechenden Bewertungsparameter versehen werden, der ebenfalls verknüpft mit diesen Werten abgespeichert und/oder weiter übertragen werden kann. Diese Bewertungsmöglichkeiten können einzeln oder in Kombination miteinander umgesetzt werden.

Die Entscheidung über die Übergabe und Speicherung von Daten aus der Projektionsebene 750, 850, die bereits zuvor beschrieben wurde, kann beispielsweise auf Grundlage solcher Bewertungen durch die Bewertungseinheiten getroffen werden.

In einer weiteren Ausführungsform ist es auch möglich, dass zunächst nur die Eingabewerte des Systems, die als Eingabewerte der ersten und zweiten Arbeitseinheit verwendet werden, in der Projektionsebene bzw. ihrem zugeordneten Speicher 752, 852 abgelegt werden. Dies kann als unverarbeitetes Abbild einer aktuellen Situation betrachtet werden. Gleichzeitig beginnen die erste und die zweite Arbeitseinheit mit der Verarbeitung dieser Eingabewerte wie bereits zuvor beschrieben, also unter Verwendung verschiedener Möglichkeiten wie z.B. dem Wechsel der Dominanz zwischen den Arbeitseinheiten und der Modulation der bestimmenden Parameter und Funktionen der zweiten Arbeitseinheit.

Die gefundenen Lösungen, also die Ausgabewerte der ersten und/oder zweiten Arbeitseinheit, können dann in die Projektionsebene übernommen werden, wobei sie entweder die jeweiligen zugehörigen Eingabewerte überschreiben können oder auch mit diesen gemeinsam abgespeichert und verknüpft werden können. Je nach Variante kann beispielsweise jedes neuere Ergebnis, das aus denselben Eingabewerten gewonnen wurde, ein älteres Ergebnis überschreiben. In anderen Fällen können die Ergebnisse unter Beibehaltung älterer Lösungen in die Projektionsebene übernommen werden, so dass beispielsweise durch einen Vergleich von aktuellen und vorherigen Lösungen auch bewertet werden kann, ob ein späteres oder früheres Ergebnis besser den Vorgaben bzw. Bedingungen des Bewertungssystems entspricht. Als Beispiel für eine Verknüpfung kommen dabei insbesondere gleichzeitig überlagerte Elemente oder auch eingeblendete Elemente in Frage, soweit es sich z.B. um Bilder handelt.

Optional kann dabei auch die bereits zuvor beschriebene Dominanz zwischen den gekoppelten Einheiten beachtet werden, so dass beispielsweise nur die Ausgabewerte des derzeit dominanten Netzes in der Projektionsebene bzw. deren Speicher verarbeitet und abgelegt werden. Dabei können auch erneut zeitliche Parameter mit den Werten verknüpft werden. Beispielsweise können Zeitabschnitte mit gleicher oder unterschiedlicher Länge definiert werden, denen dann die jeweiligen Eingabewerte und Ausgabewerte passend zugeordnet werden, um einen zeitlichen Ablauf einer Situation wiederzugeben. So könnten beispielsweise in einem ersten Zeitabschnitt die Eingabewerte gespeichert werden, während in einem nächsten Zeitabschnitt Ausgabewerte der ersten Arbeitseinheit abgespeichert werden und anschließend Ausgabewerte der zweiten Arbeitseinheit. Weitere, verbesserte oder zumindest veränderte Ausgabewerte können dann in weiteren Abschnitten abgespeichert werden. Für jeden Block von Ausgabewerten kann dabei ein Zeitabschnitt vorgegeben sein, die optional aber als zusammengehörig gekennzeichnet sein können, um den Ablauf einer erkannten Situation zu verdeutlichen.

In beispielhaften Ausführungsformen kann die Kontrolle über die Speicherung von Daten in oder aus dem Projektionsspeicher auch von mehreren Einheiten des Systems zumindest teilweise übernommen werden. Beispielsweise wurde bereits eine Situation beschrieben, in der bei einem System mit definierter Dominanz der Einheiten geprüft wird, ob sich die Eingabewerte über ein vorgegebenes Maß ändern, so dass eine neue Situation angenommen wird. In diesem Fall kann die Dominanz auf die erste Arbeitseinheit übergehen, um eine neue grobe Einordnung der Eingabewerte zu erstellen. Gleichzeitig kann dann die erste Arbeitseinheit ein Signal an den Projektionsspeicher geben, das anzeigt, ob die dort abgelegten Daten (die einer vorherigen Situation entsprechen) an ein anderes Speicherelement, z.B. den Langzeitspeicher, übergeben werden sollen oder ob sie später überschrieben werden können. Ebenso könnten die erste und/oder die zweite Arbeitseinheit abhängig von einem derzeitigen Verarbeitungsprozess die Speicherdauer in dem Projektionsspeicher anpassen, um auf verschiedene Situationen oder Ziele reagieren zu können. Beispielsweise kann eine längere Speicherdauer in der Projektionsebene festgelegt werden, wenn eine lange, tiefgehende Lösungssuche erforderlich ist, während rasche Entscheidungen zu schnellen Änderungen der gespeicherten Daten führen können.

Optional ist auch möglich, dass eine der Einheiten vorrangig über z.B. die Speicherdauer entscheiden kann, so dass beispielsweise eine Entscheidung der ersten Arbeitseinheit, vorherige Daten im Projektionsspeicher zu verwerfen, von der zweiten Arbeitseinheit überprüft oder blockiert werden kann, so dass die jeweiligen Daten trotzdem gespeichert werden, z.B. bei immer wiederkehrenden Eingabewerten. Außerdem ist auch denkbar, dass zumindest in begrenztem Umfang eine der Einheiten Änderungen am Klassifikationsspeicher einer anderen Einheit vornehmen kann und beispielsweise neue Kategorien anlegen kann. Dabei können aber auch geschützte Bereiche definiert sein, in denen alle Vorgaben gespeichert sind, die von keiner Einheit abgeändert oder gelöscht werden dürfen.

Falls wie in dem System aus Figur 4 ein Timer vorgegeben ist, der in der Lage ist, Zeitintervalle zu messen und diese Information an Einheiten weiter zugeben, kann dieser beispielsweise auch eine Überwachung der vorgegebenen Speicherdauer übernehmen. Damit können die Speicherzeiten auch mit den Dominanzverteilungen zwischen den unterschiedlichen Einheiten eines Systems abgestimmt oder synchronisiert werden. Alternativ kann dazu aber auch ein anderer Teil des Systems vorgesehen sein. Grundsätzlich können auch Bewertungseinheiten die vorgegebene Speicherdauer verändern und neu festsetzen. Dabei können auch für unterschiedliche Werte unterschiedliche Vorgaben für die Speicherdauer definiert werden. Beispielsweise kann festgelegt werden, dass die Ausgabewerte der ersten Arbeitseinheit, die beispielsweise eine schnell kategorisierende Einheit ist, nur für kurze Zeit in der Projektionsebene abgelegt werden, so dass dafür eine erste Zeitvorgabe für die Speicherdauer festgelegt wird, während die Ausgabewerte der zweiten Arbeitseinheit mit einer längeren Zeitvorgabe für die Speicherdauer versehen werden. Es ist auch möglich, dass die Ausgabewerte der ersten Arbeitseinheit nur so lange gespeichert werden, bis Ausgabewerte der zweiten Arbeitseinheit vorliegen. Optional könnte dabei auch zunächst eine Prüfung der Ausgabewerte durch die Bewertungseinheiten abgewartet werden. Falls dabei festgestellt wird, dass die Ausgabewerte der zweiten Einheit nicht gültig sind, weil sie nicht den vorgegebenen Bedingungen entsprechen, kann die Speicherung dieser Werte abgebrochen werden, während die groben Ausgabewerte der ersten Arbeitseinheit weiter behalten werden.

Zusätzlich oder alternativ können die Bewertungseinheiten auf Grundlage ihrer erfolgten Bewertung auch die Modulation, die zwischen der ersten und der zweiten Einheit ausführlich beschrieben wurde, weiter verändern.

Das System kann dabei so ausgestaltet sein, dass das Bewertungssystem nicht alleine über die Gültigkeit oder Ungültigkeit von Ergebnissen und Ausgabewerten entscheiden, sondern in Kombination mit den anderen Einheiten des Systems, indem beispielsweise die Verarbeitungsparameter, Speicherzeiten und andere Elemente beeinflusst werden.

Soweit die Bewertungseinheiten, d.h. die Bewertungsebene, als bewertende oder validierende Einheiten ausgelegt ist, können diese beispielsweise Klassifizierungen umfassen, die im Wesentlichen Merkmale wie Verbote, Prioritäten, normative Regeln und werteähnliche Vorgaben beinhalten. Indem eine derartige Bewertungsebene die Ausgabewerte der Arbeitsebene auswertet, kann sichergestellt werden, dass nur solche Lösungen für das Gesamtsystem zugelassen werden, die diesen Vorgaben entsprechen. Dies könnten einfache festgelegte Randbedingungen eines Systems sein; sie könnten aber auch weiterentwickelt werden zu einem ethikähnlichen Modul, das die Entwicklung und Entscheidungen des Gesamtsystems in einer durch Werte und Regeln vorgegebenen Richtung hält. Diese Randbedingungen, die unter anderem durch Klassifikationen in der Bewertungsebene vorgegeben sind, können bevorzugt für die erste Bewertungseinheit fest definiert und abgespeichert sein, ohne durch das System veränderbar zu sein und bevorzugt für die zweite Bewertungseinheit ausgehend von vorgegebenen Bedingungen veränderbar sein. Es ist daher auch denkbar, dass ein System im Zusammenspiel der Arbeits- und Bewertungseinheiten diese Klassifikationen zumindest zum Teil selbst erlernt, also entsprechend einem nicht-überwachten Lernen, so dass sich wenigstens teilweise ein eigenes Wertesystem bzw. eine erlernte Menge von Randbedingungen herausbildet. Es können auch Ausführungsformen verwendet werden, in dem ein Grundsystem von nicht veränderbaren Randbedingungen vorgegeben ist, das dann im Verlauf einer Trainingsphase oder im laufenden Betrieb und/oder durch Dateneingabe von außen ergänzt werden kann.

Die Bedingungen, die durch die Bewertungseinheiten vorgegeben sind, können dabei sowohl in einer gemeinsamen Trainingsphase der gekoppelten Netze angewendet werden als auch in der späteren Auswertungsphase eines bereits trainierten Systems. Optional könnten in den Klassifikationsspeichern der Bewertungseinheiten mehrere separate Voreinstellungen vorgesehen sein, die mehreren abgeschlossenen Gruppen von Klassifikationen entsprechen. Bei Bedarf kann dann eine dieser Gruppen ausgewählt werden, beispielsweise abhängig von der vorliegenden Situation. Die Erkennung der jeweils vorliegenden Situation und die Zuordnung der anzuwendenden Klassifikationsgruppen können wieder auf den Ergebnissen der ersten und/oder zweiten Arbeitseinheit basieren. Auf diese Weise könnten beispielsweise unterschiedliche Risikobereitschaften oder "Grundstimmungen" eines Systems implementiert werden. Dabei kann auch eine Grundeinstellung vordefiniert sein, die nur in bestimmten Fällen abgeändert wird. Ebenso ist denkbar, dass aus der unveränderbaren Grundeinstellung der Bewertungsebene in Trainings- und Betriebsphasen des gekoppelten Systems aktiv neue Klassifikationsgruppen mit zusätzlichen oder flexiblen Randbedingungen für die Bewertungsebene gebildet werden.

Als Beispiel kann bei einem autonomen Fahrzeug oder Flugzeug, das zur Rettung von Menschen eingesetzt wird (z.B. eine Flugdrohne), ein riskanterer Fahrstil zugelassen werden, solange keine Passagiere befördert werden, insbesondere dann, wenn das Fahrzeug schnell an einem vorgegebenen Ort eintreffen soll. Nach einer groben Erkennung der Situation, z.B. "Alarmsituation", die beispielsweise durch die erste Arbeitseinheit vorgenommen werden kann, kann also für die erste Bewertungseinheit eine entsprechende Klassifikationsgruppe ausgewählt werden, anhand derer dann die Lösungen bzw. Ausgabewerte bevorzugt der ersten und/oder eventuell auch der zweiten Arbeitseinheit bewertet werden. Analog wird in der zweiten Bewertungseinheit eine gegebenenfalls feinere Klassifikationsgruppe ausgewählt, wobei diese Auswahl aufgrund der dritten Modulationsfunktionen durch die ersten Bewertungen beeinflusst wird. Damit können grundlegende Randbedingungen weiter eingehalten werden, z.B. das Vermeiden von Unfällen, aber gleichzeitig andere Randbedingungen gelockert werden (wie etwa schnelle Kurvenfahrten, Akzeptieren von Beschädigungen, oder andere). Sobald das System eine neue Situation erkennt, beispielsweise das Vorhandensein von Passagieren im Fahrzeug, kann jeweils eine andere Klassifikationsgruppe für die erste Bewertungseinheit und für die zweite Bewertungseinheit angewendet werden, die nun stärker auf das Wohlbefinden der Passagiere oder auch geretteten Verunglückten ausgerichtet sein kann. In einer erweiterten Ausführungsform könnten dann auch weitere Kriterienkataloge angelegt werden, die in spezifischen Situationen zur Klassifizierung genutzt werden können, beispielsweise für Lastentransporte, bei der Brandbekämpfung, bei einem Erkundungsflug bzw. einer Erkundungsfahrt, und weitere. Falls Situationen als solche bekannten Situationen eingeordnet werden können, kann die Bewertungsebene dann darauf beschränkt bleiben, die Gültigkeit der Randbedingungen einzuhalten und, solange keine Widersprüche auftreten, passiv bleiben. Falls jedoch kompliziertere oder unbekannte Situationen auftreten, die möglicherweise Schäden oder andere unerwünschte Folgen nach sich ziehen, kann die Bewertungsebene auch aktiver in die Lösungsfindung der Arbeitsebene eingreifen und beispielsweise neue Suchräume vorgeben, Parameter der Arbeitseinheiten ändern oder modulieren, oder auf andere Weise das Finden einer geeigneten Lösung unterstützen.

Auf diese Weise befinden sich also im Speicher der Bewertungsebene, bevorzugt für die erste Bewertungseinheit festprogrammiert und für die zweite Bewertungseinheit in einem gewissen Umfang veränderbar, die Rahmenbedingungen des Gesamtsystems, wie etwa Verbote, Prioritäten und ein Wertesystem. Auch eine Verarbeitungsbeschleunigung kann erreicht werden, indem bestimmte Lösungen ausgeschlossen werden. Die Bewertungsebene kann durch Aktionen wie Belohnung und Bestrafung oder durch Induzieren neuer Schrittweiten in die Lösungsfindung der Arbeitsebene aktiv eingreifen. Damit werden die Ausgabewerte der Arbeitsebene durch eine spezielle Art der Rückkopplung auch von der Bewertungsebene beeinflusst.

Als weitere Option kann die Bewertungsebene Einfluss auf einen Timer und die damit verbundene Festlegung der Dominanz einzelner Einheiten in dem System, bevorzugt in der Arbeitsebene, nehmen, der wie in Zusammenhang mit Figur 4 bereits beschrieben in einem System aus mehreren gekoppelten Einheiten implementiert ist. Beispielsweise kann die Bewertungsebene überprüfen, ob die festgelegten Zeitparameter für die Übergabe der Dominanz zu sinnvollen Ergebnissen führen oder ob eine andere Verteilung bzw. Festlegung der Zeitspannen vorgegeben werden soll. Damit kann beispielsweise flexibel auf Situationen reagiert werden, die mehr grobe Kategorisierungen benötigen als üblich und z.B. in kürzerer Zeit entschieden werden müssen. Entsprechend können durch ein Signal von der Bewertungsebene an das Timer-Modul bei Bedarf ein oder mehrere neue Zeitparameter für jede der gekoppelten künstlich lernenden Einheiten festgelegt werden, anhand derer dann die weitere Festlegung der Dominanz wie bereits beschrieben vorgenommen wird. Ebenso könnte die Bewertungsebene nach zeitlicher Auswertung der Situationsdaten feststellen, dass sich die Eingabewerte und damit die auszuwertenden Situationen sehr schnell massiv ändern, oder dass die Situation quasistatisch über lange Zeit unverändert bleibt, und auf dieser Basis andere Zeitparameter für die Verarbeitung vorgeben.

Die beschriebenen Elemente und Verfahrensschritte der Figuren 7 und 8 sollen selbstverständlich nicht auf die dargestellte Ausführungsform mit vier künstlich lernenden Einheiten beschränkt sein. In allen Ausführungsformen versteht es sich, dass die einzelnen Elemente, also z.B. Speicherelemente, künstlich lernende Einheiten (neuronale Netze), Verbindungen zwischen diesen Elementen und weiteres auch anders als hier dargestellt ausgeführt werden können. Beispielsweise können natürlich auch weitere Speicherelemente vorhanden sein, die in diesen schematischen Abbildungen nicht dargestellt sind, oder ein Teil oder alle dieser Speicher können in Form eines einzigen, z.B. entsprechend durch Adressierung unterteilten physischen Speicherelements vorliegen.

Die verschiedenen vorstehend beschriebenen Teilansätze können, insbesondere in Kombination miteinander, zu einem assoziativen und selbständig agierenden System führen. Derartige Systeme können einen wesentlich breiteren Anwendungsbereich abdecken als intelligente Systeme, die nur auf ein spezialisiertes Gebiet trainiert sind. In herkömmlichen Systemen entspricht die Datenverarbeitung dem Finden von Fehlerminima oder Erfolgsmaxima in einem vieldimensionalen Raum. Je mehr Dimensionen (durch Klassifikationen, Optionen, Hierarchieebenen) dieser Raum aufweist, umso eher kann das System in lokalen Minima oder Maxima hängen bleiben. Die zuvor beschriebene Kopplung und Beeinflussung einer zweiten Einheit durch eine erste Einheit in Form von Modulationsfunktionen, die auf Gewichte, Schrittweiten, Funktionen und weiteres angewendet werden, erlaubt dagegen Sprünge im Suchraum in zunächst nicht geprüfte Bereiche, die ansonsten je nach festgelegter Schrittweite nie erreicht werden. Dabei kann sich auch die Aufgabe kurzzeitig verändern, da jeweils schnell geprüft wird, ob der neue Lösungsraum relevant ist.

Wenn beispielsweise ein potentiell gefährliches, aber nicht identifizierbares Tier aus den Eingabewerten erkannt wird, zu dem weder die erste noch die zweite Arbeitseinheit ein passendes Bildmuster finden kann, kann das System nun durch eine modulierte Schrittweite (z.B. stochastisch induziert) in eine Geräuschanalyse springen und findet dort ein passendes Geräusch, das von dem nichtidentifizierbaren Tier aufgenommen wurde. Nun kann die so modulierte zweite Arbeitseinheit prüfen, ob die gefundene Lösung auf die bisher nicht klassifizierbaren Bilder angewendet werden kann, was einer Assoziationsleistung entspricht.

Ebenso kann die Einführung einer Projektionsebene ein assoziatives Verhalten nachbilden, indem nun beispielsweise Entscheidungen (in Form von Ausgabewerten) mit früheren Entscheidungen verglichen werden können und optional auch bewertet werden können. Damit wird anstelle einer abstrakten Lernfähigkeit auf Basis von positiven oder negativen Belohnungen das Bewertungssystem assoziativ ergänzt. Findet beispielsweise das System im Sprunggebiet keine besseren Lösungen, kann es zurück in den Bereich der bisher besten Lösung springen, die durch Bewertungen in der Projektionsebene festgelegt und optional gespeichert wurde, und kann eine neue Sprungvariante starten. Auf diese Weise kann beispielsweise die Modulation durch eine erste Einheit immer von einem geeigneten Startpunkt aus durchgeführt werden, der auf Basis der Bewertung durch die Bewertungsebene gefunden wird.

Als mögliches Anwendungsbeispiel soll ein persönliches, an einen Nutzer adaptiertes AI-System betrachtet werden. Im Idealfall kann ein derartiges System durch Kopplung mehrerer künstlich lernender Einheiten, die unter anderem die beschriebene Rückkopplung durch Modulation sowie eine bewertende Bewertungsebene mit entsprechenden Speichermöglichkeiten umfassen, ein intelligentes Verhalten im Sinne einer harten künstlichen Intelligenz entwickeln. Ein solches System soll bevorzugt frei assoziieren können und Probleme selbständig klassifizieren können. Außerdem soll ein nutzerspezifisches Verhalten möglich sein, so dass das AI-System individuell auf einen Nutzer eingehen kann, also insbesondere erfassen und/oder lernen kann, welche Interessen, Eigenarten, Stimmungen, Emotionen, Charaktereigenschaften und welchen Wissenstand der Nutzer hat.

Dabei können solche und andere von außen erfasste Daten dem System hinzugefügt werden. Auch Aktualisierungen des Gesamtsystems sind möglich, um beispielsweise die Arbeitsebene bzw. Klassifizierungen und/oder die Bewertungsebenen bzw. Bedingungen innerhalb bestimmter Grenzen zu verändern. Bevorzugt sind aber Mechanismen vorhanden, die einen Export von Daten aus dem System vollständig verhindern, insbesondere, da es auf einer sehr persönlichen Ebene arbeitet. Persönliche Daten sollen daher nicht nach außen gelangen und optional auch nicht zugänglich sein. Beispielsweise kann dabei auch vorgesehen sein, dass das AI-System vorrangig offline arbeitet, also ohne Verbindung zu externen Kommunikationsnetzen oder anderen Schnittstellen. Zur Aktualisierung des Systems oder zum Laden von Hintergrundwissen und anderen Daten kann dann eine zeitlich begrenzte, sichere Verbindung hergestellt werden, die beispielsweise vollständig vom Nutzer kontrolliert werden kann. Dabei können z.B. Quellen der hinzugefügten Daten angegeben sein und dem Nutzer eine Auswahl gegeben werden, ob er der Verbindung zustimmt.

Es kann eine initiale Trainingsphase für das System vorgesehen sein, in dem eine Lernkommunikation mit einer fremden Person, einem vorgegebenen Trainingsdatensatz und/oder Daten, die nicht vom eigentlichen Nutzer des System stammen, erfolgt. Diese Trainingsphase kann dazu dienen, eine allgemeine Grundeinstellung für Themen, Wissen, Erfahrungen und Kenntnisse bereitzustellen, um später nur in Sonderfällen auf externe Daten zurückgreifen zu müssen. Dabei kann auch ein vorgegebener Kommunikationscharakter ebenso eingestellt werden wie eine initiale Tiefe der Lernprozesse und Assoziationen für einen allgemeinen Zustand. Weiter können in der Trainingsphase die Problemerkennung und angemessene Reaktionen auf Situationen ebenso wie assoziative Kommunikationsverläufe trainiert werden.

Nach Abschluss dieser initialen Trainingsphase, die beispielsweise durch den Hersteller erfolgen kann, kann eine zweite Trainingsphase durch einen Endnutzer erfolgen. Dabei können beispielsweise nun die Zeitparameter auf den Benutzer eingestellt werden (Synchronisation). Der zuvor initial eingestellte Kommunikationscharakter kann durch Lernen und Anpassung des Systems aus gekoppelten Netzen auf den Endnutzer (durch Spiegelung oder Komplementierung) angepasst werden. Ebenso können die zuvor für einen allgemeinen Nutzer vorgegebenen Charaktereigenschaften und Interessen nun auf den spezifischen Endnutzer angepasst werden. Darüber hinaus kann die Projektionsebene in beispielhaften Ausführungsformen, insbesondere in solchen, die eine visuelle Auswertung umfassen, ein aktuelles Bild ihres Zustandes erzeugen und auf einem Bildschirm anzeigen. Dieses überlagerte Bild erlaubt dann während einer Arbeitsphase und insbesondere während der Trainingsphase eine Auswertung durch einen externen Nutzer bzw. Trainer, der damit feststellen kann, wie das System die aktuelle Situation in etwa einschätzt. Auf diese Weise kann frühzeitig erkannt werden, wie das System arbeitet, oder gegebenenfalls auch eingegriffen werden, um bestimmte Aspekte zu korrigieren oder abzuändern und so die Trainingsphase zu beschleunigen.

Nach diesen Trainingsphasen ist das System vorzugsweise einsatzbereit. Es können aber auch später noch ergänzende Trainingsphasen genutzt werden.

Je nach Ausführungsform kann das AI-System unterschiedliche Schnittstellen aufweisen, um Umgebungsbedingungen und vom Nutzer durchgeführte Handlungen ebenso wie Gefühls- und Gemütszustände des Nutzers zu registrieren. Dazu können verschiedene Sensoren eingesetzt werden, wie etwa Kameras, Mikrophone, Bewegungssensoren, Infrarotsensoren, Sensoren für chemische Verbindungen ("künstliche Nasen"), Ultraschallsensoren, und beliebige weitere. Diese können in geeigneten mobilen oder statischen Objekten einzeln, verteilt und/oder kombiniert angeordnet werden, um eine möglichst umfassende Analyse zu ermöglichen. Außerdem können weitere Schnittstellen vorgesehen sein, über die das AI-System mit dem Nutzer kommunizieren kann, also etwa Lautsprecher für eine Sprachausgabe oder Bildschirme und andere Anzeigemittel für visuelle Anzeigen und Textdarstellungen.

In einer möglichen Ausführungsform ist ein Objekt vorgesehen, in dem ein derartiges AI-System für einen Nutzer integriert ist. Es kann sich dabei um ein mobiles Objekt, wie ein technisches Gerät (z.B. Smartphone) handeln, aber insbesondere auch um einen Einrichtungsgegenstand oder einen Gebrauchsgegenstand wie eine Lampe, eine Vase, einen Bildschirm, einen Spiegel oder andere Objekte, die in einer Wohnung bereits heute einen festen Platz einnehmen. Die Aufgabe des Systems ist es, ein künstlicher persönlicher, intelligenter Begleiter für die Nutzerperson zu sein. Das System stellt die Identität des Nutzers fest und kommuniziert mit diesem beispielsweise über Sprache und/oder Bild, wenn es sich um einen Bildschirm handelt oder eine Projektion in den Raum installiert ist. Dem entsprechend ist die Ausgabe an eine Schnittstelle angeschlossen (z.B. Lautsprecher, Bildschirm, Projektor).

Auf der Basis der oben beschriebenen erfinderischen Elemente kann das System Situationen klassifizieren, gespeichertes und gelerntes Wissen einbringen und assoziieren. Es ist das Ziel, Inspiration zu vermitteln, Anregungen zu geben, Einsamkeit und Stimmungstiefs des Nutzers zu überbrücken, als Coach oder aber auch beruflicher Berater/Problemlöser zu fungieren. Als Anwendungsgebiete kommt hier die Nutzung als Freizeitbegleiter in Frage (hilft bei Langeweile, gibt Gesprächsimpulse, unterhält Menschen, gibt Lebenshilfe); als Inspirator, der intellektuelle, wissenschaftliche, künstlerische Impulse gibt; als Coach bzw. Berater, um eine psychologische oder intellektuelle Begleitung zu bieten, insbesondere auch für psychisch kranke Menschen; als Berater für diverse Alltagssituationen (Mode, Hygiene, Gesundheit, Pflichten, Pflege); als persönlicher Sekretär, wobei eine ausgedehnte Wissensdatenbank angelegt und genutzt werden kann; als Spielpartner für unterschiedlichste Spiele; und weitere.

Insbesondere kann ein derartiges System sich sowohl kurzfristig an den Nutzer anpassen, z.B. an eine aktuelle Stimmungslage, als auch langfristig, etwa an den Charaktertyp des Nutzers. Dazu können unter anderem über die Projektionsebene verarbeitete und in einem Langzeitspeicher abgelegte Informationen genutzt werden. Idealerweise kann das System dazu mit Codes, biometrischer Nutzererkennung (Bild, Sprache, Fingerabdruck, Tonfall oder andere Merkmale) und anderen Zugangskontrollmöglichkeiten ausgestattet sein.

Bevorzugt kann mit einem derartigen System und den beschriebenen Verfahrensschritten ein moralisch-ethisches System implementiert werden. Beispielsweise kann der persönliche intelligente Begleiter zu befriedigenden und für den Nutzer und seine Umgebung nützlichen Taten ermuntern; es kann auf Art, Charakterlage und Stimmung des Nutzers angepasst auf moralisch-ethische Probleme aufmerksam machend und beispielsweise bestimmte Tugenden propagieren (Hilfsbereitschaft, Großzügigkeit, Güte, Mut, Weisheit).

Durch entsprechende Bedingungen in der Bewertungsebene kann das System so eingerichtet sein, dass es Schaden, Schmerz und Belastungen vermeidet, und zwar nicht nur für den Nutzer, sondern für alle durch seine Entscheidungen betroffenen Menschen. Im Fall zu erwartender schwerwiegender Fehlentscheidungen kann ein persönlicher Begleiter eine Diskussion aufnehmen, vor allem über die Folgen bestimmter Handlungsoptionen argumentieren und konstruktive Vorschläge für Alternativen unterbreiten. Dabei werden bevorzugt keine Handlungen vorgeschrieben, sondern Ideale, wie die Handlungen sein sollten oder könnten. Der persönliche Begleiter kann Dilemma-Situationen erkennen und den Nutzer darauf hinweisen, und dabei gleichzeitig nach alternativen Lösungen oder der günstigsten Lösung, die zur Auswahl steht, suchen. Insbesondere im Zusammenhang mit künstlerischen Arbeiten des Nutzers bietet ein persönlicher intelligenter Begleiter die Möglichkeit, zu unterstützen, allein über vorprogrammierte und erlernte Bewertungen. Dabei können Betrachtungen bereits an den Nutzer angepasst sein. Die Assoziationsfähigkeit des Systems spielt hier eine wesentliche Rolle.

Als weiteres Ausführungsbeispiel wird ein "intelligenter Spiegel" beschrieben. Im Eingangsbereich oder dem Badbereich befindet sich bereits heute ein Spiegel. Die bereits im vorherigen allgemeinen Beispiel beschriebenen Eingabe- und Ausgabeschnittstellen wie verschiedene Sensoren können in einem Spiegel auf einfache Weise integriert werden. Indem ein Gegenstand verwendet wird, den ein Nutzer zwar kurz, aber häufig passiert, können eine Vielzahl von Möglichkeiten in einem derartigen AI-System umgesetzt werden.

Beispielsweise können durch geeignete Kameras, Mikrophone, Bewegungsmelder, Ultraschallsensoren, künstliche Nasen, Infrarotsensoren und weitere eine Vielzahl von Informationen über den Nutzer und vorherrschende Situationen und Nutzergewohnheiten gesammelt werden, ohne dass diese aktiv eingegeben werden müssen. Besonders in einem Eingangsbereich kann auch eine Eingangs- und Ausgangskontrolle mit implementiert werden.

Auf diese Weise kann ein intelligentes AI-System den Nutzer auf Kleidungsprobleme hinweisen und beispielsweise Kleidungsempfehlungen geben, es kann auf die zu erwartende Witterung und auf notwendige Utensilien hinweisen, falls erkannt wird, dass diese fehlen. Gegenstände, die ein Nutzer mit sich führt, können erfasst und erkannt werden. Falls erforderlich, können in einem Dialog mit dem Nutzer (über Sprache oder andere Eingabemittel) Fragen geklärt werden, ob z.B. etwas gebraucht wird, vergessen wurde oder verloren gegangen ist.

Dabei können auch durch Mikrophone aufgenommene Kommentare mit eingebunden werden, so dass der Nutzer z.B. diese Prozesse aktiv unterstützen kann, indem er Situationen oder Gegenstände kommentiert oder aktiv zur Erfassung vorzeigt. Nach geraumer Zeit kann das AI-System auf diese Weise fast alle Gegenstände, Kleidungsstücke und deren Verbleib in der Wohnung kennen. Wird etwas gesucht, oder hat der Nutzer eine Frage zu seiner Kleidung, dem Nahrungsmittelbestand, Bücherbestand usw., kann das System mit Hinweisen helfen. Beispielsweise kann der Benutzer darauf hingewiesen werden, dass er eine Brille trug, als er die Wohnung betreten hat, und es kann geschlossen werden, dass sich die Brille innerhalb der Wohnung befinden muss.

Über einen Dialog können auch Terminkalender, Listen und andere Unterstützungshilfen des täglichen Lebens von dem AI-System geführt werden. Das System ist daher auch von besonderem Nutzen für alte und kranke Menschen oder generell Menschen, die auf irgendeine Weise eingeschränkt im Alltag sind.

Durch geeignete Auswertung erfasster Daten, z.B. einer Mimikerkennung und einer Auswertung der Stimmlage oder weiterer Daten, kann das System die Stimmung des Nutzers kurzfristig erfassen und darauf basierend auch entsprechende Hinweise geben, z.B. falls jemand hektisch eine lange Fahrt antreten will. Beispielsweise kann die erkannte Stimmung in die Bewertung einfließen, die in den vorstehenden Ausführungsbeispielen durch die Bewertungsebene durchgeführt wurde.

Dabei sind die Erfassungsmöglichkeiten sowie die Dialoge nicht zwingend an das Objekt, also hier den intelligenten Spiegel, gebunden. Um zu verhindern, dass ein Nutzer längere Gespräche mit dem AI-System an einem ungeeigneten Ort führen muss, kann das System daher über Lautsprecher, Mikrophone und andere Vorrichtungen, die an entsprechenden Stellen einer Wohnung verteilt sind, den Dialog mit dem Nutzer aufnehmen oder fortführen. Auch die Bestandteile des AI-Systems selbst können auf mehrere Module verteilt sein und beispielsweise über geeignete drahtlose oder drahtgebundene Kommunikationsschnittstellen miteinander in Verbindung stehen.

Für alle hier vorgestellten AI-Systeme soll bevorzugt gelten, dass die erfassten und gespeicherten Daten, insbesondere die personenbezogenen Daten streng geschützt sind, insbesondere ist eine kryptographisch abgesicherte Speicherung von Daten vorgesehen. Dazu können auch Identifizierungssysteme eingebunden sein, die den Nutzer aus Bild, Ton, aber auch aus Bewegungsmerkmalen, einer Auswertung der Sprachbetonung oder beliebiger anderer biometrischer Eigenschaften zuverlässig identifizieren können. Damit kann verhindert werden, dass einem Gast oder einer anderen unbefugten Person im Dialog persönliche Informationen mitgeteilt werden.

Weitere mögliche Ausgestaltungen, die einzeln oder in beliebiger Kombination miteinander und mit den vorstehenden Ausführungsformen implementiert werden können, werden im Folgenden noch einmal zusammengefasst:
Beispielsweise kann gemäß einer Ausführungsform ein Verfahren in einem System aus mehreren künstlich lernenden Einheiten umgesetzt werden, welche das Eingeben von Eingabewerten an mindestens eine erste künstlich lernende Einheit und eine zweite künstlich lernende Einheit umfasst, worauf ersten Ausgabewerte der ersten künstlich lernenden Einheit erhalten werden. Auf Grundlage der Ausgabewerte der ersten künstlich lernenden Einheit können eine oder mehrere Modulationsfunktionen gebildet werden, welche dann auf einen oder mehrere Parameter der zweiten künstlich lernenden Einheit angewendet werden. Dabei kann es sich bei dem einen oder mehreren Parameter um Parameter handeln, welche die Verarbeitung von Eingabewerten und das Gewinnen von Ausgabewerten in der zweiten künstlich lernenden Einheit auf irgendeine Weise beeinflussen. Außerdem werden Ausgabewerte der zweiten künstlich lernenden Einheit erhalten. Diese können beispielsweise modulierte Ausgabewerte der zweiten Einheit darstellen.

Auf diese Weise werden zwei künstlich lernende Einheiten miteinander zu einem künstlich lernenden Systemgekoppelt, ohne eine direkte Rückkopplung der Eingabe- oder Ausgabewerte zu verwenden. Stattdessen wird eine der Einheiten genutzt, um die Funktion der zweiten Einheit durch Modulation bestimmter funktionsrelevanter Parameter zu beeinflussen, so dass eine neuartige Kopplung entsteht, die zu anderen Ergebnissen bzw. Ausgabewerten führt als in herkömmlichen lernenden Einheiten. Darüber hinaus kann durch die Bearbeitung von Eingabewerten in zwei gekoppelten Einheiten ein Ergebnis in kürzerer Zeit bzw. mit einer tiefergehenden Analyse als in herkömmlichen Systemen erreicht werden, so dass die Effizienz insgesamt gesteigert werden kann. Insbesondere erfolgt eine rasche Klassifizierung des anstehenden Problems und Berücksichtigung schneller Veränderungen.

In einer beispielhaften Ausführungsform kann mindestens eine der künstlich lernenden Einheiten (Arbeitseinheiten und Bewertungseinheiten) ein neuronales Netz mit einer Vielzahl von Knoten umfassen, insbesondere eine der künstlich lernenden Einheiten, auf die die Modulationsfunktionen angewendet werden. In diesem Fall können die ein oder mehreren Parameter mindestens eines der folgenden sein: eine Gewichtung für einen Knoten des neuronalen Netzes, eine Aktivierungsfunktion eines Knotens, eine Ausgabefunktion eines Knotens, eine Propagierungsfunktion eines Knotens. Dabei handelt es sich um wesentliche Bestandteile eines neuronalen Netzes, die die Verarbeitung von Daten in dem Netz festlegen. Anstelle einer Festlegung neuer Gewichtungen oder Funktionen für die Knoten kann durch die Modulationsfunktion eine Überlagerung vorhandener, selbstgelernter und/oder vordefinierter Funktionen des modulierten Netzes erreicht werden, die in Abhängigkeit von den Ergebnissen der ersten künstlich lernenden Einheit ist. Dabei kann diese Anwendung von Modulationsfunktionen insbesondere auch außerhalb einer Trainingsphase der Netze erfolgen und damit eine aktive Kopplung von zwei oder mehr Netzen bei der Verarbeitung von Eingabewerten erreichen.

Gemäß einer beispielhaften Ausführungsform kann wenigstens einer, bevorzugt jeder, der künstlich lernenden Einheiten (Arbeits- und Bewertungseinheiten) ein Klassifikationsspeicher zugeordnet sein, wobei jede der künstlich lernenden Einheiten eine Einordnung der Eingabewerte in ein oder mehrere Klassen vornimmt, welche in dem Klassifikationsspeicher gespeichert sind, wobei die Klassen jeweils in einer oder mehreren abhängigen Ebenen strukturiert sind, und wobei eine Anzahl der Klassen und/oder der Ebenen in einem ersten Klassifikationsspeicher der ersten künstlich lernenden Einheit (erste Arbeits-/Bewertungseinheit) geringer ist als eine Anzahl der Klassen und/oder der Ebenen in einem zweiten Klassifikationsspeicher der zweiten künstlich lernenden Einheit(zweite Arbeits-/Bewertungseinheit). Indem die Klassifikationsspeicher von zwei gekoppelten künstlich lernenden Einheiten auf diese Weise asymmetrisch gestaltet werden, kann eine parallele oder auch zeitabhängig wechselnde Bewertung der Eingabewerte mit unterschiedlicher Zielsetzung stattfinden, z.B. eine Kombination aus einer schnellen Klassifizierung der Eingabewerte und einer tiefgehenden, langsameren Analyse der Eingabewerte.

Alternativ oder zusätzlich zu der asymmetrischen Ausführung der Klassifikationsspeicher kann auch die Komplexität der ersten und zweiten künstlich lernenden Einheiten unterschiedlich gestaltet werden, so dass beispielsweise eine erste künstlich lernende Einheit (erste Arbeits-/Bewertungseinheit) einen deutlich geringeren Komplexitätsgrad aufweist als eine zweite künstlich lernende Einheit (erste Arbeits-/Bewertungseinheit). Dabei kann für den Fall neuronaler Netze beispielsweise ein erstes neuronales Netz wesentlich weniger Knoten und/oder Schichten und/oder Kanten aufweisen als ein zweites neuronales Netz.

In einer möglichen Ausführungsform kann das Anwenden der mindestens einen Modulationsfunktion eine zeitabhängige Überlagerung von Parametern der zweiten künstlich lernenden Einheit bewirken, wobei die mindestens eine Modulationsfunktion eines der folgenden Merkmale umfassen kann: eine periodische Funktion, eine Stufenfunktion, eine Funktion mit kurzzeitig erhöhten Amplituden, eine gedämpfte Schwingungsfunktion, eine Schwebungsfunktion als Überlagerung mehrerer periodischer Funktionen, eine stetig zunehmende Funktion, eine stetig abnehmende Funktion. Ebenso sind Kombinationen oder zeitliche Abfolgen solcher Funktionen denkbar. Auf diese Weise können relevante Parameter einer lernenden Einheit zeitabhängig überlagert werden, so dass beispielsweise die Ausgabewerte aufgrund der Modulation in Suchräume "springen", die ohne die Überlagerung nicht erreicht würden.

Optional kann die zweite künstlich lernende Einheit ein zweites neuronales Netz mit einer Vielzahl von Knoten umfassen, wobei das Anwenden der mindestens einen Modulationsfunktion eine Deaktivierung von mindestens einem Teil der Knoten bewirkt. Diese Art der Deaktivierung kann auch als "Dropout" auf Grundlage der Ausgabewerte der ersten künstlich lernenden Einheit betrachtet werden und kann ebenfalls für neu erschlossene Suchbereiche in den Klassifikationen sowie für einen verringerten Rechenaufwand und damit eine beschleunigte Durchführung des Verfahrens sorgen.

In beispielhaften Ausführungsformen kann das Verfahren weiter das Festlegen einer aktuell dominierenden künstlich lernenden Einheit in dem System umfassen, sowie das Bilden von Gesamtausgabewerten des Systems aus den Ausgabewerten der aktuell dominierenden Einheit. Auf diese Weise können die zwei oder mehr künstlich lernenden Einheiten in dem System sinnvoll gekoppelt und synchronisiert werden.

Dabei kann beispielsweise die erste künstlich lernende Einheit (insbesondere die erste Arbeitseinheit) mindestens so lange als dominierende Einheit festgelegt werden, bis ein oder mehrere Ausgabewerte der zweiten künstlich lernenden Einheit (insbesondere der zweiten Arbeitseinheit) vorliegen. Auf diese Weise kann sichergestellt werden, dass das System zu jeder Zeit entscheidungssicher ist, also zu jeder Zeit (nach einem ersten Durchlauf der ersten Arbeitseinheit) eine Reaktion des Systems möglich ist, auch bevor eine vollständige Einordnung der Eingabewerte durch alle vorhandenen künstlich lernenden Einheiten des Systems vorgenommen wurde.

Es ist dabei auch möglich, weiter einen Vergleich der derzeitigen Eingabewerte mit vorherigen Eingabewerten durch mindestens eine der künstlichen lernenden Einheiten des Systems anzuwenden, wobei, falls der Vergleich eine Abweichung ergibt, die über einem vorgegebenen Eingabe-Schwellwert liegt, die erste künstlich lernende Einheit als dominierende Einheit festgelegt wird. Auf diese Weise kann dafür gesorgt werden, dass auf wesentlich veränderte Eingabewerte (z.B. Erfassen einer neuen Situation durch Sensoren) sofort mit einer neuen Analyse der Eingabewerte reagiert wird.

Zusätzlich oder alternativ kann weiter ein Vergleich von derzeitigen Ausgabewerten der ersten künstlich lernenden Einheit mit vorherigen Ausgabewerten der ersten künstlichen Einheit (insbesondere der ersten Arbeitseinheit) vorgenommen werden, wobei, falls der Vergleich eine Abweichung ergibt, die über einem vorgegebenen Ausgabe-Schwellwert liegt, die erste künstlich lernende Einheit als dominierende Einheit festgelegt wird. Durch Bewertung von Abweichungen in den Ausgabewerten, beispielsweise bei Vorliegen abweichender Klassen als Ergebnis im Vergleich zu einem früheren Durchlauf, können damit ebenfalls indirekt Veränderungen der Eingabewerte erkannt werden, die eine gewisse Signifikanz aufweisen und damit eine neue Klassifizierung sinnvoll machen.

Das System kann in gewissen Ausführungsformen weiter wenigstens einen Timer umfassen, in dem ein oder mehrere vorgegebene Zeitspannen gespeichert sind, die einer oder mehreren der künstlich lernenden Einheiten zugeordnet sind, wobei der Timer dazu eingerichtet ist, für jeweils eine der künstlich lernenden Einheiten den Ablauf der dieser Einheit zugeordneten vorgegebenen Zeitspanne zu messen. Ein derartiges Element bildet eine Möglichkeit, die unterschiedlichen Einheiten eines Systems beispielsweise zu synchronisieren und zu steuern, wann Ausgabewerte einer bestimmten Einheit erwartet oder weiterverarbeitet werden. Damit kann durch einen Timer eine einstellbare Latenzzeit des Gesamtsystems definiert werden, innerhalb derer eine Entscheidung als Gesamtausgabewert des Systems vorliegen soll. Diese Zeit kann beispielsweise wenige ms betragen, z.B. 30 oder 50 ms, und kann unter anderem abhängig von der vorhandenen Topologie der rechnenden Einheiten und den vorliegenden Recheneinheiten (Prozessoren oder andere Datenverarbeitungsmittel) sein.

Dabei kann beispielsweise das Messen der zugeordneten vorgegebenen Zeitspanne für eine der künstlich lernenden Einheiten gestartet werden, sobald diese künstlich lernende Einheit als dominierende Einheit festgelegt wird. Auf diese Weise kann sichergestellt werden, dass eine Einheit innerhalb einer vorgegebenen Zeit eine Lösung erarbeitet oder optional die Datenverarbeitung sogar abgebrochen wird.

In einer möglichen Ausführungsform kann die zweite künstlich lernende Einheit (insbesondere die zweite Arbeitseinheit) als dominierende Einheit festgelegt werden, falls eine für die erste künstlich lernende Einheit vorgegebene erste Zeitspanne in dem Timer abgelaufen ist. Dies sorgt dafür, dass bereits vor der Analyse der Eingabewerte durch weitere künstlich lernende Einheiten eine Reaktion auf Grundlage der ersten künstlichen Einheit möglich ist, während anschließend die Daten detaillierter durch die zweite Einheit ausgewertet werden.

In beliebigen Ausführungsformen können die Eingabewerte beispielsweise eines oder mehrere des folgenden umfassen: Durch einen oder mehrere Sensoren erfasste Messwerte, durch eine Benutzerschnittstelle erfasste Daten, aus einem Speicher abgerufene Daten, über eine Kommunikationsschnittstelle empfangene Daten, von einer Recheneinheit ausgegebene Daten. Es kann sich also z.B. um von einer Kamera erfasste Bilddaten, um Audiodaten, um Positionsdaten, um physikalische Messwerte wie Geschwindigkeiten, Abstandsmesswerte, Widerstandswerte und allgemein jeden beliebigen Wert handeln, der von einem geeigneten Sensor erfasst wird. Ebenso können Daten von einem Benutzer über eine Tastatur oder einen Bildschirm eingegeben oder ausgewählt werden und optional auch mit anderen Daten wie etwa Sensordaten verknüpft werden.

Es versteht sich, dass die vorstehend beschriebenen Beispiele beliebig miteinander kombiniert werden können. Beispielsweise kann in jeder der beschriebenen Ausführungsformen auch ein Timer, der in Zusammenhang mit Figur 4 beschrieben wurde, vorhanden sein. Ebenso können die lernenden Einheiten in allen Beispiele Klassifikationsspeicher aufweisen, wie sie als Beispiel in Verbindung mit Figur 5 beschrieben wurden. Alle diese Varianten sind wiederum auf eine Kopplung auch von mehr als drei oder vier künstlich lernenden Einheiten anwendbar.

## Patentansprüche

1. Verfahren, das in einer Steuerung einer Maschine ausgeführt wird, zum Verarbeiten von Eingabewerten (Xᵢ), die durch einen oder mehrere Sensoren erfasste Sensordaten umfassen, in einem Gesamtsystem, das eine Arbeitsebene (710) und eine Bewertungsebene (730), die künstlich lernende Systeme sind, aufweist, umfassend wiederholtes Durchführen der folgenden Schritte a) - d):
a) Eingeben erster Eingabewerte (Xᵢ(t1)) an die Arbeitsebene und Bestimmen erster Ausgabewerte (Output11) aus den ersten Eingabewerten durch die Arbeitsebene, entsprechend einer ersten Klassifizierung;
b) Bilden von ersten Situationsdaten (Y(t3)) basierend auf den ersten Ausgabewerten (Output11);
c) Eingeben der ersten Situationsdaten an die Bewertungsebene und Bestimmen erster Bewertungen (Output21) durch die Bewertungsebene, die anzeigen, ob oder zu welchem Grad die ersten Situationsdaten vorgegebene erste Bedingungen erfüllen;
d) Beeinflussen, bei der nächsten Durchführung der Schritte a) - d), des Bestimmens der ersten Ausgabewerte in der Arbeitsebene basierend auf den ersten Bewertungen;
wiederholtes Durchführen der folgenden Schritte e) - h):
e) Eingeben zweiter Eingabewerte (Xᵢ(t2)) an die Arbeitsebene und Bestimmen zweiter Ausgabewerte (Output12) aus den zweiten Eingabewerten durch die Arbeitsebene, entsprechend einer zweiten Klassifizierung, wobei das Bestimmen der zweiten Ausgabewerte durch die ersten Ausgabewerte beeinflusst wird;
f) Bilden von zweiten Situationsdaten (Y(t4)) basierend auf den zweiten Ausgabewerten;
g) Eingeben der zweiten Situationsdaten an die Bewertungsebene und Bestimmen zweiter Bewertungen (Output22) durch die Bewertungsebene, die anzeigen, ob oder zu welchem Grad die zweiten Situationsdaten vorgegebene zweite Bedingungen erfüllen, wobei das Bestimmen der zweiten Bewertungen durch die ersten Bewertungen beeinflusst wird;
h) Beeinflussen, bei der nächsten Durchführung der Schritte e) - h), des Bestimmens der zweiten Ausgabewerte in der Arbeitsebene basierend auf den zweiten Bewertungen;
wobei die ersten und/oder die zweiten Ausgabewerte als Gesamtausgabewerte (Output) des Gesamtsystems verwendet werden, wobei die Gesamtausgabewerte als Steuerungsparameter und/oder Zustandsparameter der Maschine verwendet werden;
wobei das Bestimmen der ersten und der zweiten Ausgabewerte aus den ersten bzw. den zweiten Eingabewerten und das Bestimmen der ersten und der zweiten Ausgabewerte aus den ersten bzw. den zweiten Situationswerten jeweils durch eine oder mehrere Parameter der künstlich lernende Systeme bestimmt wird und wobei die Beeinflussung in den Schritten d), e), g) und h) jeweils eine Modulierung des jeweiligen einen oder der jeweiligen mehreren Parameter einschließt.

2. Verfahren nach Anspruch 1, wobei die Schritte a) - d) wiederholt durchgeführt werden bis eine vorgegebene erste Zeitspanne abgelaufen ist und/oder sich die ersten Ausgabewerte zwischen aufeinanderfolgenden Wiederholungen innerhalb vorgegebener erster Toleranzen nicht mehr ändern und/oder die ersten Bewertungen anzeigen, dass die ersten Bedingungen zumindest zu einem gewissen Grad erfüllt sind; wobei bevorzugt die ersten Ausgabewerte als Gesamtausgabewerte verwendet werden, wenn diese wiederholte Durchführung abgeschlossen ist; und/oder
wobei die Schritte e) - h) wiederholt durchgeführt werden bis eine vorgegebene zweite Zeitspanne abgelaufen ist und/oder sich die zweiten Ausgabewerte zwischen aufeinanderfolgenden Wiederholungen innerhalb vorgegebener zweiter Toleranzen nicht mehr ändern und/oder die zweiten Bewertungen anzeigen, dass die zweiten Bedingungen zumindest zu einem gewissen Grad erfüllt sind; wobei bevorzugt die zweiten Ausgabewerte als Gesamtausgabewerte verwendet werden, wenn diese wiederholte Durchführung abgeschlossen ist.

3. Verfahren nach einem der vorstehenden Ansprüche, umfassend
Speichern, in einem Gesamtabfolgespeicher (760, 860), von Gesamtabfolgen von Gesamtsätzen, die jeweils einander entsprechende Eingabewerte und/oder erste Ausgabewerte und/oder erste Situationsdaten und/oder erste Bewertungen und/oder zweite Ausgabewerte und/oder zweite Situationsdaten und/oder zweite Bewertungen umfassen; wobei bevorzugt die Gesamtsätze und/oder die in den Gesamtsätzen umfassten Werte bzw. Daten mit jeweiligen Zeitinformationen und oder einer Nummerierung versehen werden.

4. Verfahren nach einem der vorstehenden Ansprüche, umfassend Ergänzen der ersten und/oder zweiten Bedingungen, so dass für erste bzw. zweite Situationsdaten, für die die ersten bzw. zweiten Bedingungen vor der Ergänzung nicht erfüllt sind, die ergänzten ersten bzw. zweiten Bedingungen erfüllt oder zumindest zu einem gewissen Grad erfüllt sind; wobei bevorzugt nur die zweiten Bedingungen geändert werden und die ersten Bedingungen unverändert bleiben;
wobei bevorzugt, gegebenenfalls, wenn die Wiederholung der Schritte e) - h) abgebrochen wird, weil die zweite Zeitspanne abgelaufen ist oder, bevorzugt, weil sich die zweiten Ausgabewerte innerhalb der zweiten Toleranzen nicht mehr ändern, die zweiten Bedingungen ergänzt werden, so dass die bei Abbruch vorliegenden Situationsdaten die ergänzten zweiten Bedingungen erfüllen; und/oder
wobei bevorzugt, gegebenenfalls, das Ergänzen der ersten und/oder zweiten Bedingungen basierend auf gespeicherten Gesamtabfolgen erfolgt, für die die ersten bzw. zweiten Bedingungen nicht erfüllt werden konnten.

5. Verfahren nach einem der vorstehenden Ansprüche, wobei die zweite Klassifizierung wenigstens eine Klasse der ersten Klassifizierung in mehrere Unterklassen klassifiziert und/oder wobei für wenigstens eine der ersten Bedingungen diese eine erste Bedingung durch mehrere der zweiten Bedingungen impliziert ist.

6. Verfahren nach einem der vorstehenden Ansprüche, wobei die ersten Bedingungen in Form von Regeln gegeben sind und die zweiten Bedingungen in Form von Regel-Klassifizierungen gegeben sind; wobei jeder Regel eine Regel-Klassifizierung zugeordnet ist, die eine Untergliederung, insbesondere in mehrere Ebenen, der jeweiligen Regel darstellt; wobei bevorzugt Speicher vorgesehen sind, in denen die Regeln und die Regel-Klassifizierungen gespeichert werden; wobei weiter bevorzugt die Regel-Klassifizierungen in Ebenen untergliedert sind, die mittels einer Blockchain verknüpft sind, wobei die Regeln und/oder Regel-Klassifizierungen jeweils in Form eines Smart-Contracts implementiert sind und/oder wobei, falls abhängig von Anspruch 4, beim Ergänzen der zweiten Bedingungen eine weitere Ebene der Untergliederung hinzugefügt wird.

7. Verfahren nach einem der vorstehenden Ansprüche, wobei die Arbeitsebene so ausgebildet ist, dass das Bestimmen der ersten Ausgabewerte in Schritt a) einen kürzeren Zeitraum und das Bestimmen der zweiten Ausgabewerte in Schritt e) einen längeren Zeitraum benötigt; und/oder wobei die Bewertungsebene so ausgebildet ist, dass das Bestimmen der ersten Bewertungen in Schritt c) einen kürzeren Zeitraum und das Bestimmen der zweiten Bewertungen in Schritt g) einen längeren Zeitraum benötigt; wobei bevorzugt in beiden Fällen unabhängig voneinander der längere Zeitraum um mindestens einen Faktor 2, insbesondere um mindestens einen Faktor 5, länger ist als der kürzere Zeitraum.

8. Verfahren nach einem der vorstehenden Ansprüche, wobei die ersten und zweiten Eingabewerte als zeitkontinuierliche Eingangssignale oder als zeitdiskrete Zeitreihen gegeben sind, wobei bevorzugt die ersten und die zweiten Eingabewerte ganz oder teilweise identisch sind.

9. Verfahren nach einem der vorstehenden Ansprüche,
wobei die Arbeitsebene eine erste und eine zweite künstlich lernende Arbeitseinheit (810, 820) umfasst; wobei die erste künstlich lernende Arbeitseinheit (810) eingerichtet ist, die ersten Eingabewerte (Xᵢ(t1)) zu empfangen und die ersten Ausgabewerte zu bestimmen; wobei die zweite künstlich lernende Arbeitseinheit (820) eingerichtet ist, die zweiten Eingabewerte (Xᵢ(t2)) zu empfangen und die zweiten Ausgabewerte zu bestimmen;
wobei in der Arbeitsebene eine oder mehrere erste Modulationsfunktionen (f_{mod1_f}, f_{mod1_w}) auf Grundlage der ersten Ausgabewerte und/oder daraus abgeleiteter Werte gebildet werden, wobei die gebildeten einen oder mehreren ersten Modulationsfunktionen auf einen oder mehrere Parameter (f_{outA2}, f_{aktA2}, f_{transA2}, w_{iA2}) der zweiten künstlich lernenden Arbeitseinheit (820) angewendet werden, wobei die ein oder mehreren Parameter die Verarbeitung von Eingabewerten und das Gewinnen von Ausgabewerten in der zweiten künstlich lernenden Arbeitseinheit beeinflussen; und
wobei bevorzugt ein oder mehrere zweite Modulationsfunktionen (f_{mod2_f}, f_{mod2_w}) auf Grundlage der ersten Bewertungen und/oder daraus abgeleiteter Werte gebildet werden, wobei die gebildeten einen oder mehreren zweiten Modulationsfunktionen auf einen oder mehrere Parameter (f_{outA1}, f_{aktA1}, f_{transA1}, w_{iA1}) der ersten künstlich lernenden Arbeitseinheit (810) angewendet werden, wobei die ein oder mehreren Parameter die Verarbeitung von Eingabewerten und das Gewinnen von Ausgabewerten in der ersten künstlich lernenden Arbeitseinheit beeinflussen.

10. Verfahren nach Anspruch 9,
wobei die ersten Bewertungen und/oder daraus abgeleitete Werte als Bewertungs-Eingabewerte der ersten künstlich lernenden Arbeitseinheit (810) verwendet werden;
und/oder wobei die zweiten Bewertungen und/oder daraus abgeleitete Werte als Bewertungs-Eingabewerte der zweiten künstlich lernenden Arbeitseinheit (820) verwendet werden.

11. Verfahren nach einem der vorstehenden Ansprüche, wobei die Bewertungsebene eine erste und eine zweite künstlich lernende Bewertungseinheit (830, 840) umfasst; wobei die erste künstlich lernende Bewertungseinheit (830) eingerichtet ist, die ersten Situationsdaten (Y(t3)) zu empfangen und die ersten Bewertungen zu bestimmen; wobei die zweite künstlich lernende Bewertungseinheit (840) eingerichtet ist, die zweiten Situationsdaten (Y(t4)) zu empfangen und die zweiten Bewertungen zu bestimmen; und
wobei in der Bewertungsebene eine oder mehrere dritte Modulationsfunktionen (f_{mod3_f}, f_{mod3_w}) auf Grundlage der ersten Bewertungen und/oder daraus abgeleiteter Werte gebildet werden, wobei die gebildeten einen oder mehreren zweiten Modulationsfunktionen auf einen oder mehrere Parameter (f_{outB2}, f_{aktB2}, f_{transB2}, w_{iB2}) der zweiten künstlich lernenden Bewertungseinheit (840) angewendet werden, wobei der eine oder die mehreren Parameter die Verarbeitung von Eingabewerten und das Gewinnen von Ausgabewerten in der zweiten künstlich lernenden Bewertungseinheit beeinflussen.

12. Verfahren nach Anspruch 11, weiter umfassend
Speichern, in einem ersten Abfolgespeicher, einer ersten Bewertungsabfolge von ersten Bewertungssätzen, die Eingabewerte der ersten Bewertungseinheit und zugehörige erste Bewertungen umfassen, wobei die ersten Bewertungssätze insbesondere mit jeweiligen Zeitinformationen und/oder einer Nummerierung versehen werden; und/oder
Speichern, in einem zweiten Abfolgespeicher (832), einer zweiten Bewertungsabfolge von zweiten Bewertungssätzen, die Eingabewerte der zweiten Bewertungseinheit und zugehörige zweite Bewertungen umfassen, wobei die zweiten Bewertungssätze insbesondere mit jeweiligen Zeitinformationen und/oder einer Nummerierung versehen werden;
wobei bevorzugt das Bestimmen der ersten und/oder der zweiten Bewertungen unter Berücksichtigung der gespeicherten ersten bzw. zweiten Bewertungsabfolgen erfolgt.

13. Verfahren nach einem der vorstehenden Ansprüche, umfassend
Empfangen Ausgabewerten eines anderen Systems;
Bilden von ersten und/oder zweiten Situationsdaten aus den empfangenen Ausgabewerten;
Bestimmen von ersten und/oder zweiten Bewertungen durch die Bewertungsebene basierend auf den aus den empfangenen Ausgabewerten gebildeten ersten bzw. zweiten Situationsdaten;
Feststellen, dass das andere System kompatibel ist, wenn die bestimmten ersten und/oder zweiten Bewertungen anzeigen, dass die ersten bzw. zweiten Bedingungen erfüllt sind.

14. System in einer Steuerung einer Maschine umfassend eine Arbeitsebene (710) und eine Bewertungsebene (730) und dazu eingerichtet, dass Verfahren nach einem der vorstehenden Ansprüche durchzuführen; wobei die Arbeitsebene eingerichtet ist, die Eingabewerte zu empfangen und wobei bevorzugt die Bewertungsebene nicht in der Lage ist, die Eingabewerte zu empfangen.

15. System nach Anspruch 14, wobei die Arbeitsebene und die Bewertungsebene jeweils in wenigstens einer Recheneinheit implementiert sind.

## Claims

1. A method, executed in a controller of a machine, for processing input values (Xᵢ) comprising sensor data acquired by one or more sensors, in an overall system comprising a working level (710) and an evaluation level (730) which are artificially learning systems, comprising
repeatedly performing of the following steps a) - d):
a) inputting of first input values (Xᵢ(t1)) to the working level and determination of first output values (output11) from the first input values by the working level, according to a first classification;
b) forming the first situation data (Y(t3)) based on the first output values (Output11);
c) inputting the initial situation data to the evaluation level and determining first assessments (output21) by the evaluation level that indicate whether or to what degree the initial situation data fulfils predefined initial conditions;
d) influencing, during the next execution of steps a) - d), the determination of the first output values in the working level based on the first assessments;
repeatedly performing of the following steps e) - h):
e) inputting of second input values (Xᵢ(t2)) to the working level and determination of second output values (Output12) from the second input values by the working level, according to a second classification, whereby the determination of the second output values is influenced by the first output values;
f) forming second situation data (Y(t4)) based on the second output values;
g) inputting the second situation data to the evaluation level and determining second assessments (output22) by the evaluation level indicating whether or to what degree the second situation data fulfils predetermined second conditions, the determination of the second assessments being influenced by the first assessments;
h) influencing, in the next execution of steps e) - h), the determination of the second output values in the working level based on the second assessments;
wherein the first and/or the second output values are used as total output values of the overall system, wherein the total output values are used as control parameters and/or status parameters of the machine;
wherein the determination of the first and second output values from the first and second input values, respectively, and the determination of the first and second output values from the first and second situation values, respectively, are each determined by one or more parameters of the artificially learning systems, and wherein the influencing in steps d), e), g) and h) each includes a modulation of the respective one or more parameters.

2. The method according to claim 1, wherein steps a) - d) are performed repeatedly until a predetermined first time period has elapsed and/or the first output values no longer change between successive repetitions within predetermined first tolerances and/or the first assessments indicate that the first conditions have been met at least to some extent; preferably using the first output values as total output values when said repeated performance is completed; and/or
wherein steps e) - h) are performed repeatedly until a predetermined second time period has elapsed and/or the second output values no longer change between successive repetitions within predetermined second tolerances and/or the second assessments indicate that the second conditions have been met at least to some degree; preferably using the second output values as total output values when this repeated performance is completed.

3. The method according to any one of the preceding claims, comprising
storing, in a total sequence memory (760, 860), total sequences of total records each comprising mutually corresponding input values and/or first output values and/or first situation data and/or first assessments and/or second output values and/or second situation data and/or second assessments; wherein preferably the total records and/or the values or data comprised in the total records are provided with respective time information and/or numbering.

4. The method according to any of the preceding claims, comprising supplementing the first and/or second conditions such that for first and/or second situation data, for which the first and second conditions, respectively, are not fulfilled before the supplementation, the supplemented first and second conditions, respectively, are fulfilled or at least to a certain degree; wherein preferably only the second conditions are changed and the first conditions remain unchanged;
wherein, preferably, if the repetition of steps e) - h) is cancelled because the second time period has expired or, preferably, because the second output values no longer change within the second tolerances, the second conditions are supplemented so that the situation data present at the time of cancellation fulfil the supplemented second conditions; and/or
wherein preferably, if necessary, the first and/or second conditions are supplemented based on stored overall sequences for which the first and/or second conditions could not be fulfilled.

5. The method according to any one of the preceding claims, wherein the second classification classifies at least one class of the first classification into a plurality of subclasses and/or wherein, for at least one of the first conditions, said one first condition is implied by a plurality of the second conditions.

6. The method according to one of the preceding claims, wherein the first conditions are given in the form of rules and the second conditions are given in the form of rule classifications; wherein each rule is assigned a rule classification which represents a subdivision, in particular into several levels, of the respective rule; wherein memories are preferably provided in which the rules and the rule classifications are stored; wherein further preferably the rule classifications are subdivided into levels which are linked by means of a blockchain, wherein the rules and/or rule classifications are each implemented in the form of a smart contract and/or wherein, if dependent on claim 4, a further level of subdivision is added when the second conditions are added.

7. The method according to one of the preceding claims, wherein the working level is designed such that the determination of the first output values in step a) requires a shorter period of time and the determination of the second output values in step e) requires a longer period of time; and/or wherein the evaluation level is designed such that the determination of the first assessments in step c) requires a shorter period of time and the determination of the second assessments in step g) requires a longer period of time; wherein preferably in both cases, independently of each other, the longer period of time is longer than the shorter period of time by at least a factor of 2, in particular by at least a factor of 5.

8. The method according to one of the preceding claims, wherein the first and second input values are given as continuous-time input signals or as discrete-time time series, preferably the first and second input values are wholly or partially identical.

9. The method according to any of the preceding claims,
wherein the working level comprises a first and a second artificially learning working unit (810, 820); wherein the first artificially learning working unit (810) is arranged to receive the first input values (Xᵢ (t1)) and to determine the first output values; wherein the second artificially learning working unit (820) is arranged to receive the second input values (Xᵢ(t2)) and to determine the second output values;
wherein one or more first modulation functions (f_{mod1_f}, f_{mod1_w}) are formed in the working level on the basis of the first output values and/or values derived therefrom, wherein the formed one or more first modulation functions are applied to one or more parameters (f_{outA2}, f_{aktA2}, f_{transA2}, w_{iA2}) of the second artificially learning working unit (820), wherein the one or more parameters influence the processing of input values and the obtaining of output values in the second artificially learning working unit; and
wherein preferably one or more second modulation functions (f_{mod2_f}, f_{mod2_w}) are formed on the basis of the first assessments and/or values derived therefrom, wherein the formed one or more second modulation functions are applied to one or more parameters (f_{outA1}, f_{aktA1}, f_{transA1}, w_{iA1}) of the first artificially learning working unit (810), wherein the one or more parameters influence the processing of input values and the obtaining of output values in the first artificially learning working unit.

10. The method according to claim 9,
wherein the first assessments and/or values derived therefrom are used as evaluation input values of the first artificially learning working unit (810);
and/or wherein the second assessments and/or values derived therefrom are used as evaluation input values of the second artificially learning working unit (820).

11. The method according to any one of the preceding claims, wherein the evaluation level comprises a first and a second artificially learning assessment unit (830, 840); wherein the first artificially learning assessment unit (830) is arranged to receive the first situation data (Y(t3)) and to determine the first assessments; wherein the second artificially learning assessment unit (840) is arranged to receive the second situation data (Y(t4)) and to determine the second assessments; and
one or more third modulation functions (f_{mod3_ f}, f_{mod3_w}) being formed in the evaluation level on the basis of the first assessments and/or values derived therefrom, the formed one or more second modulation functions being applied to one or more parameters (f_{outB2}, f_{aktB2}, f_{transB2}, w_{iB2}) of the second artificially learning evaluation unit (840), wherein the one or more parameters influence the processing of input values and the obtaining of output values in the second artificially learning evaluation unit.

12. The method according to claim 11, further comprising
storing, in a first sequence memory, a first evaluation sequence of first evaluation records which comprise input values of the first evaluation unit and associated first assessments, the first evaluation records being provided in particular with respective time information and/or a numbering; and/or
storing, in a second sequence memory (832), a second evaluation sequence of second evaluation records which comprise input values of the second evaluation unit and associated second assessments, the second evaluation records being provided in particular with respective time information and/or numbering;
wherein preferably the determination of the first and/or the second assessments takes place taking into account the stored first and/or second evaluation sequences.

13. The method according to any one of the preceding claims, comprising
receiving output values from another system;
forming first and/or second situation data from the received output values;
determining first and/or second assessments by the evaluation level based on the first and/or second situation data formed from the received output values;
determining that the other system is compatible if the specific first and/or second assessments indicate that the first and/or second conditions are met.

14. A system in a controller of a machine comprising a working level (710) and an evaluation level (730) and adapted to perform the method according to any of the preceding claims; wherein the working level is adapted to receive the input values and wherein preferably the evaluation level is not capable of receiving the input values.

15. The system according to claim 14, wherein the working level and the evaluation level are each implemented in at least one computing unit.

## Revendications

1. Procédé, qui est exécuté dans une commande d'une machine, pour traiter des valeurs d'entrée (Xᵢ₎ , qui comprennent des données de capteur détectées par un ou plusieurs capteurs, dans un système global qui présente un niveau de travail (710) et un niveau d'évaluation (730), qui sont des systèmes d'apprentissage artificiel, comprenant l'exécution répétée des étapes a) à d) suivantes :
a) introduction de premières valeurs d'entrée (X₍ᵢ₎₍t1)) au plan de travail et détermination par le plan de travail de premières valeurs de sortie (Output11) à partir des premières valeurs d'entrée, conformément à une première classification ;
b) former les premières données de situation (Y(t3)) sur la base des premières valeurs de sortie (Output11) ;
c) l'entrée des premières données de situation au niveau d'évaluation et la détermination par le niveau d'évaluation de premières évaluations (Output21) indiquant si ou dans quelle mesure les premières données de situation remplissent des premières conditions prédéterminées ;
d) influencer, lors de l'exécution suivante des étapes a) à d), la détermination des premières valeurs de sortie dans le plan de travail sur la base des premières évaluations ;
l'exécution répétée des étapes e) à h) suivantes :
e) l'entrée de deuxièmes valeurs d'entrée (X₍ᵢ₎₍t2)) au plan de travail et la détermination de deuxièmes valeurs de sortie (Output12) à partir des deuxièmes valeurs d'entrée par le plan de travail, selon une deuxième classification, la détermination des deuxièmes valeurs de sortie étant influencée par les premières valeurs de sortie ;
f) former des secondes données de situation (Y(t4)) sur la base des secondes valeurs de sortie ;
g) l'entrée des secondes données de situation au niveau d'évaluation et la détermination par le niveau d'évaluation de secondes évaluations (Output22) indiquant si ou dans quelle mesure les secondes données de situation satisfont à des secondes conditions prédéterminées, la détermination des secondes évaluations étant influencée par les premières évaluations ;
h) influencer, lors de l'exécution suivante des étapes e) à h), la détermination des secondes valeurs de sortie dans le plan de travail sur la base des secondes évaluations ;
les premières et/ou les deuxièmes valeurs de sortie étant utilisées comme valeurs de sortie totales (Output) du système complet, les valeurs de sortie totales étant utilisées comme paramètres de commande et/ou paramètres d'état de la machine ;
la détermination des premières et des deuxièmes valeurs de sortie à partir des premières et des deuxièmes valeurs d'entrée, respectivement, et la détermination des premières et des deuxièmes valeurs de sortie à partir des premières et des deuxièmes valeurs de situation, respectivement, étant déterminées par un ou plusieurs paramètres des systèmes à apprentissage artificiel de et l'influence dans les étapes d), e), g) et h) incluant respectivement une modulation de l'un ou des plusieurs paramètres respectifs.

2. Procédé selon la revendication 1, dans lequel les étapes a) à d) sont exécutées de manière répétée jusqu'à ce qu'une première période de temps prédéterminée se soit écoulée et/ou que les premières valeurs de sortie ne changent plus entre des répétitions successives dans des premières tolérances prédéterminées et/ou que les premières évaluations indiquent que les premières conditions sont remplies au moins dans une certaine mesure ; de préférence, les premières valeurs de sortie sont utilisées comme valeurs de sortie totales lorsque cette exécution répétée est terminée ; et/ou
dans lequel les étapes e) - h) sont exécutées de manière répétée jusqu'à ce qu'une deuxième période de temps prédéterminée se soit écoulée et/ou que les deuxièmes valeurs de sortie ne changent plus entre des répétitions successives à l'intérieur de deuxièmes tolérances prédéterminées et/ou que les deuxièmes évaluations indiquent que les deuxièmes conditions sont satisfaites au moins dans une certaine mesure ; dans lequel, de préférence, les deuxièmes valeurs de sortie sont utilisées comme valeurs de sortie totales lorsque cette exécution répétée est terminée.

3. Procédé selon l'une quelconque des revendications précédentes, comprenant
stocker, dans une mémoire de séquence totale (760, 860), des séquences totales d'ensembles comprenant respectivement des valeurs d'entrée et/ou des premières valeurs de sortie et/ou des premières données de situation et/ou des premières évaluations et/ou des deuxièmes valeurs de sortie et/ou des deuxièmes données de situation et/ou des deuxièmes évaluations correspondant les unes aux autres ; de préférence, les ensembles totaux et/ou les valeurs ou données comprises dans les ensembles totaux étant munis d'informations de temps respectives et/ou d'une numérotation.

4. Procédé selon l'une quelconque des revendications précédentes, comprenant le fait de compléter les premières et/ou deuxièmes conditions de sorte que, pour des premières ou deuxièmes données de situation, respectivement, pour lesquelles les premières ou deuxièmes conditions ne sont pas satisfaites avant le complément, les premières ou deuxièmes conditions complétées sont satisfaites ou sont satisfaites au moins dans une certaine mesure ; de préférence, seules les deuxièmes conditions sont modifiées et les premières conditions restent inchangées ;
de préférence, le cas échéant, lorsque la répétition des étapes e) - h) est interrompue parce que le deuxième laps de temps est écoulé ou, de préférence, parce que les deuxièmes valeurs de sortie ne changent plus à l'intérieur des deuxièmes tolérances, les deuxièmes conditions sont complétées de sorte que les données de situation présentes lors de l'interruption satisfont aux deuxièmes conditions complétées ; et/ou
de préférence, le cas échéant, le complément des premières et/ou deuxièmes conditions s'effectuant sur la base deséquences globales mémorisées pour lesquelles les premières ou deuxièmes conditions n'ont pas pu être remplies.

5. Procédé selon l'une quelconque des revendications précédentes, dans lequel la deuxième classification classe au moins une classe de la première classification en plusieurs sous-classes et/ou dans lequel, pour au moins une des premières conditions, cette première condition est impliquée par plusieurs des deuxièmes conditions.

6. Procédé selon l'une des revendications précédentes, dans lequel les premières conditions sont données sous forme de règles et les deuxièmes conditions sont données sous forme de classifications de règles ; à chaque règle est associée une classification de règles qui représente une subdivision, en particulier en plusieurs niveaux, de la règle respective ; de préférence, des mémoires sont prévues dans lesquelles les règles et les classifications de règles sont stockées ; dans lequel, de préférence encore, les classifications de règles sont subdivisées en niveaux qui sont reliés au moyen d'une cha ne de blocs, dans lequel les règles et/ou les classifications de règles sont respectivement mises en oeuvre sous la forme d'un Smart Contract et/ou dans lequel, si cela dépend de la revendication 4, un autre niveau de la subdivision est ajouté lors de l'ajout des deuxièmes conditions.

7. Procédé selon l'une des revendications précédentes, dans lequel le plan de travail est conçu de telle sorte que la détermination des premières valeurs de sortie à l'étape a) nécessite un laps de temps plus court et la détermination des deuxièmes valeurs de sortie à l'étape e) nécessite un laps de temps plus long ; et/ou dans lequel le plan d'évaluation est conçu de telle sorte que la détermination des premières évaluations à l'étape c) nécessite un laps de temps plus court et la détermination des deuxièmes évaluations à l'étape g) nécessite un laps de temps plus long ; de préférence dans les deux cas, indépendamment l'un de l'autre, le laps de temps plus long est plus long d'au moins un facteur 2, en particulier d'au moins un facteur 5, que le laps de temps plus court.

8. Procédé selon l'une des revendications précédentes, dans lequel les premières et deuxièmes valeurs d'entrée sont données sous forme de signaux d'entrée continus dans le temps ou de séries temporelles discrètes dans le temps, de préférence les premières et deuxièmes valeurs d'entrée étant totalement ou partiellement identiques.

9. Procédé selon l'une quelconque des revendications précédentes,
dans lequel le plan de travail comprend une première et une seconde unité de travail à apprentissage artificiel (810, 820) ; dans lequel la première unité de travail à apprentissage artificiel (810) est agencée pour recevoir les premières valeurs d'entrée (X₍ᵢ₎₍t1)) et pour déterminer les premières valeurs de sortie ; dans lequel la seconde unité de travail à apprentissage artificiel (820) est agencée pour recevoir les secondes valeurs d'entrée (X₍ᵢ₎₍t2)) et pour déterminer les secondes valeurs de sortie ;
dans lequel, dans le plan de travail, une ou plusieurs premières fonctions de modulation (f_{mod1_f}, f_{(mod)(1)(_w)}) sont formées sur la base des premières valeurs de sortie et/ou des valeurs qui en sont dérivées, les une ou plusieurs premières fonctions de modulation formées étant appliquées à un ou plusieurs paramètres (f_{outA2}, f_{aktA2}, f_{transA2}, w_{iA2}) de la deuxième unité de travail d'apprentissage artificiel (820), lesdits un ou plusieurs paramètres influençant le traitement des valeurs d'entrée et l'obtention des valeurs de sortie dans la deuxième unité de travail d'apprentissage artificiel ; et
dans lequel, de préférence, une ou plusieurs secondes fonctions de modulation (f_{mod2_f}, f_{mod2_w}) sont formées sur la base des premières évaluations et/ou de valeurs dérivées de celles-ci, dans lequel les une ou plusieurs secondes fonctions de modulation formées sont appliquées à un ou plusieurs paramètres (f_{outA1}, f_{aktA1}, f_{transA1}, W_{iA1}) de la première unité de travail d'apprentissage artificiel (810), dans lequel les un ou plusieurs paramètres influencent le traitement de valeurs d'entrée et l'obtention de valeurs de sortie dans la première unité de travail d'apprentissage artificiel.

10. Procédé selon la revendication 9,
dans lequel les premières évaluations et/ou les valeurs dérivées de celles-ci sont utilisées comme valeurs d'entrée d'évaluation de la première unité de travail à apprentissage artificiel (810) ;
et/ou dans lequel les secondes évaluations et/ou les valeurs qui en sont dérivées sont utilisées comme valeurs d'entrée d'évaluation de la seconde unité de travail à apprentissage artificiel (820).

11. Procédé selon l'une quelconque des revendications précédentes, dans lequel le niveau d'évaluation comprend des première et seconde unités d'évaluation à apprentissage artificiel (830, 840) ; la première unité d'évaluation à apprentissage artificiel (830) étant adaptée pour recevoir les premières données de situation (Y(t3)) et déterminer les premières évaluations ; la seconde unité d'évaluation à apprentissage artificiel (840) étant adaptée pour recevoir les secondes données de situation (Y(t4)) et déterminer les secondes évaluations ; et
une ou plusieurs troisièmes fonctions de modulation (f_{mod3_f}, f_{mod3_w}) étant formées au niveau d'évaluation sur la base des premières évaluations et/ou des valeurs qui en sont dérivées, les une ou plusieurs deuxièmes fonctions de modulation formées étant appliquées à un ou plusieurs paramètres (f_{outB2}, f_{aktB2}, f_{transB2}, w_{iB2}) de la deuxième unité d'évaluation à apprentissage artificiel (840), le ou les paramètres influençant le traitement des valeurs d'entrée et l'obtention des valeurs de sortie dans la deuxième unité d'évaluation à apprentissage artificiel.

12. Procédé selon la revendication 11, comprenant en outre
mémoriser, dans une première mémoire de séquence, une première séquence d'évaluation de premiers ensembles d'évaluation qui comprennent des valeurs d'entrée de la première unité d'évaluation et des premières évaluations associées, les premiers ensembles d'évaluation étant notamment pourvus d'informations temporelles respectives et/ou d'une numérotation ; et/ou
mémorisation, dans une seconde mémoire de séquence (832), d'une seconde séquence d'évaluation de seconds ensembles d'évaluation comprenant des valeurs d'entrée de la seconde unité d'évaluation et des secondes évaluations associées, les seconds ensembles d'évaluation étant notamment pourvus d'informations temporelles respectives et/ou d'une numérotation ;
la détermination des premières et/ou des deuxièmes évaluations s'effectuant de préférence en tenant compte des premières ou deuxièmes séquences d'évaluation mémorisées.

13. Procédé selon l'une quelconque des revendications précédentes, comprenant
Recevoir les valeurs de sortie d'un autre système ;
former des premières et/ou deuxièmes données de situation à partir des valeurs de sortie reçues ; déterminer des première et/ou seconde évaluations par le niveau d'évaluation sur la base des première et seconde données de situation formées à partir des valeurs de sortie reçues ;
déterminer que l'autre système est compatible si les premières et/ou deuxièmes évaluations déterminées indiquent que les premières ou deuxièmes conditions sont remplies.

14. Système dans une commande de machine comprenant un plan de travail (710) et un plan d'évaluation (730) et adapté pour mettre en oeuvre le procédé selon l'une quelconque des revendications précédentes ; dans lequel le plan de travail est adapté pour recevoir les valeurs d'entrée et dans lequel, de préférence, le plan d'évaluation n'est pas capable de recevoir les valeurs d'entrée.

15. Système selon la revendication 14, dans lequel le niveau de travail et le niveau d'évaluation sont chacun mis en œuvre dans au moins une unité de calcul.
